# EUROPEAN PATENT SPECIFICATION

(11) **EP 1 014 783 B1**
(45) Date of publication and mention of the grant of the patent: **03.05.2006**
(21) Application number: 97953192.8
(22) Date of filing: 12.12.1997
(51) Int. Cl.: A01K 29/00, A01K 79/02

(54) **MOBILE CONTROLLABLE STROBE LIGHT SYSTEM AND METHOD FOR DIRECTING THE MOVEMENTS OF A FISH**
MOBILE,STEUERBARE STROBOSKOPISCHE LICHTANLAGE UND VERFAHREN ZUR STEUERUNG DER BEWEGUNG EINES FISCHES
SYSTEME D'ECLAIRAGE STROBOSCOPIQUE CONTROLABLE MOBILE

(30) Priority: 12.12.1996 US 766192; 11.12.1997 US 988745
(43) Date of publication of application: 05.07.2000
(73) Proprietor: Flash Technology Corporation Of America, Brentwood, TN 37024 (US)
(72) Inventor: BAUGHER, Susan, Ann, Joelton, TN 37080 (US); BROWN, Ronald, Earl, Franklin, TN 37064 (US); JOHNSON, Dale, A., Bon Aqua, TN 37025 (US); SCHIPP, Roberto, Nashville, TN 37205 (US); NEWSOM, Mark, Stevens, Hermitage, TN 37076 (US); NGUYEN, Tien, Nashville, TN 37029 (US); SHUMATE, Christopher, Joel, Nashville, TN 37214 (US); TERRY, David, Michael, Murfreesboro, TN 37130 (US); MARK, Fred, West Chelmsford, MA 01863 (US); NORTHRUP, Richard, Nashua, NH 03063 (US); OUELLETTE, Larry, Nashua, NH 03060 (US); IHRIE, Ronald, Nashville, TN 37220 (US); BOYER, Edward, Milford, NH 03055 (US); Sommers,William, F., Nashville, TN 37205 (US)
(74) Representative: Grünecker, Kinkeldey, Stockmair & Schwanhäusser Anwaltssozietät
(86) International application number: PCT/US1997/022886
(87) International publication number: WO 1998/025450

(56) References cited:
- US-A- 3 964 012
- US-A- 4 227 331
- US-A- 4 876 565

## Description

### TECHNICAL FIELD

The present invention relates generally to barriers and other devices used to repel or direct the movement of migrating fish away from turbine intakes and other danger points at dams, hydroelectric facilities, and water intakes in lakes and rivers. More particularly, the present invention describes a system for directing the movement of fish in which the system uses multiple underwater strobe lights strategically positioned and controlled to direct fish away from and towards desired locations.

### BACKGROUND ART

Hydroelectric power plants and dams have been used throughout the United States and the world with great effectiveness in electric power generation, irrigation, and flood control schemes. However, the increasing use of obstructions across rivers and other navigable waterways has created problems of its own, including deleterious effects on fish populations. For example, hydroelectric dam turbine intakes are a natural attraction point for schooling and migrating fish. If fish are allowed to enter those intakes, large numbers of fish are killed in relative short periods of time. Such fish kills, in turn, can cause damage to the facilities themselves. Also, dams and other structures placed across rivers can interfere with the natural migratory patterns of fish that have been established over the years. If these fish are not allowed to pass the dam and are obstructed from following their natural migratory waterways, fish populations can be greatly impaired. Similar problems can occur at municipal and industrial water intake sites, where large numbers of fish can be drawn into the intake. Therefore, it is important that some means be provided to direct migrating fish around or through a dam, obstruction, or intake so that they can reach their natural spawning grounds.

In response to these issues, federal and state agencies have become increasingly active in establishing a regulatory scheme for the protection of fish in these environments. Accordingly, a variety of physical barrier technologies have been developed in the prior art. These prior art technologies include the use of barrier nets, fish lifts, racks, mesh screens, and louvered bypasses. Unfortunately, such physical barriers have not been optimally efficient in protecting or diverting fish. Moreover, the installation of physical barriers can be extremely expensive, in that custom barrier designs must be developed for each location. Ongoing maintenance costs are also a significant negative factor in the use of physical barriers to control fish.

As an alternative to the use of physical fish barriers, experiments have been conducted in the prior art in the use of strobe lighting as a means to repel fish or otherwise control or direct their movement as they confront or approach a dam or other water intake. These experimental studies have demonstrated that strobe lights produce strong avoidance behavior in a variety of fish species on a consistent basis. In addition, the fish who show this avoidance behavior do not show a tendency to become acclimated to strobe light stimuli, even after prolonged exposure.

The strobe light systems used in the prior art experiments for the control of fish behavior have been deficient in a number of respects, particularly in regards to the development of a commercially useful system which can be easily adapted, installed, and used in a wide variety of physical and aquatic environments and that can be used, without significant modification, to control the behavior of one or more of multiple fish varieties. Thus, for example, variations in ambient water turbidity, water flow rate, flow direction, and water temperature, can directly impact the efficiency of fish control using strobe light systems. In addition, experimentation relating to the development of the present invention has shown that adjustment of flash intensity, flash frequency, and flash sequence is necessary in order to optimally adapt a strobe light fish control system to a particular environment and to a particular species of fish. Prior art systems have not allowed this degree of flexibility and control leading, to the conclusion that such systems can only be considered to be experimental rather than commercially useful.

For behavioral control of fish during a short migration season, there is only a very narrow window of opportunity to adapt a strobe light control system to that species of fish and to the particular environmental conditions encountered. Therefore, real time reaction and control of the system to varying ambient conditions and fish behavior is an important factor. Such control is not found in any of the prior art experimental systems.

Furthermore, a short migration season also requires that a system be mobile to be positioned quickly and efficiently by a dam or other structure so as to provide a deterrence or guidance for the fish and then be able to move on to another site.

Another problem found with prior art strobe light fish control systems relate to the longevity of the crucial underwater portion of the system, that being the multiple strobe light flash heads. Much of the prior experimentation with such systems has been used in conjunction with flash heads mounted at or near the water surface, attached to floating structures. However, a universally adaptable, commercially useable fish control system using multiple strobe flash heads must be capable of installation at significant depths below the water line, up to perhaps one hundred-fifty feet. This produces a set of problems of its own, particularly in heat management. The preferred means of generating illumination from a strobe flash head is the xenon tube which is both durable and highly efficient. However, the heat generated by the xenon tube and related components must be carefully controlled, particularly in an underwater location, so that the flash head will not fail prematurely because of excessive heat buildup. Experimental prior art strobe light fish control systems have relied on relatively crude adaptations of strobe light devices which have not fully met the needs for deep water submersion, durability, and high flash intensity.

What is needed, then, is a system for the control of fish movement using strobe lights which can be easily installed and adapted to a wide variety of physical environments, can be controlled and adjusted to influence the behavior of a wide variety of fish species, and which carefully deals with flash head heat management in order to prolong the durability of the system.

### DISCLOSURE OF THE INVENTION

One object of the present invention is to provide a system to direct the movement of fish near man-made structures that is reliable, efficient, flexible, easy to install, mobile, and easy to maintain.

Another object of the present invention is to provide a strobe light fish movement control system in which operational control and functioning of the system can be adjusted easily and in real time to adapt the system to changing water and other conditions near the structure.

Yet another object of the system of the present invention is to provide flash heads in a multiple flash head strobe light fish movement control system which can operate efficiently and continuously while submerged.

A further object of the present invention, shown in a second embodiment, is to provide a controllable strobe light system that is easily transportable to locations where control of fish movements may be needed.

These and other objects of the invention which will be apparent to those skilled in the art are met by two embodiments of a strobe light fish movement control system in which multiple flash heads are linked through one or more flash head control units to a personal computer based system control unit. The system control unit and flash head control units include data communication services, status monitoring devices, and control links which allow an operator of the system to change and monitor the flash sequence, flash rate, and flash intensity. In addition, an air bubble curtain and water jets installed at or near the flash heads allow the system to adapt to changing water conditions and fish varieties so that the system can be easily optimized for a particular environment.

The flash heads used in the system are configured for long life while submerged through the use of novel heat management features. An internal cooling fan and temperature sensor send signals to the system so that appropriate heat control measures can be undertaken. An air plenum is formed around the flash tube inside the waterproof flash head housing so that air can be easily circulated, with an air passage way formed between the outside of the air plenum and the inner wall of the housing. A parabolic reflector enhances radiated light from the flash head and forms a top surface of the air plenum. Forced air is brought to the flash tube through an opening in the central portion of the parabolic reflector, thereby minimizing light loss. Furthermore, the air present in the flash head housing is replaced by nitrogen gas to reduce the corrosive effect of ozone within the flash head.

Constant monitoring of flash rate, flash intensity, and flash head temperature prevents overheating of the flash tube in each flash head.
Fig. 1 is a perspective view showing the general arrangement of the first embodiment of the system of the present invention, including the system control unit, multiple flash head control units, and multiple flash head.
Figs. 2a1-9, 2b1-9, 2c1-9, and 2d1-9 collectively are a schematic diagram of a flash head control unit as used in the first embodiment of the present invention, with each flash head control unit including four flash head interface circuits which are separately illustrated on each drawing page.
Fig. 3 is a block diagram showing the interconnection of the various functional units of the second embodiment of the present invention.
Fig. 4 is a perspective view of the general mechanical arrangement of the power and control center of the second embodiment of the present invention positioned in a mobile trailer, including the flash head termination racks, the capacitor racks, a transformer assembly rack, and the motherboard enclosures (shown in phantom with no components connected).
Fig. 5 is an enlarged perspective view of a flash head termination rack (the connections to the flash heads not shown) as used in the second embodiment of the system of Fig. 4.
Fig. 6 is an enlarged perspective view of a capacitor rack as used in the second embodiment of the system of Fig. 4 (no installed capacitors shown).
Fig. 7a1-3 is a schematic diagram of a portion the flash head interface circuit used in the second embodiment of the system showing the power and flash tube trigger connections to the tri-packs of flash heads as well as to the capacitor and transformer banks.
Fig. 7b is a schematic diagram of a portion of the flash head interface circuit used in the second embodiment of the system showing the connections to two of the system temperature sensors.
Fig. 7c is a schematic diagram a portion of the flash head interface circuit used in the second embodiment of the system showing the low and high voltage power connections and the trigger power connections.
Fig. 7d is a schematic diagram of a portion of the flash head interface circuit used in the second embodiment of the system to provide power to the flash head cooling fan motor.
Fig. 8 is a drawing of a typical video display of a screen generated by the software used in the system control unit of the first embodiment of the system, allowing the user to configure operation of a flash head control unit.
Fig. 9 is a typical video display screen generated by the software of the system control unit of a first embodiment of the system, illustrating a configuration of the system for all flash heads.
Fig. 10 is an illustration of a typical video display screen of generated by the software of the system control unit of a first embodiment of the system when monitoring the operational status of a specific flash head.
Fig. 11 is an illustration of a typical video display screen presented to an operator of a first embodiment of the system at the system control unit when configuring an individual flash head.
Fig. 12 is an illustration of a typical video display screen of the second embodiment of the system presented to a system operator at the system control unit to display the status of a flash head.
Fig. 13 is an illustration of a typical video display screen of the second embodiment of the system presented to a system operator at the system control unit for monitoring real time data of a tri-pack of three flash heads.
Fig. 14 is an illustration of a typical video display screen of the second embodiment of the system presented to a system operator at the system control unit for monitoring real time data for a single transformer bank.
Fig. 15 is an illustration of a typical video display screen of the second embodiment of the system presented to a system operator at the system control unit when the system is displaying an alarm condition.
Fig. 16 is an exploded perspective view of a single flash head, showing the lens, parabolic reflector, helical flash tube, squirrel cage fan and lens clamping ring.
Fig. 17a is a top view of a flash head housing.
Fig. 17b is a side view of a flash head housing.
Fig. 17c is a plan view of a flash head housing.
Fig. 18a is a plan view of the flash head showing the plenum shroud and components internal thereto.
Fig. 18b is a cut-away side view of a single flash head.
Fig. 19 is a plan view of the flash head interior to the plenum shroud, with the parabolic reflector removed, showing the location of electrical components and connection terminals.
Fig. 20 is a view taken along lines 20-20 of Fig. 19. showing the fan portion of the flash head.
Fig. 21 is a schematic diagram of the flash head electrical system.
Fig. 22a is a front view of the parabolic reflector.
Fig. 22b is a side view of the parabolic reflector.
Fig. 23 is a side view of the lens and parabolic reflector.
Fig. 24 is a plan view of the lens.
Fig. 25a is a top view of the helical flash tube.
Fig. 25b is a side view of the helical flash tube.
Fig. 25c is a side view of the helical flash tube of Fig. 25b, with the flash tube leads enclosed in a heat resistant glass cylinder.
Fig. 25d is a bottom view of the helical flash tube.
Fig. 26 is a cutaway side view of the flash head housing also showing the interior mounting posts.
Fig. 27 is a perspective view of a single flash head as installed in the system underwater, showing a preferred arrangement of the air bubble curtain and a corresponding water jet.
Fig. 28 is a perspective view of three flash heads mounted in a tri-pack configuration on a flash head mounting plate.
Fig. 29 is a plan view showing the flash heads of the system installed proximate a structure.
Fig. 30 is a front view of the system installation of Fig. 29. showing placement of the flash heads below the water line.
Fig. 31 is an end view of the installed system of Figs. 29 and 30.
Fig. 32 is a block diagram of the electrical subsystems associated with the flash head control unit of the first embodiment of the present invention and the flash head control unit of the second embodiment of the present invention, including the timing and trigger board.

### BEST MODE FOR CARRYING OUT THE INVENTION SYSTEM OVERVIEW

The fish movement control system 10 is designed to provide an improved solution to the problem of entrainment of aquatic life in structures such as hydroelectric power plant intakes, pumpback station intakes, spillway intakes, and the like. In order to effectively provide deterrence of fish from the varied structures, two embodiments are described: a first embodiment intended for permanent or semi-permanent installation and a second embodiment adapted for mobile transport and operation.

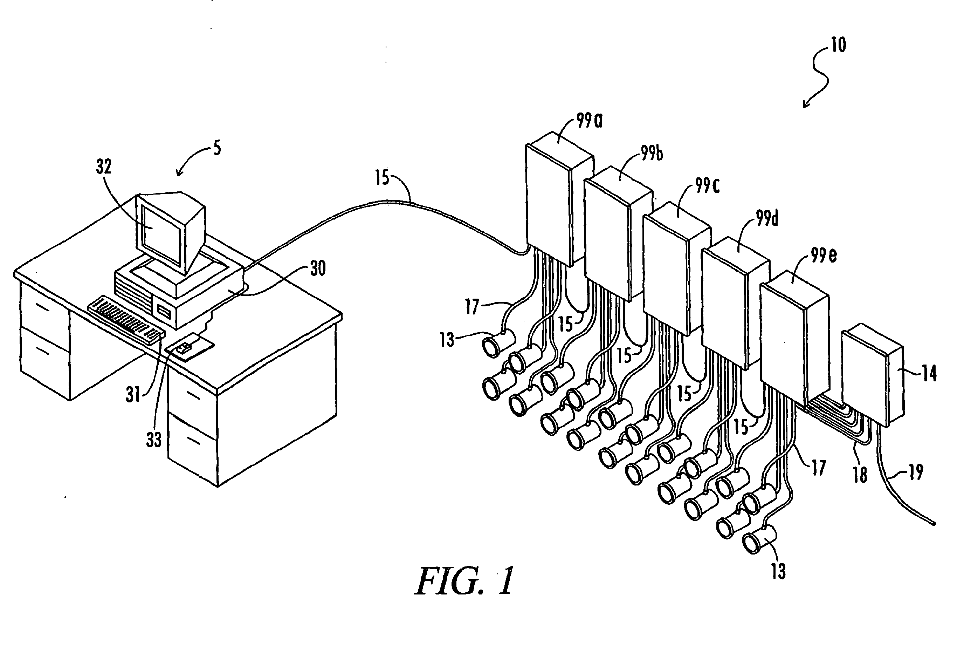

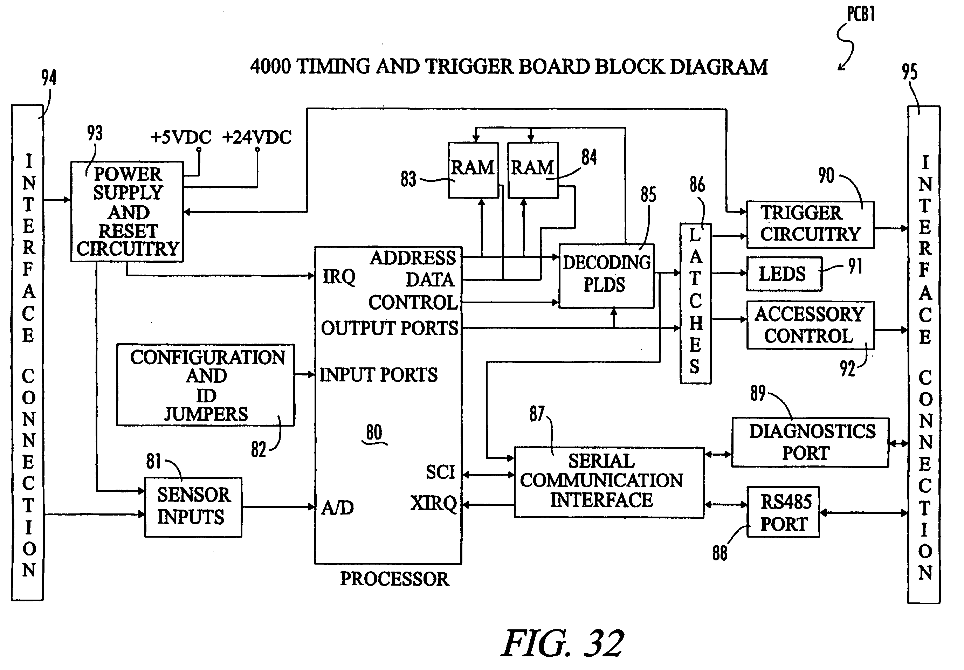

Fig. 1 shows a general arrangement of the first embodiment of the system 10 prior to installation near the structure where fish control is desired. A set of multiple flash heads **13** operated in a pre-determined sequence provide the strobed illumination used to direct movements of fish when the flash heads **13** are installed underwater near a structure. Each flash head **13** is connected by a power and control cable **17** to a flash head control unit **99.** Preferably, to minimize component redundancy and increase the efficiency of installation, multiple flash heads **13** are controlled by a single flash head control unit **99.** Thus, in Fig. 1, a total of twenty flash heads **13** are controlled by five flash head control units **99a, 99b. 99c, 99d,** and **99e.** Accordingly, each flash head control unit 99 will have multiple flash head interface circuits **96.** Signal processing, timing, and trigger control functions are provided by a timing and trigger board **PCB1** associated with each flash head control unit **99,** as shown on Fig. 32.

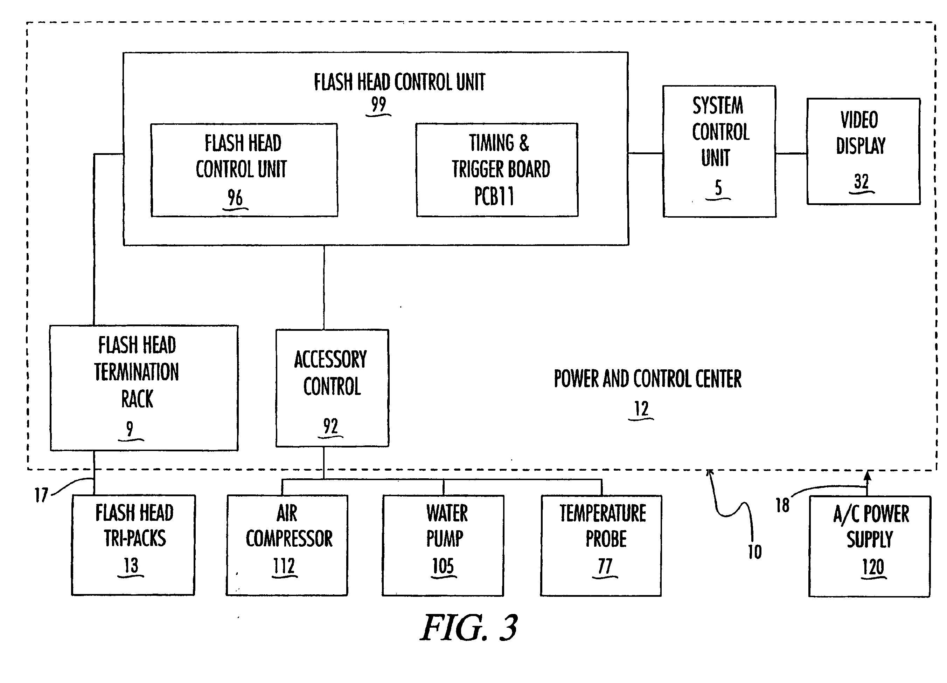

Fig. 3 is a block diagram of the system of the second embodiment of the system **10.** The system **10** of the second embodiment includes a series of sets of multiple flash heads **13** configured in groups of three (called tri-packs) connected to a power and control center **12,** with each tri-pack being connected by a single power and control cable **17** to a flash head termination rack **9.** The control center **12** includes a system control unit **5** that determines the rate and intensity that the flash heads **13** are illuminated.

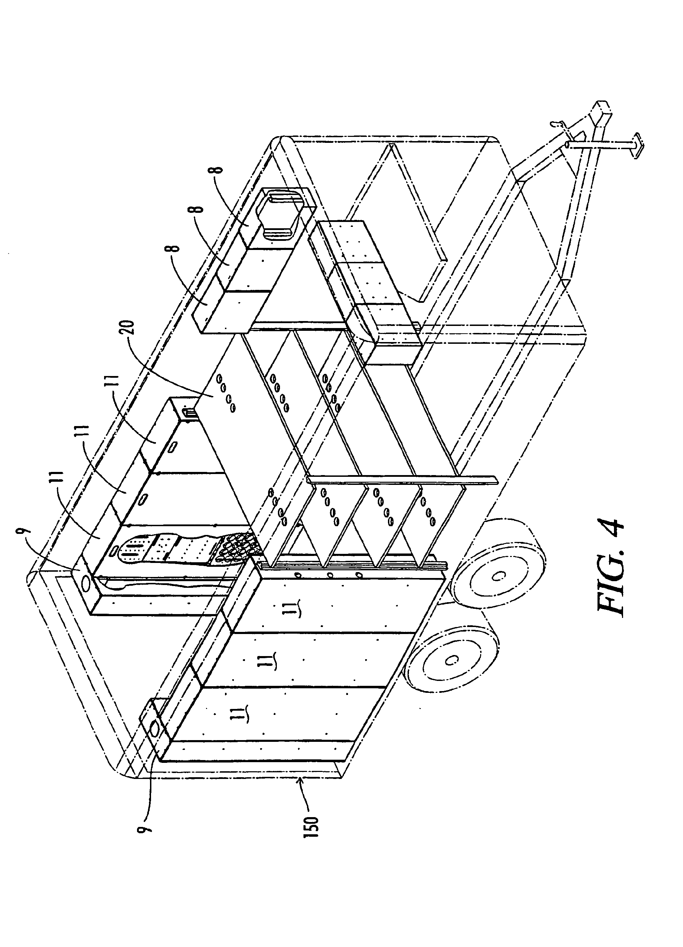

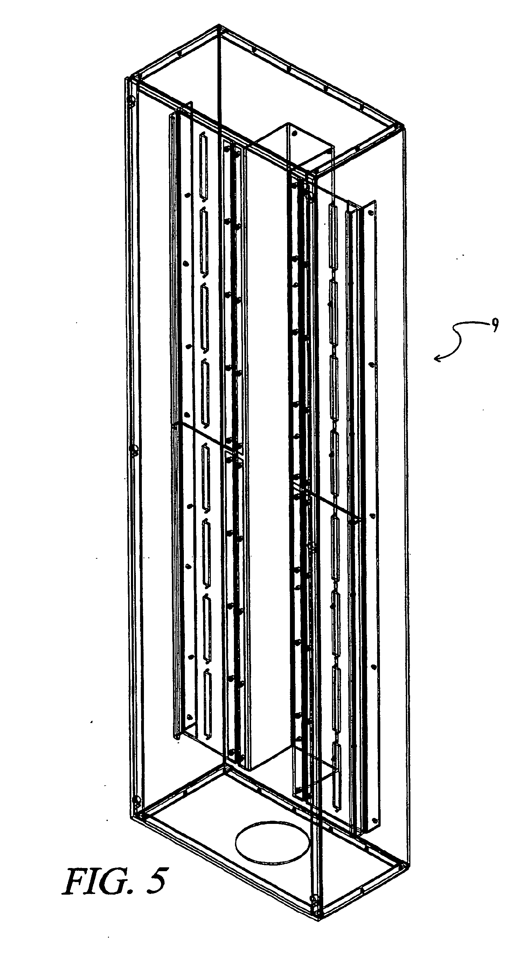

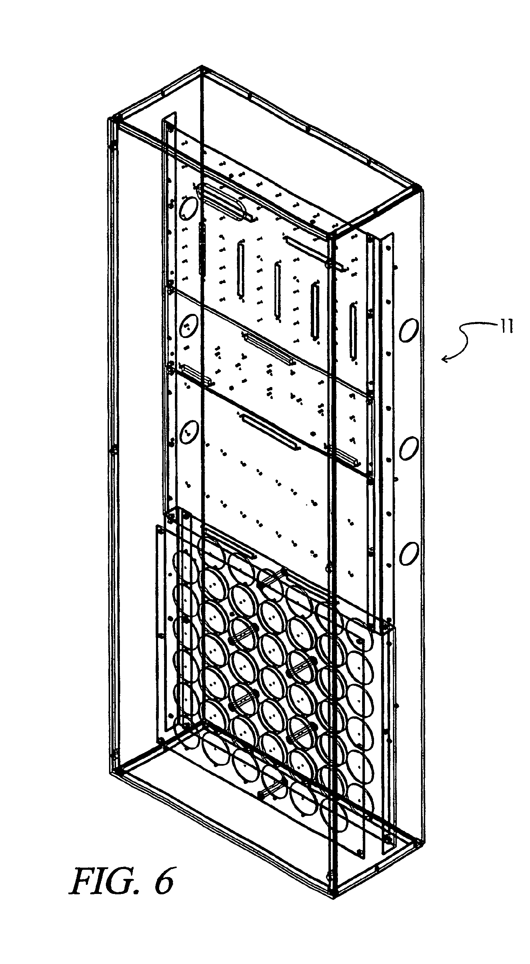

In a second embodiment of the system **10,** the control center **12** is housed in a trailer **150** (see Fig. 4), which allows for ease of transportation and mobile installation of the system **10** near the structure where fish control is desired. Inside the trailer **150,** the control center **12** is physically divided into different areas: an area housing the system control unit **5,** a series of motherboard racks **8** which accommodate the flash head control units **99,** and an area for mounting the transformer racks **20,** capacitor racks **11** (see Fig. 6), and flash head termination racks **9** (see Fig. 5).

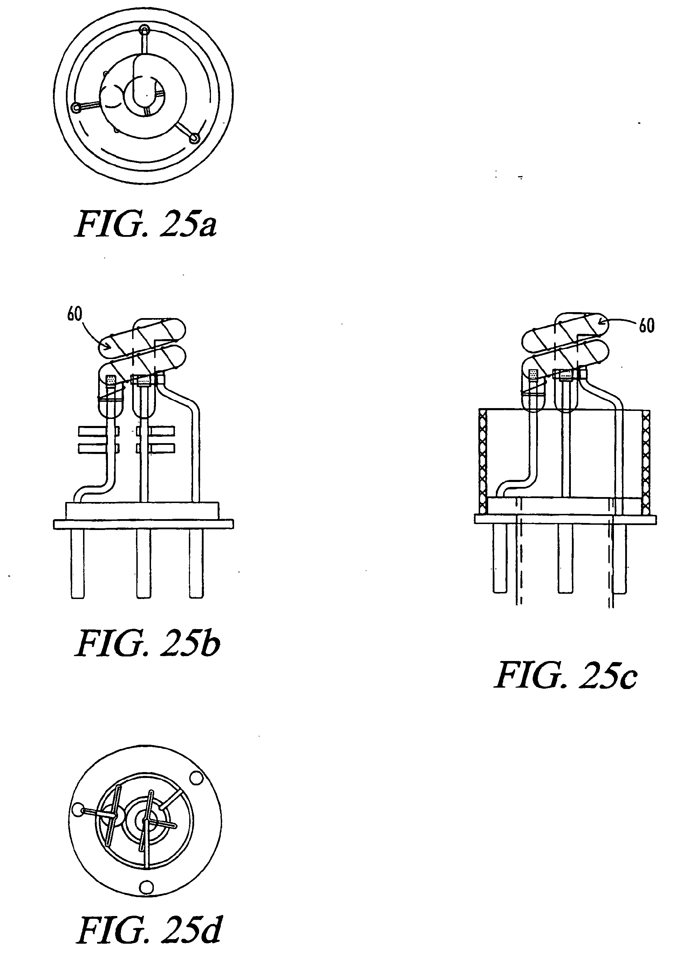

For both embodiments, it may be desired in some aquatic environments to provide illumination wavelengths at each flash head **13** which are selectable by the system operator, after the flash heads **13** are installed. In those situations, a flash head **13** may have two or more illumination devices and associated trigger circuits, with the flash head control unit **99** allowing the system operator to switch between illumination devices and circuits to vary the flash wavelength. The respective illumination devices (xenon tubes **60** on Figs. 25a-25d) will have different color filters associated with them so that flash wavelength is selectable.

Overall control functions for both embodiments of the system **10** are performed by system control unit **5.** which preferably includes a personal computer **30** operatively combined with a keyboard **31** and a mouse **33** (as shown in Fig. 1 of the first embodiment) to allow the operator of system **10** to enter system commands. The operator can monitor the operation of system **10** by viewing at video display **32** information that is displayed by the software being executed by personal computer **30.** Data communications to and from system control unit **5** and each flash head control unit **99** are implemented by a serial data communications interface, including communications I/O cable **15.**

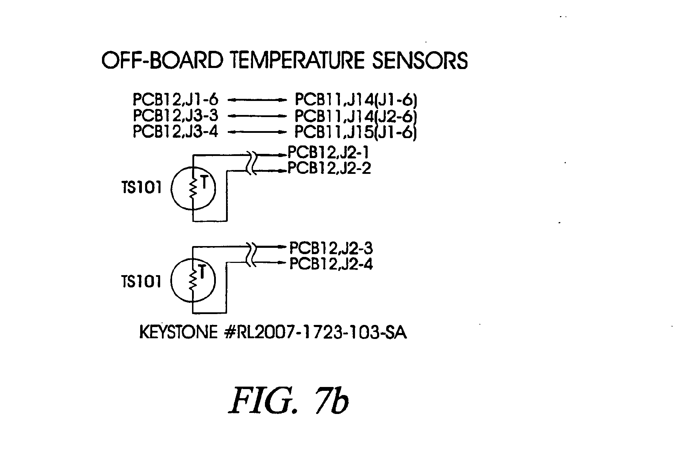

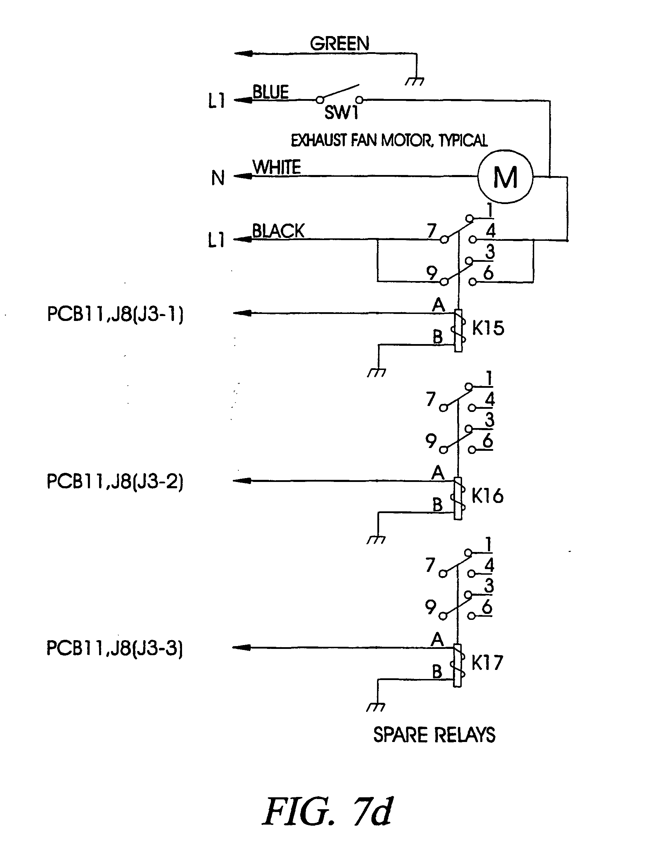

The system control unit **5** of the second embodiment is housed in a trailer **150** and is cooled by a roof mounted cooling fan **104** (shown on Fig. 7d). The temperature inside and outside the trailer **150** is measured via temperature sensors located internal and external to the trailer **150** (two of which are shown schematically as **TS101** on Fig. 7b).

In the first embodiment, electrical power is provided to each flash head control unit **99a, 99b, 99c, 99d,** and **99e** from a power interface panel **14** having a power input cable **19** connected to a conventional A/C power supply at the location of the structure, with operational power then being delivered to each flash head control unit **99** by power output cables **18.**

Electrical power is provided in the second embodiment of the system **10** from a conventional power interface panel (not shown) having a power input cable **18** connected to a conventional A/C power supply **120** (Fig. 3) that is either provided at the location of the structure or is a conventional A/C power supply generator that travels with the system **10,** with operational power then being delivered to the control center **12** by power cable **18.**

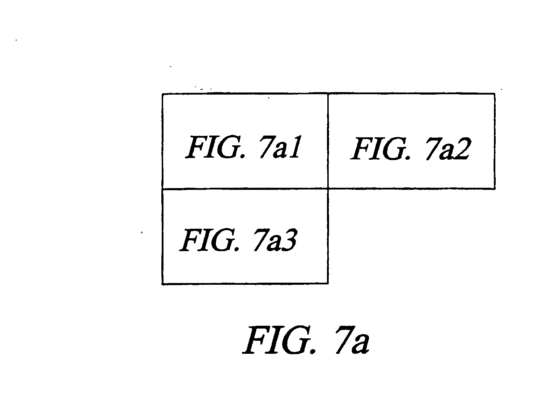

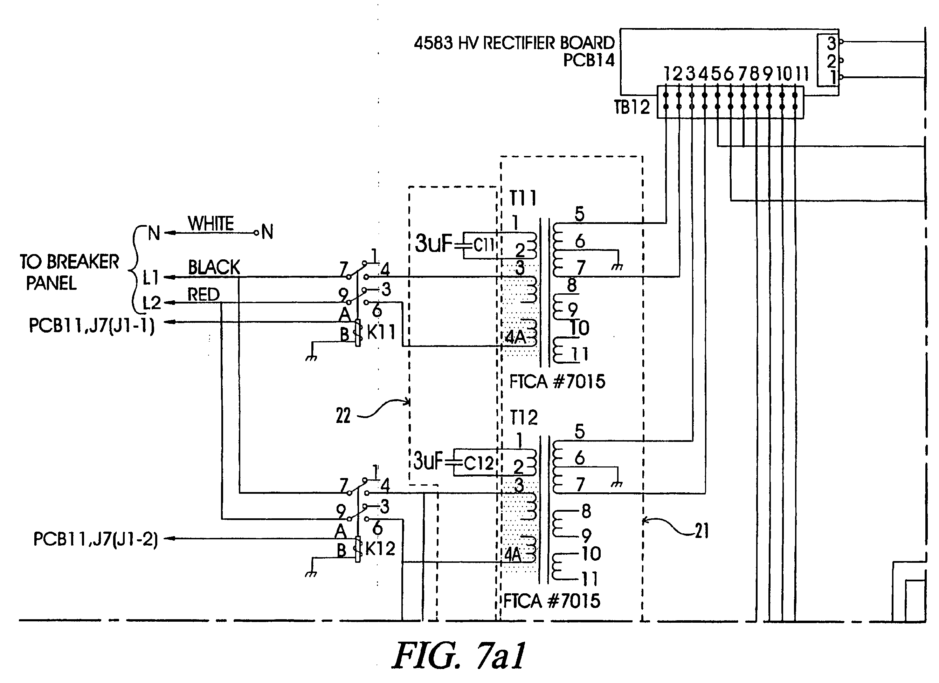

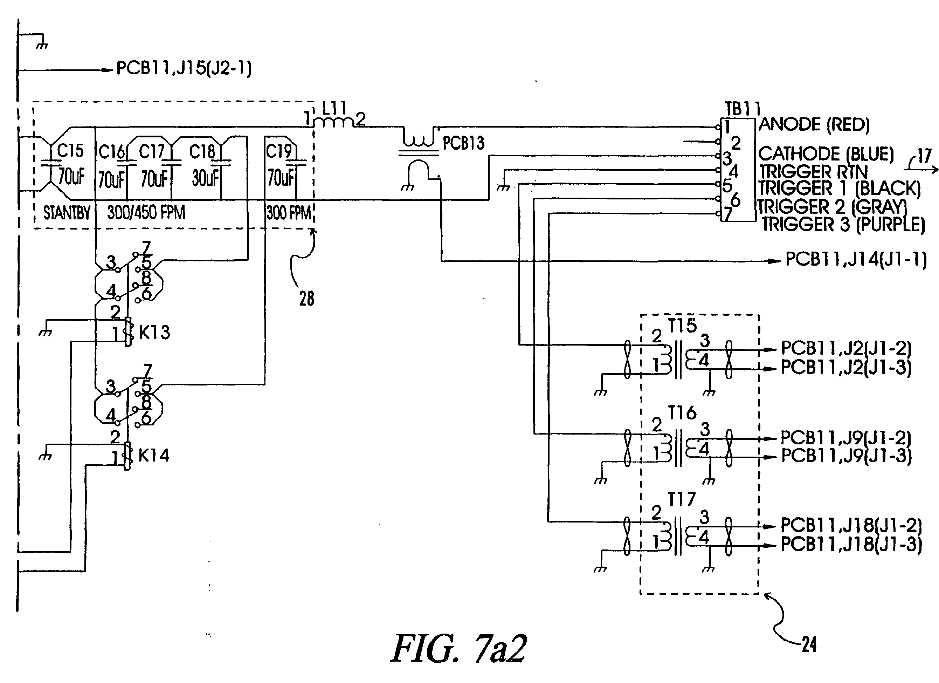

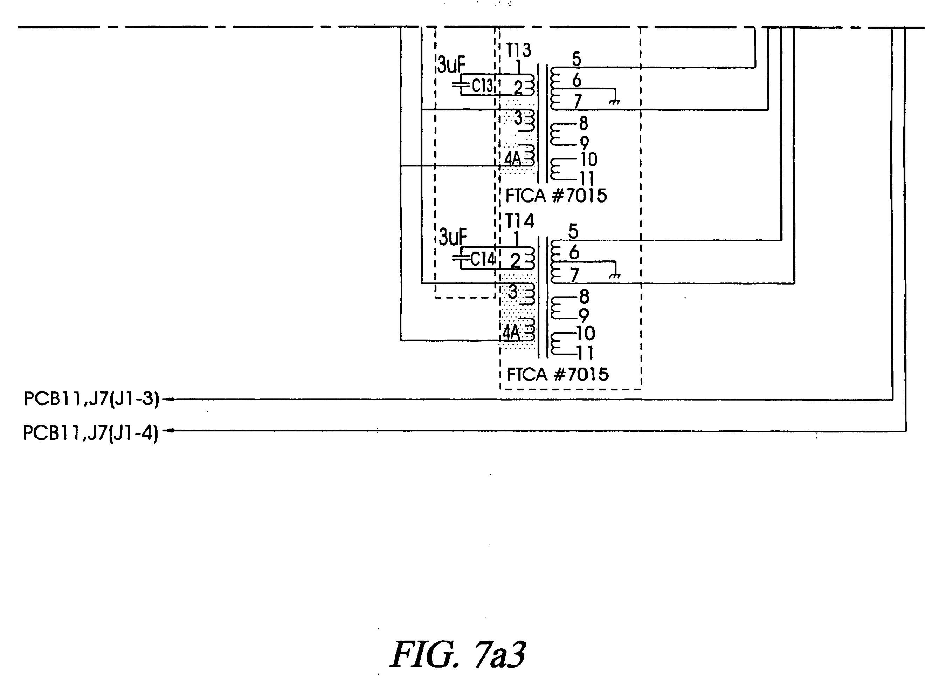

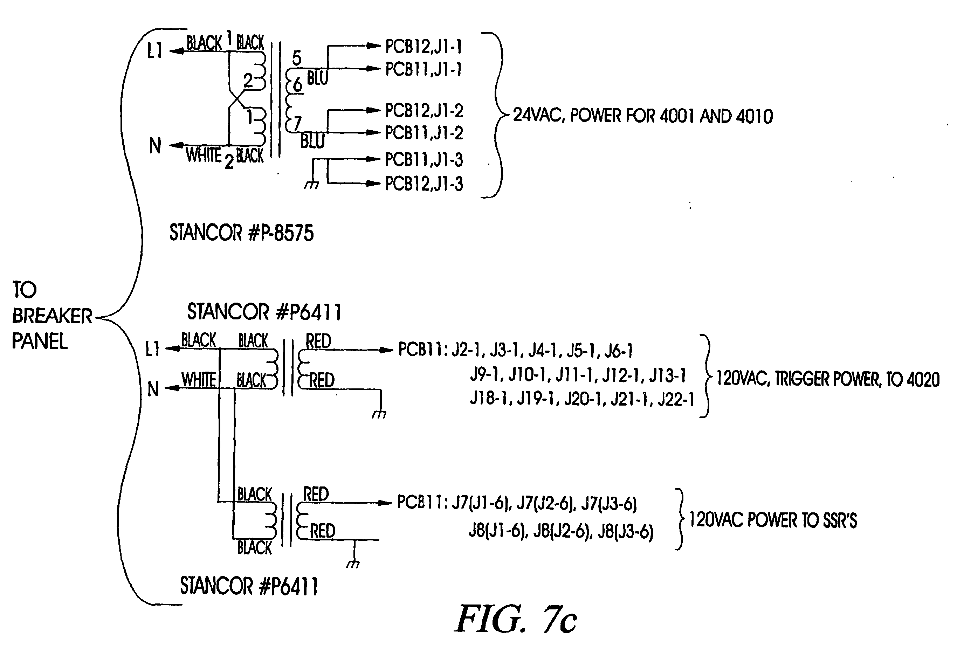

The second embodiment of the system **10** further includes a power transformer bank 21 (Fig. 7a) that comprises three transformers **T12, T13,** and **T14** connected in parallel that serve as the primary power source for the system **10.** Power transformer bank **21** can further be comprised of a single transformer capable of providing power for the system **10** instead of a bank of three transformers. An auxiliary power transformer **T11** is also included to serve as auxiliary power source for the system **10.** The auxiliary power transformer is switched in and out of a flash head interface circuit **96** to increase or decrease the power output to the capacitor bank **23** as required by the system **10.** The connections for providing power to the motherboards and daughter cards of the system are shown in Fig. 7c.

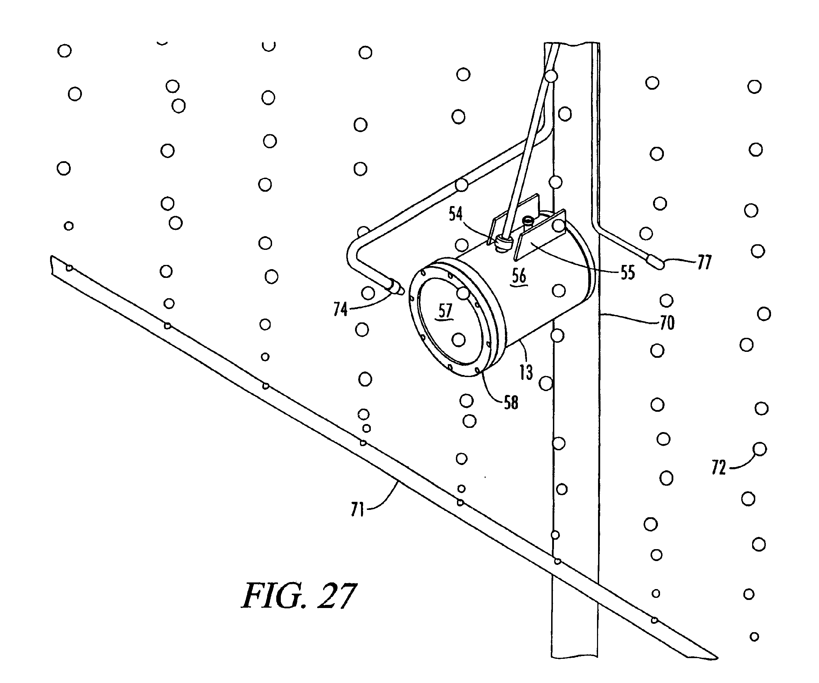

The system **10** of both embodiments also includes a conventional air compressor **112** (shown in Fig. 3 of the second embodiment) which has an "on/off" control input, connected to an output relay (not shown) in a flash head control unit **99** in the first embodiment and with the control center **12** of the second embodiment, with an air line **71** (Fig. 27) extending into the water around the system **10.** This gives system **10** the capability of generating an underwater air bubble curtain near one or more flash heads **13** as installed. The air bubbles **72** enhance light dispersion and reflection, making the strobed lights more visible to the fish.

A conventional water pump **105** (shown in Fig. 3 of the second embodiment) can also be used in conjunction with either embodiment of the system **10,** the purpose of which is to supply high pressure water to a water jet **74** (Fig. 27) directed at the lens area of each flash head **13.** The water jets can be used to remove scum that may build up on the surface of lens **57.**

Looking further at Fig. 27, a temperature probe **77** is shown positioned in the water near mounting rack **70** and a flash head **13.** Probe **77** provides ambient water temperature data to system control unit **5** for use as described below.

### SYSTEM CONTROL UNIT

An important aspect of the system **10** of both embodiments is the high level of control and monitoring provided by system control unit **5.** Coordinating and controlling communications to and from all subsystems, the system control unit **5** provides both overall control and complete monitoring of all aspects of system operation. At least one system control unit is required per system **10.** The system control unit **10** performs the following functions:
a. monitor and control serial data communication to and from each flash head control unit **99;**
b. monitor and control communications from a remote control station using the remote control and monitoring software, via a data modem and conventional phone line;
c. generate and implement a user interface via the video display 32 to enable the entry of system commands and to report system status.
d. provide on/off control signals to an air compressor for generation of a bubble curtain **72** (see Fig. 27) at each flash head **13;**
e. generate on/off control signals to a water pump **105** to provide for water jet output at each flash head **13;**
f. generate control signals for flash head cooling devices;
g. provide control signals to enable/disable flashing of each flash head **13;**
h. configure and control flash head strobe sequence, including sequential ordering, flash spacing, and flash timing;
i. provide control signals to vary the flash intensity of one or more flash heads **13;**
j. monitor and report water temperature proximate to each flash head **13;**
k. monitor and report flash intensity at each flash head **13;**

The system control unit **5** includes the following external inputs: communications with the flash heads **13;** communications with remote control/monitoring software via modem and analog phone line; input from one or more temperature probes **77** and sensors **TS101;** computer keyboard **31** and mouse **33.**

In addition, each system control unit **5** has provisions for the following external outputs: communications with the flash heads **13;** communications with remote control/monitoring software; a video display **32;** a printer (not shown); and relays (or similar device) to turn on/off the air compressor **112** and water pump **105.**

The system control unit 5 is under the control of software designed for system **10** that, subject to system commands entered by the operator, includes routines to provide the following control services: print/display status report; log system activity to a printer; and enable/disable flashing on one, multiple or all flash heads **13;** allow the configuration and initiation of flashing lights on separate flash heads **13** in a operator selected sequence; change flash intensity on one, multiple or all flash heads **13;** turn air compressor on/off for bubble curtain output at flash heads **13;** turn water pump on/off for water jet output at flash heads **13;** turn flash head cooling fan **51** on/off on one, multiple or all flash heads **13;** and generate alarms/warnings (including communications errors) for all parts of the system **10** that include the time, date, location and description of the malfunction (when the disruption has been repaired, the alarm listing is removed from the list).

The system control unit software also preferably includes monitoring routines to provide the following monitoring and reporting services: water temperature at each flash head **13;** flash intensity at each flash head **13;** and internal flash head **13** temperature.

The video display **32** of the system **10** of the second embodiment shows the configurations and status of the control center **12** and flash heads **13** in a tabular format providing for quick access and comparison of information. The screens can further be modified to accommodate several flash heads **13** to be monitored simultaneously.

### FLASH HEAD CONTROL UNITS

In the both embodiments of the system **10,** each flash head **13** contains an illumination device and related hardware used to attract and deter fish in conjunction with its corresponding flash head interface circuit **96** (shown in Fig. 3 of the second embodiment) located in a flash head control unit **99.** In most cases, a system **10** will contain multiple flash heads **13** to adequately cover the area being serviced. The exact number of flash heads **13** used is dependent on many system parameters including the width and depth of the body of water, the system orientation to the body of water, and the relative locations of the areas where fish are to be directed away from and towards.

In the first embodiment, each flash head **13** is electrically connected via power and control cable **17** to its respective flash head interface circuit **96** in a flash head control unit **99** (shown in Fig. 1), and operatively connected to system control unit **5,** to coordinate its activities with other flash heads **13** and to provide operational monitoring feedback.

Each flash head **13** of the first embodiment will preferably include the following external inputs: communications with its flash head control unit **99** (via cable **17,** and including cooling fan control signals, and flash tube A and B trigger signals); water temperature; and internal flash head temperature. Each flash head **13** has provisions for the following external outputs: communications with a flash head control unit **99** (cable **17,** including flash head temperature and water temperature).

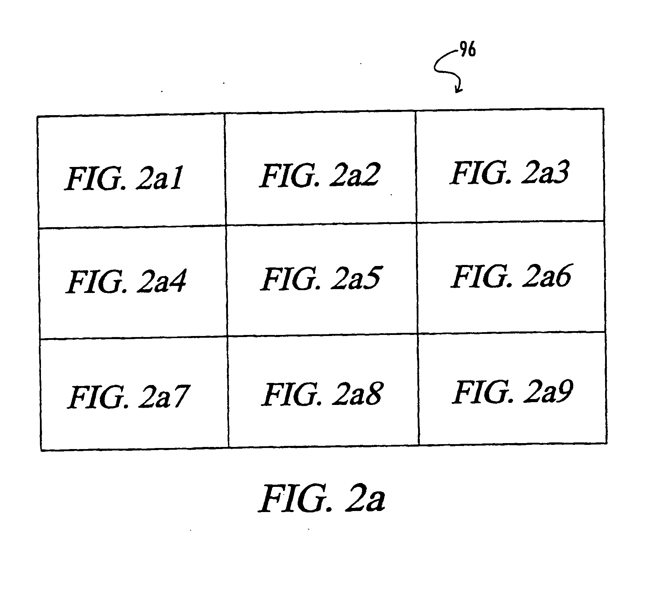

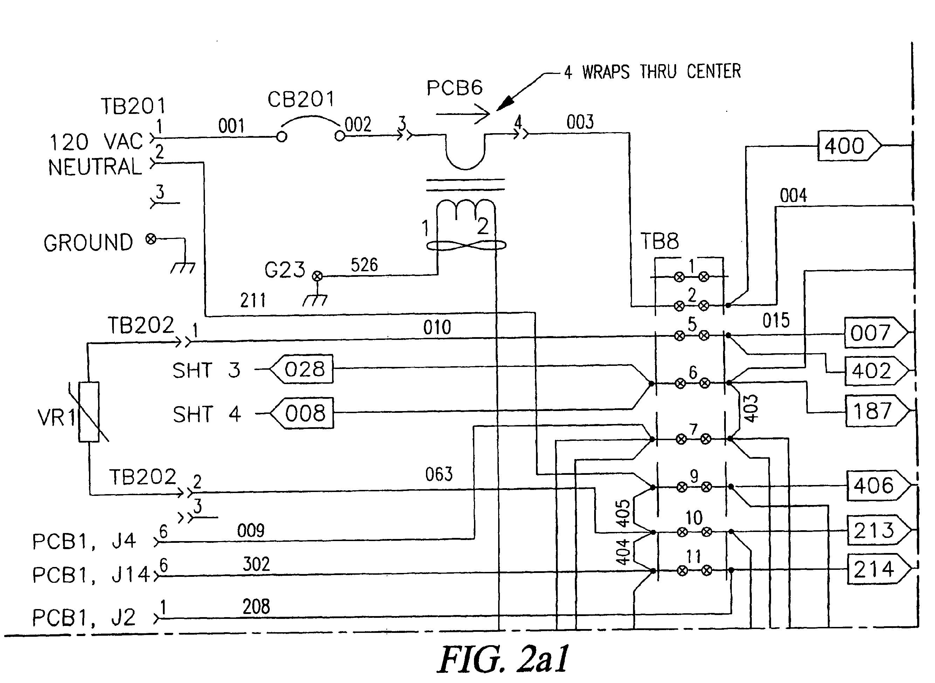

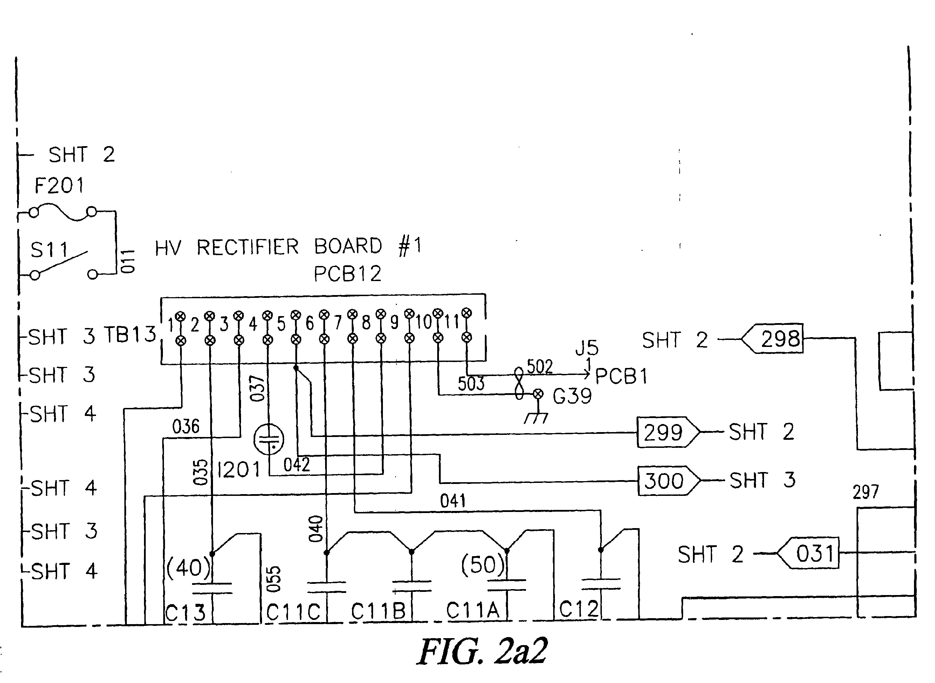

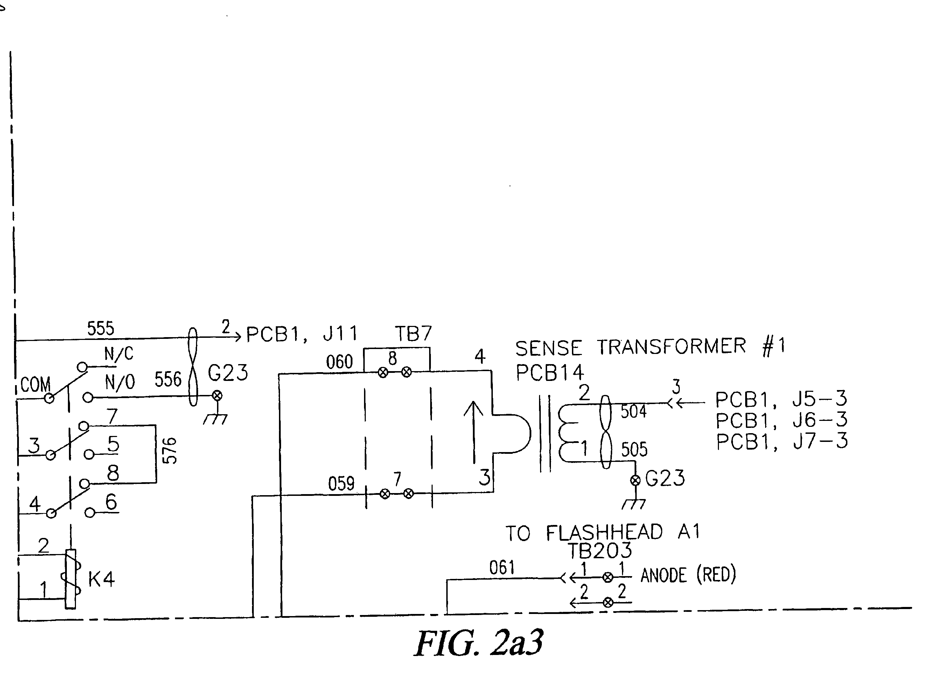

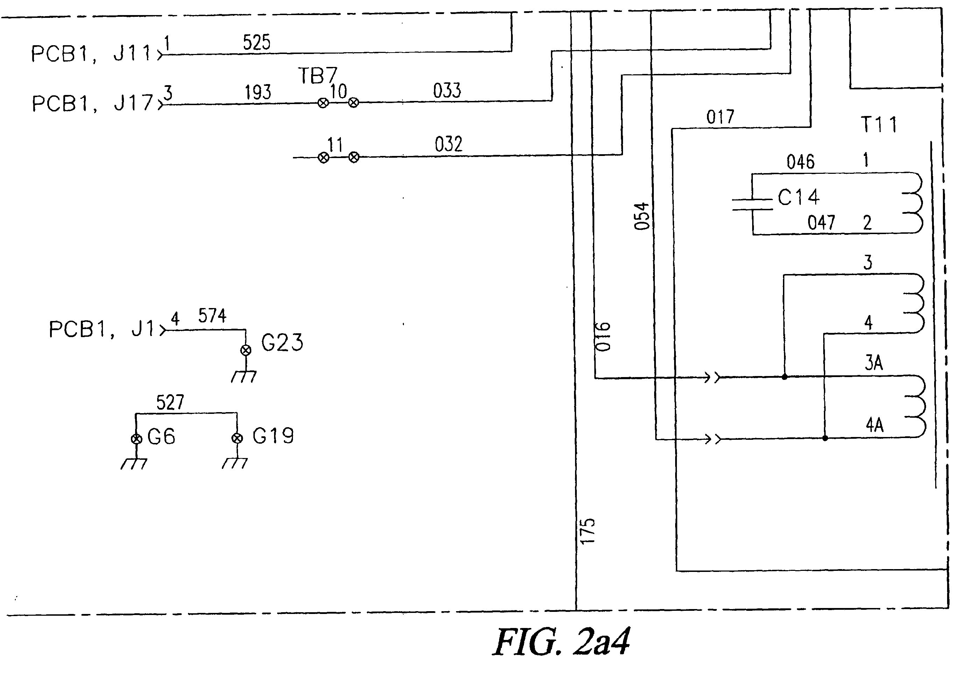

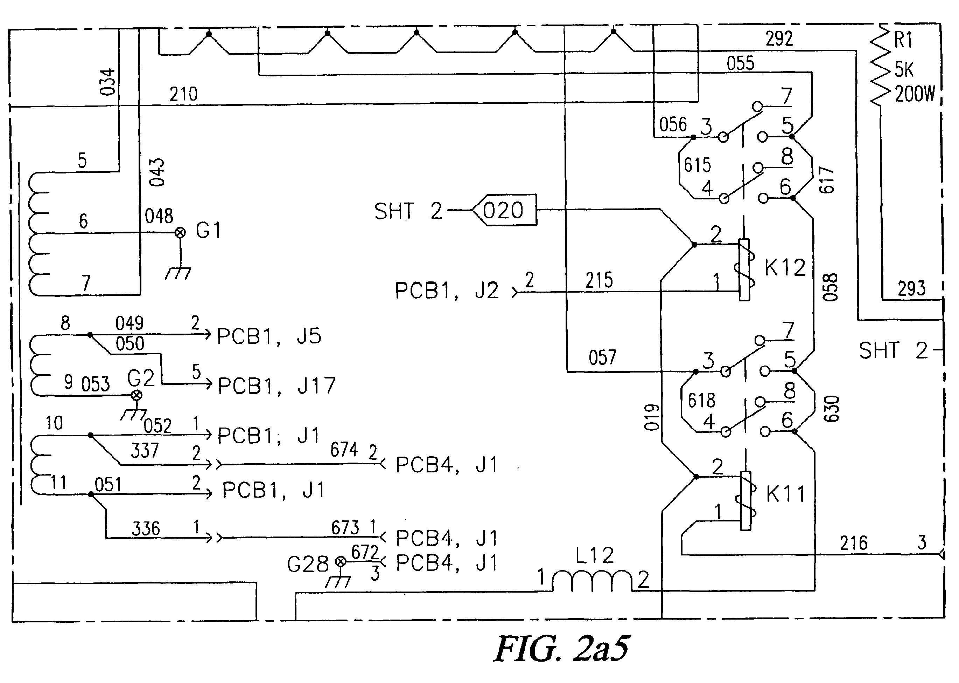

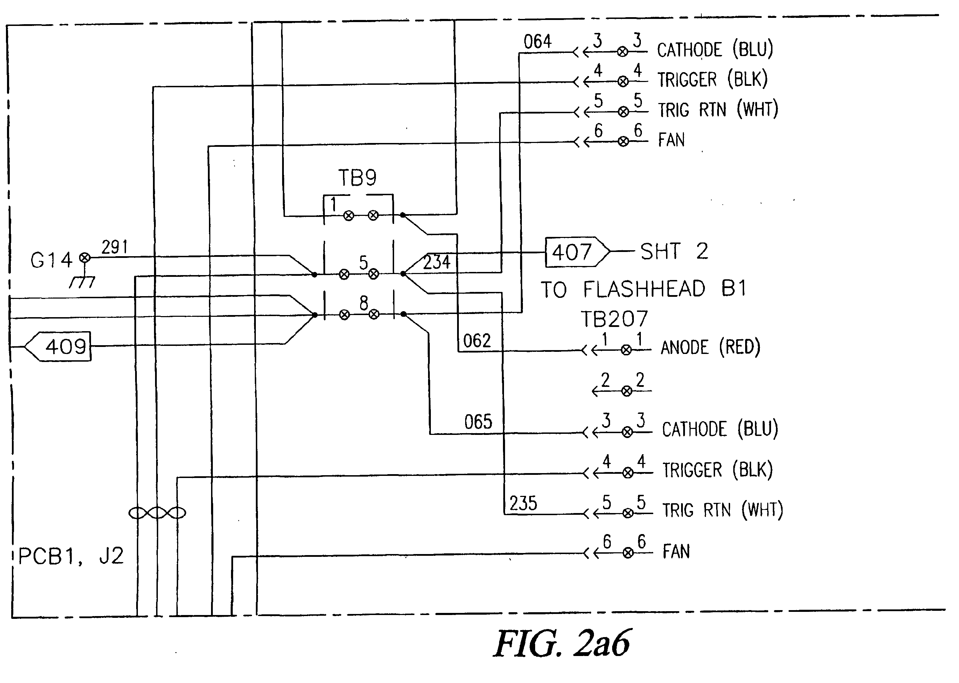

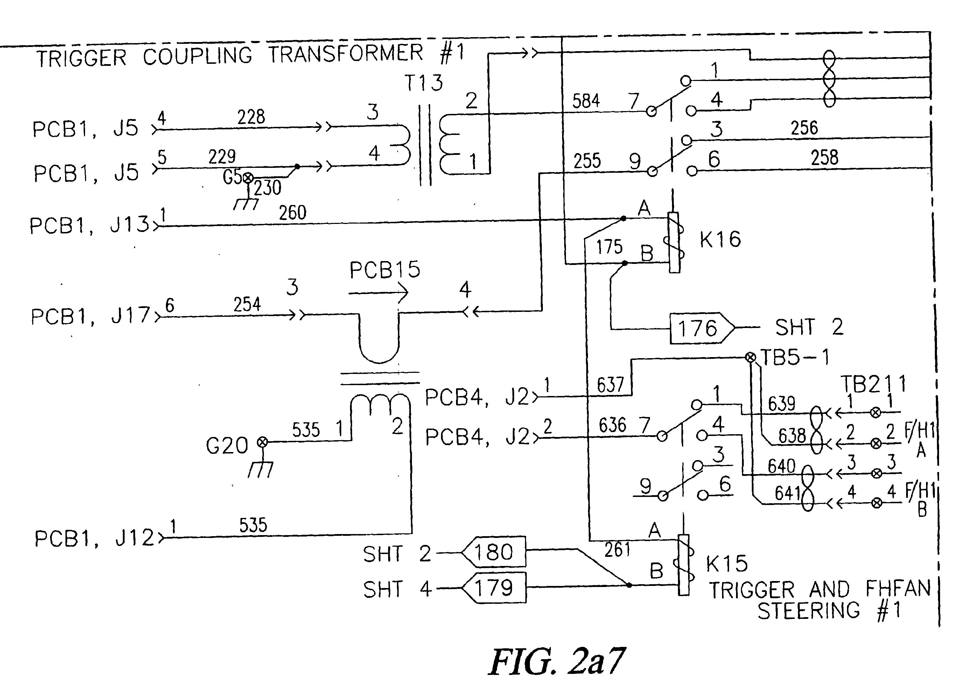

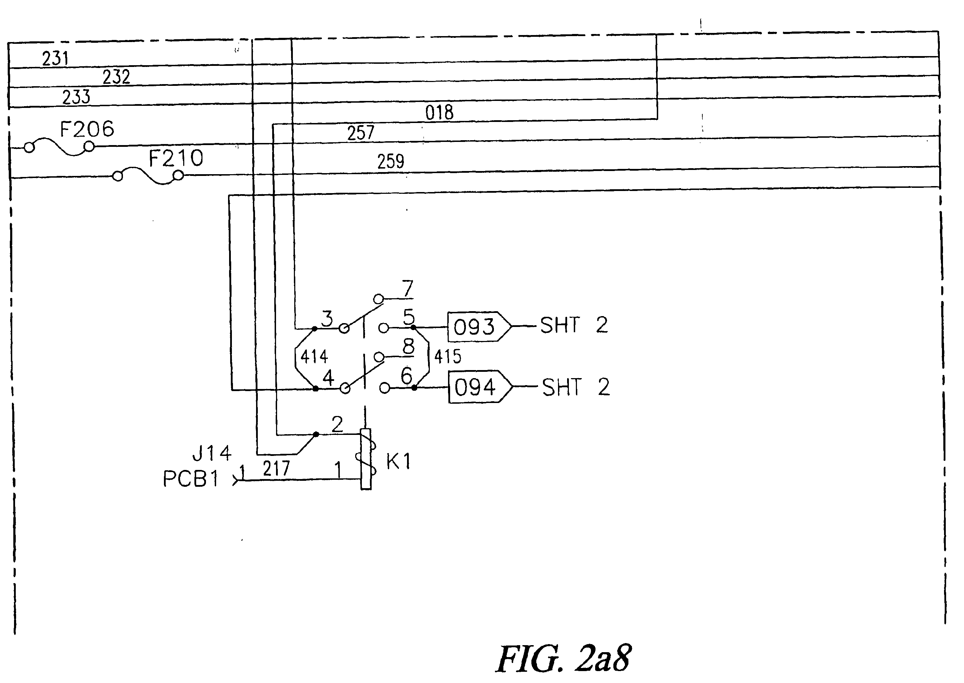

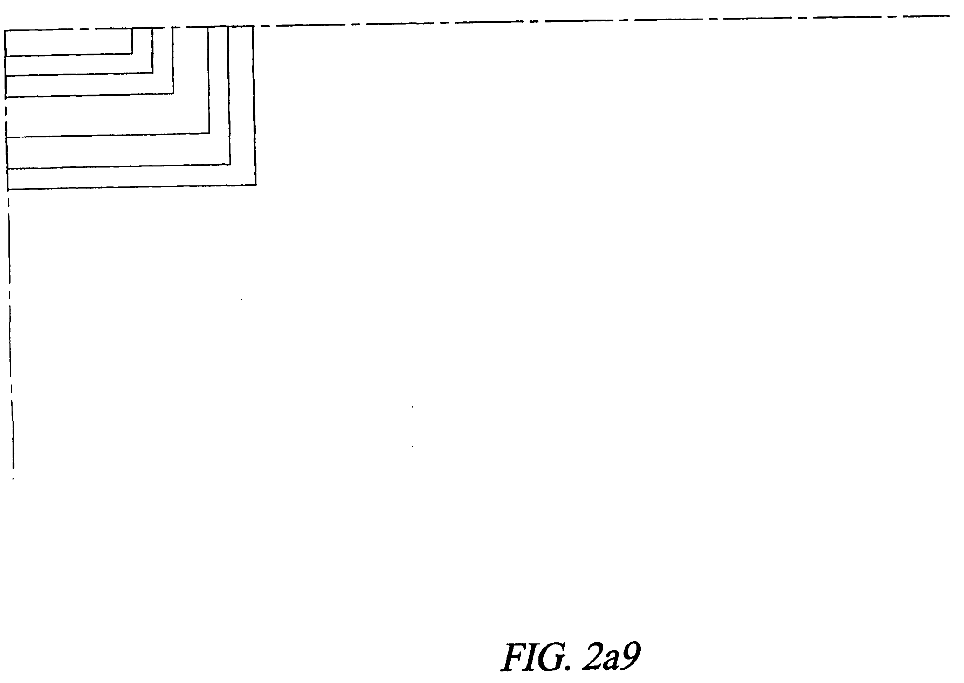

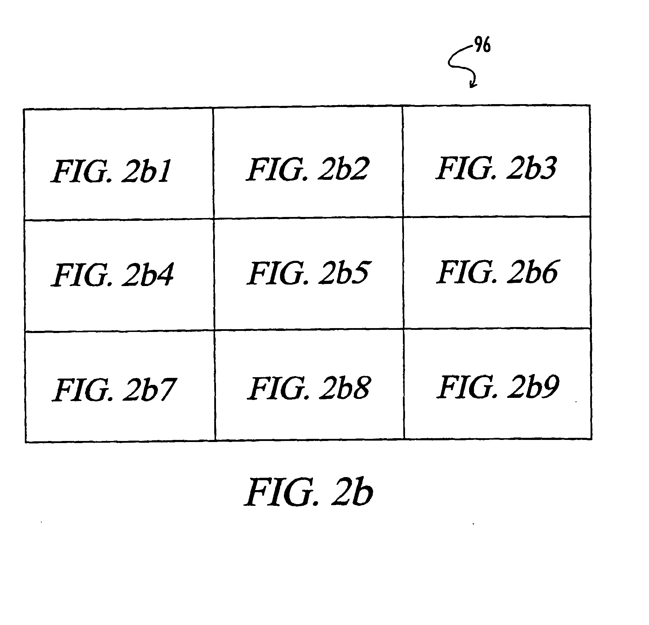

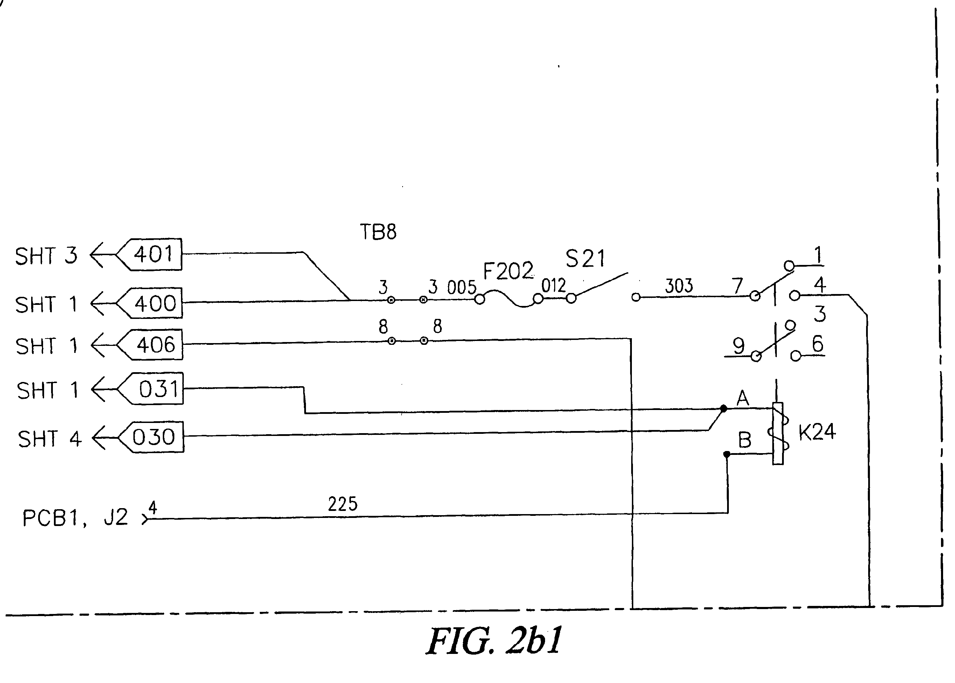

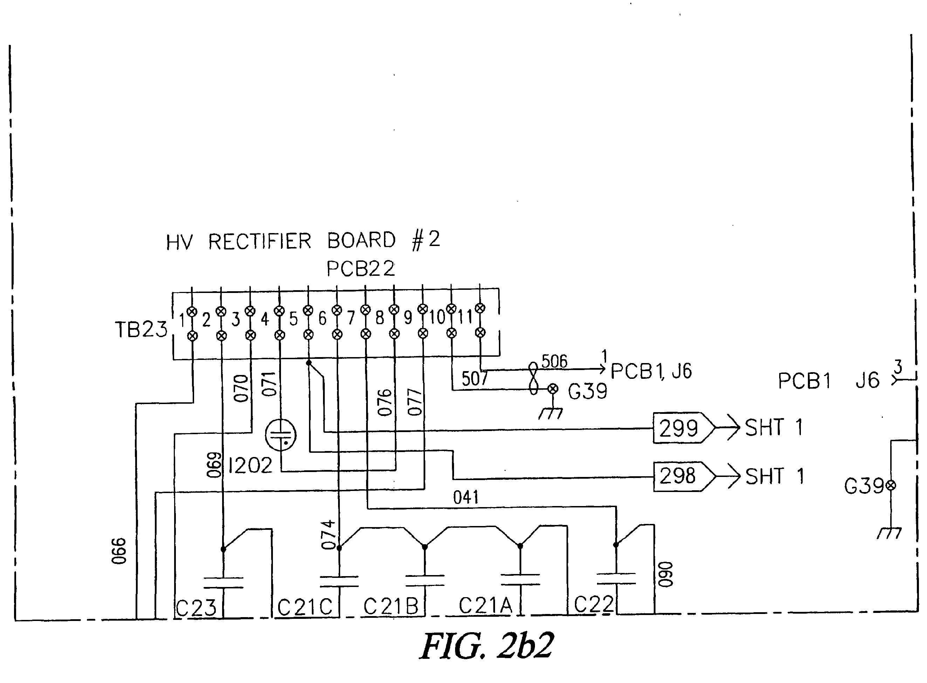

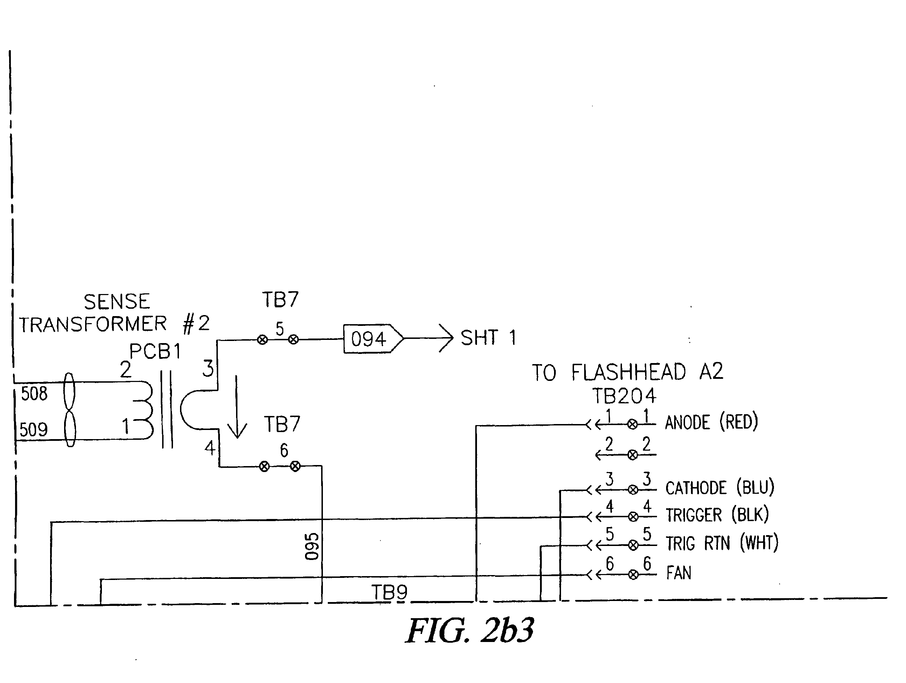

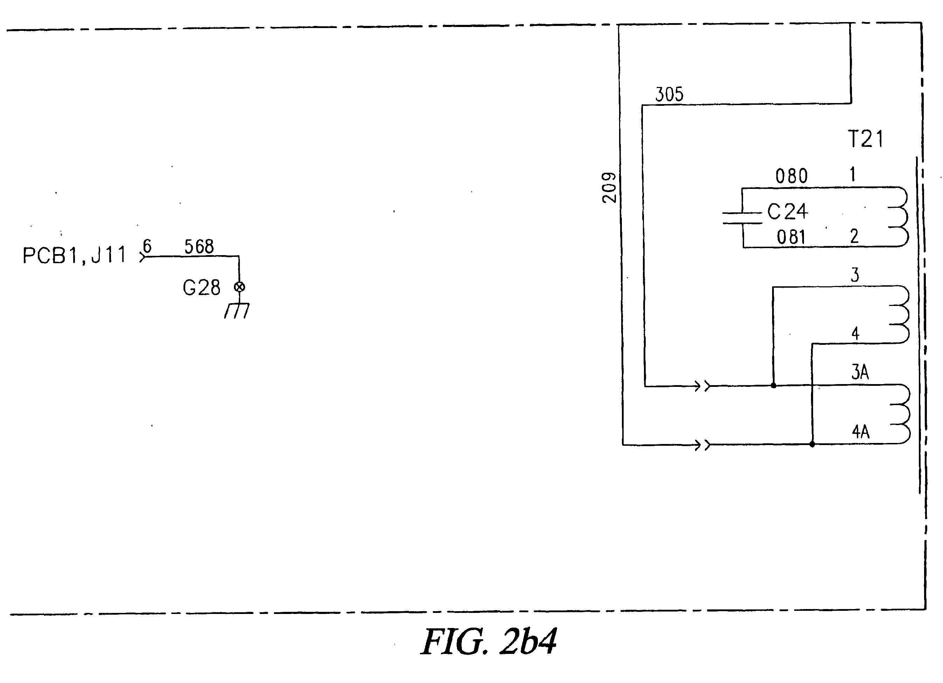

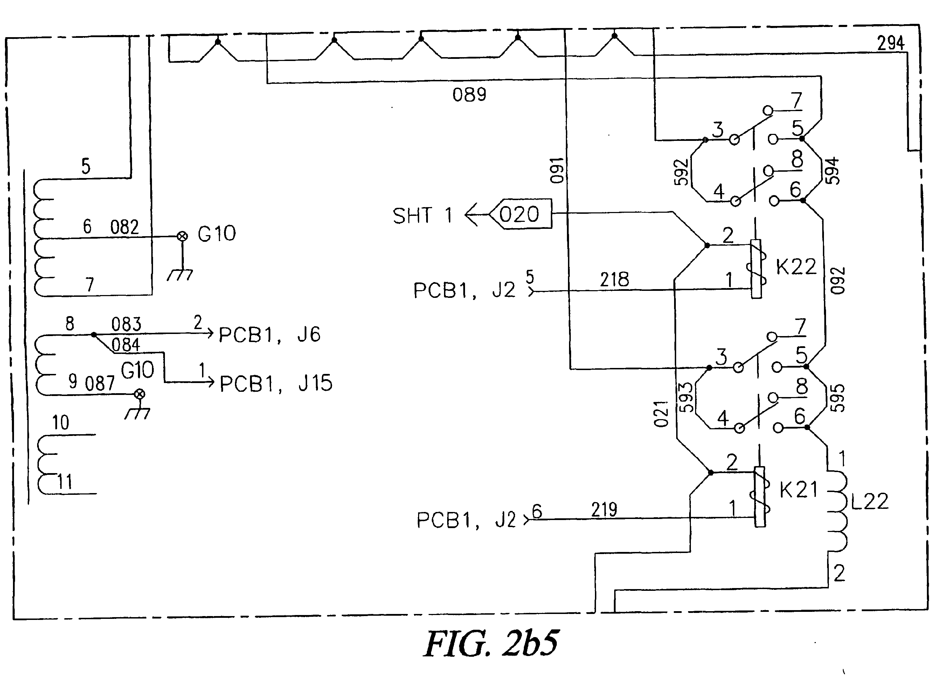

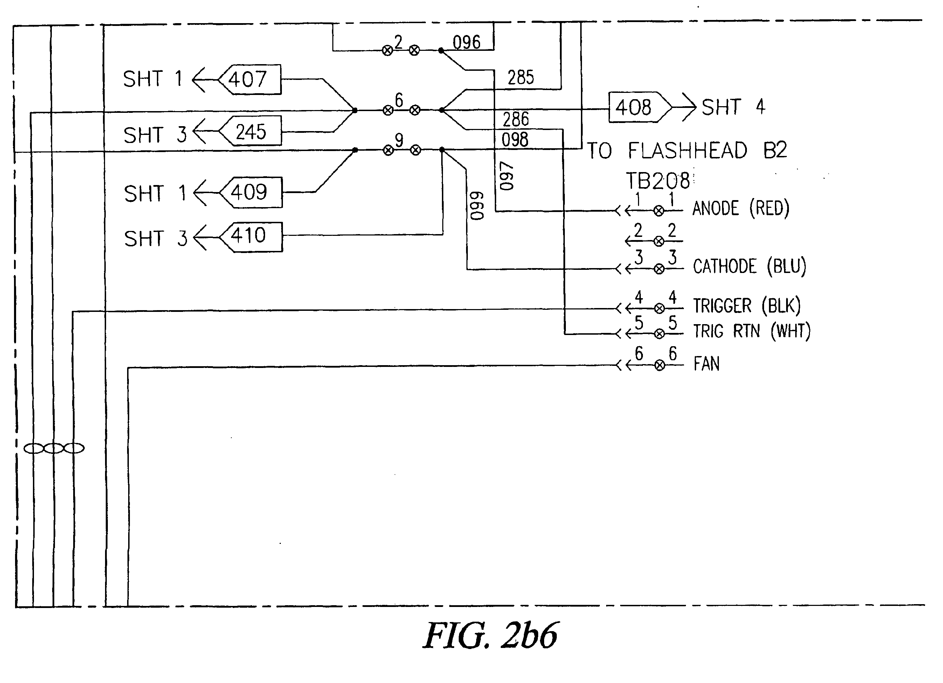

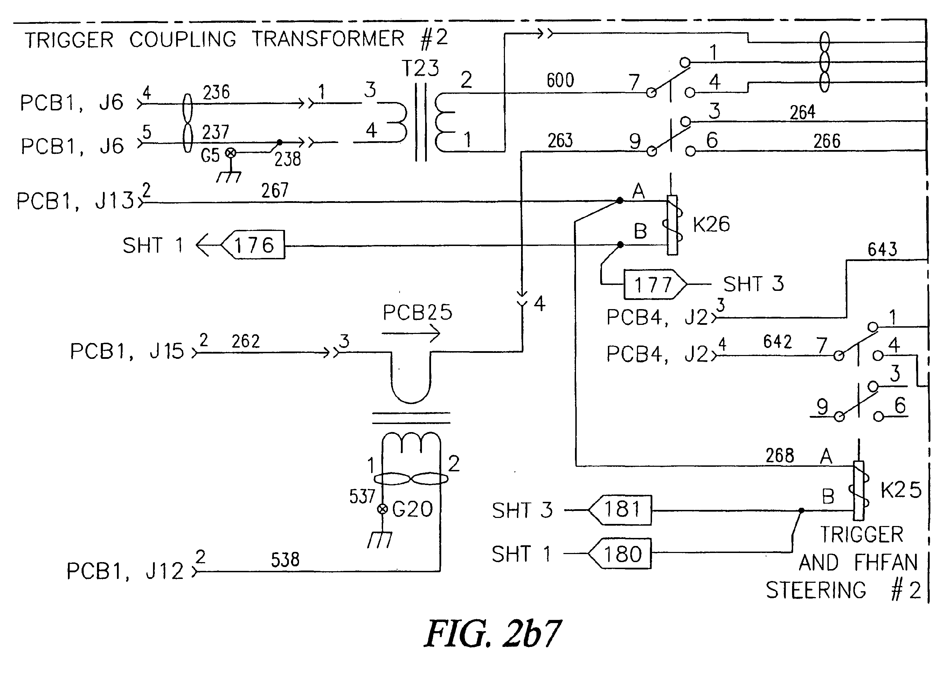

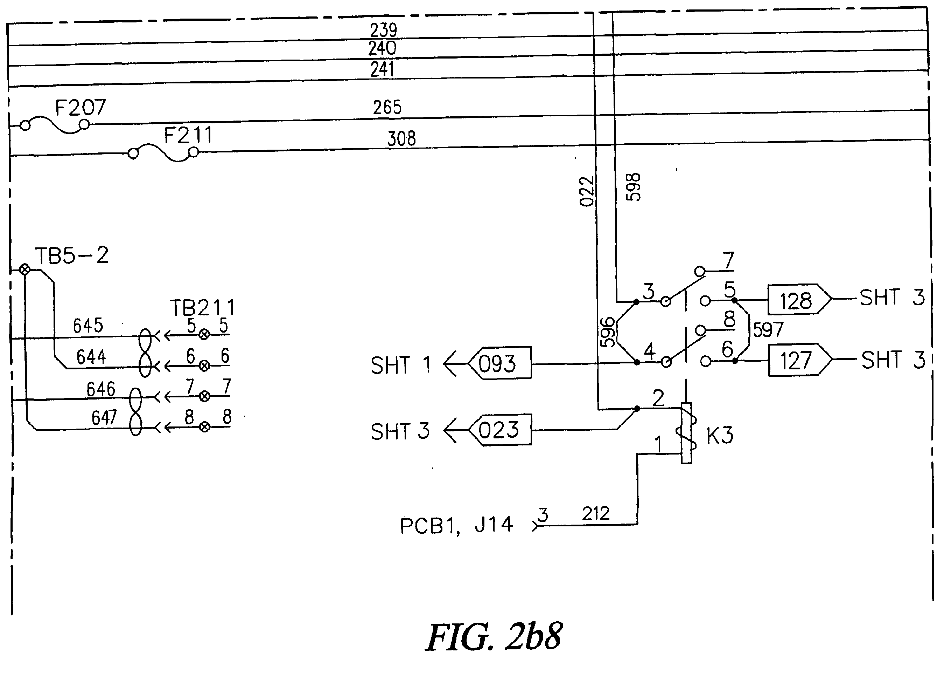

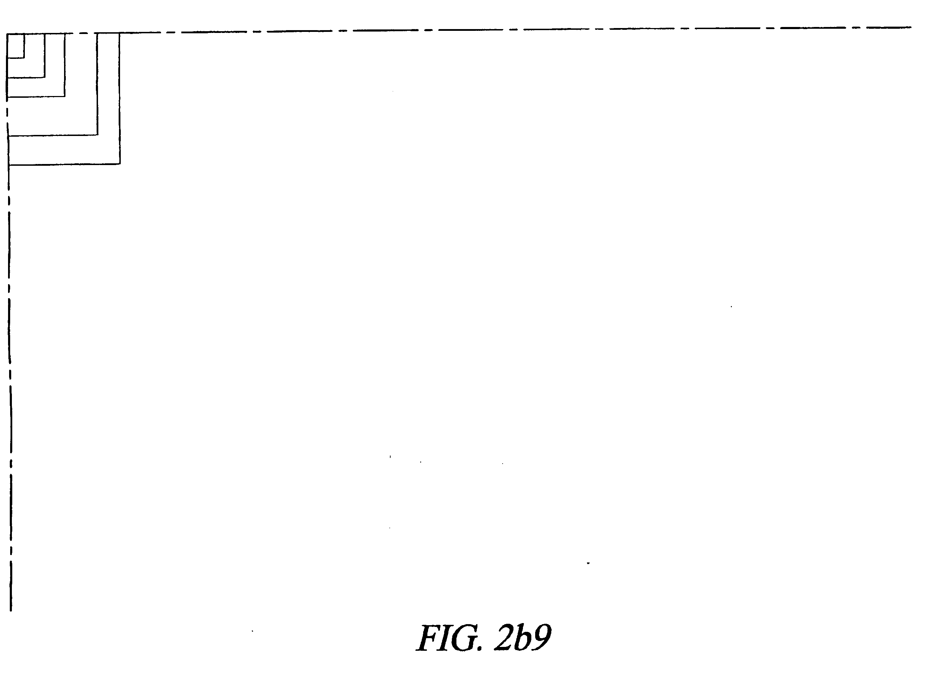

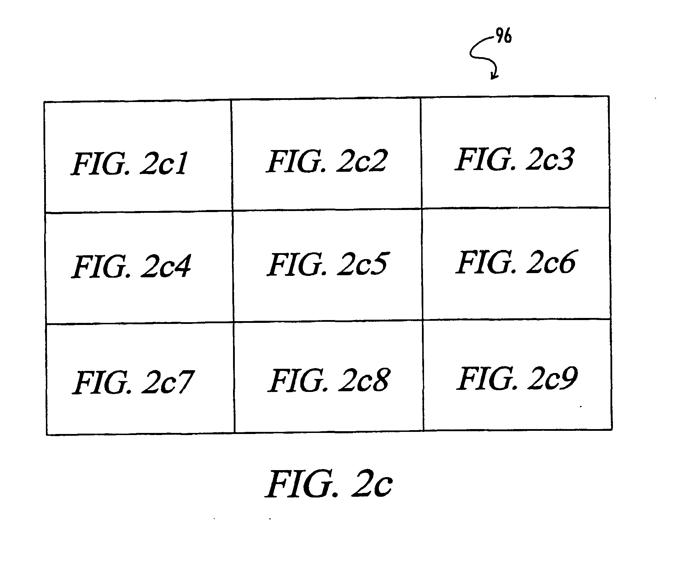

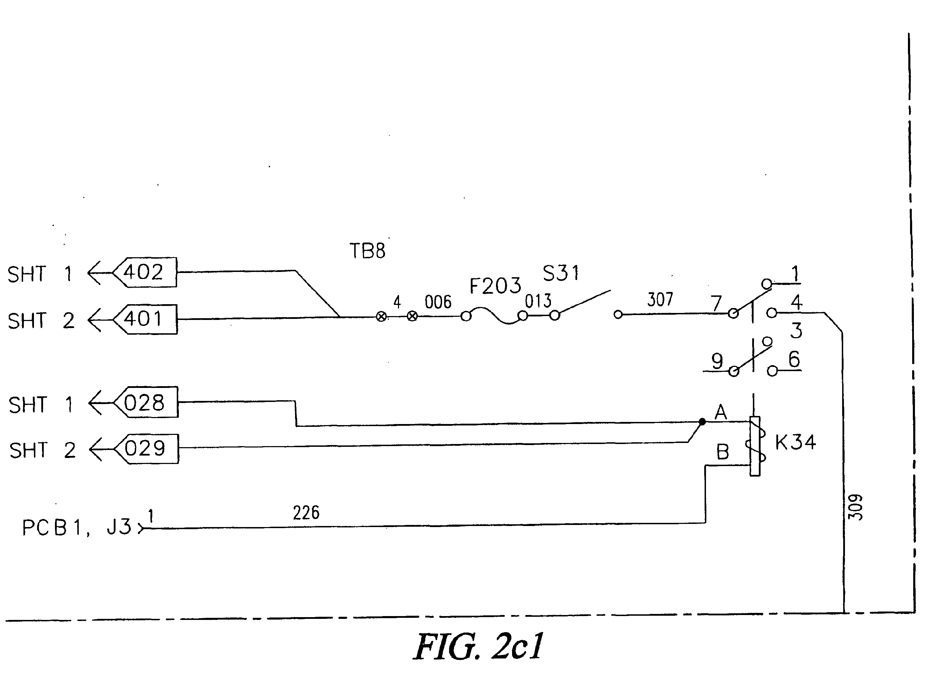

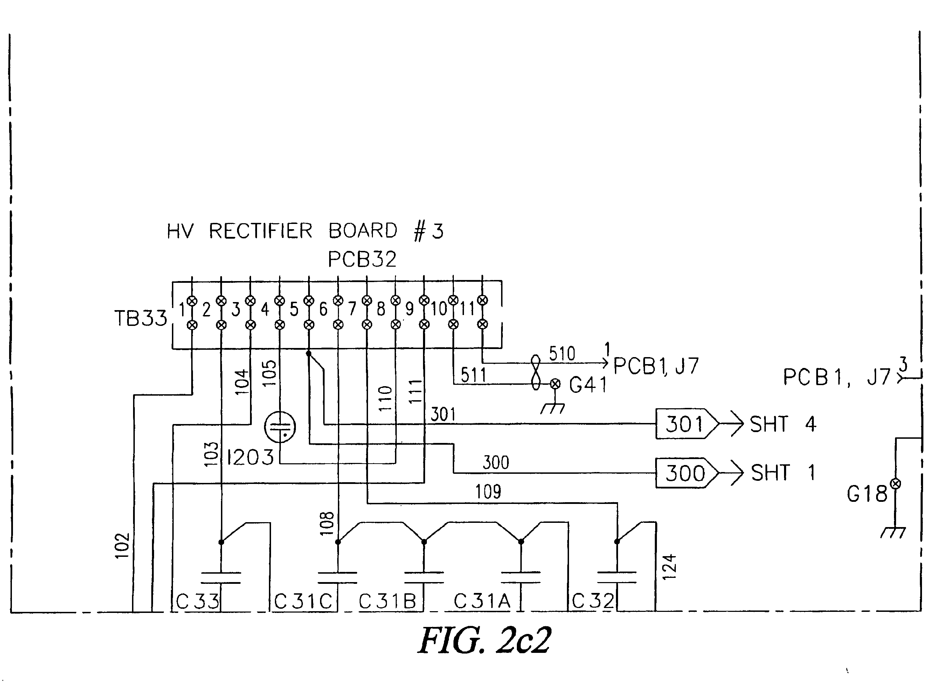

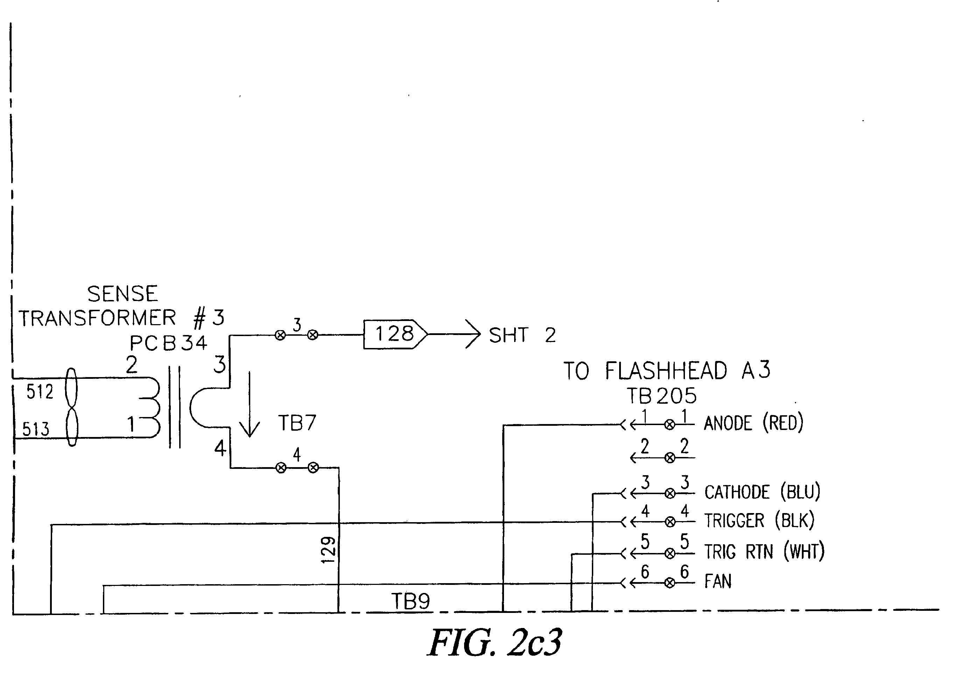

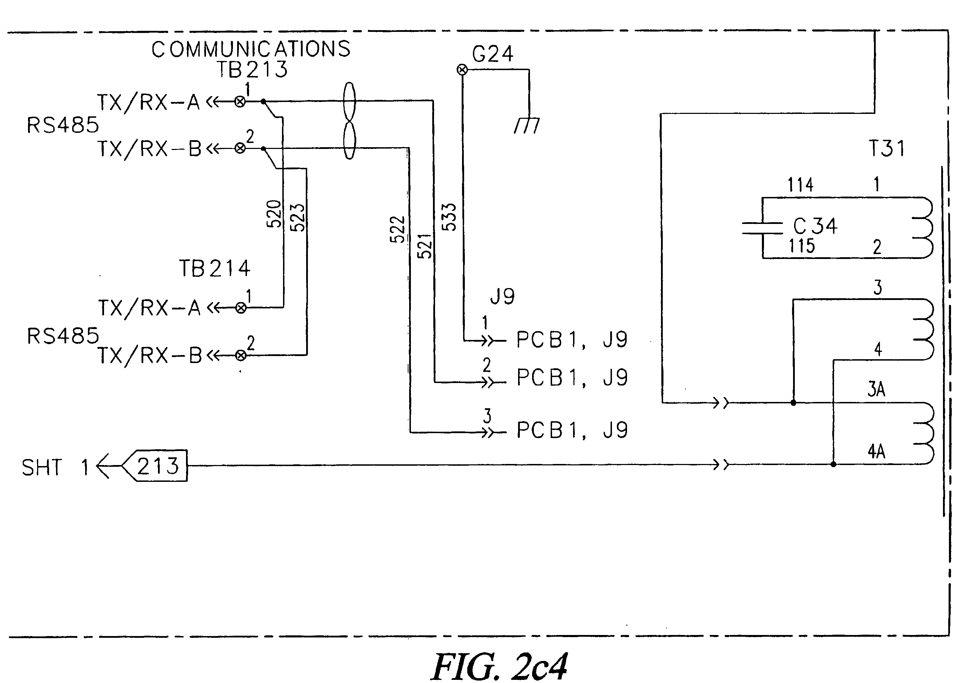

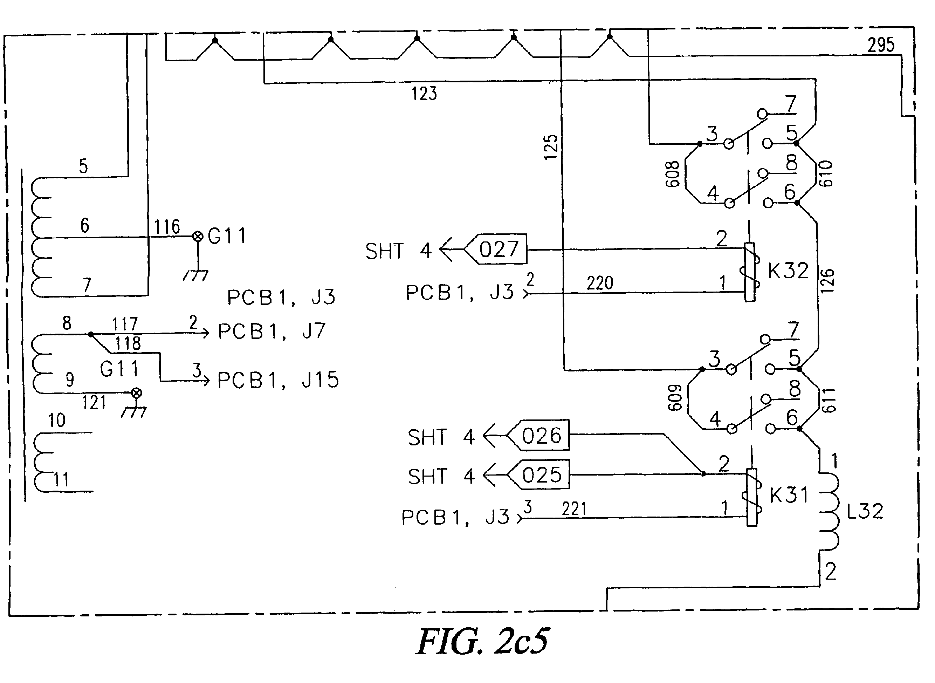

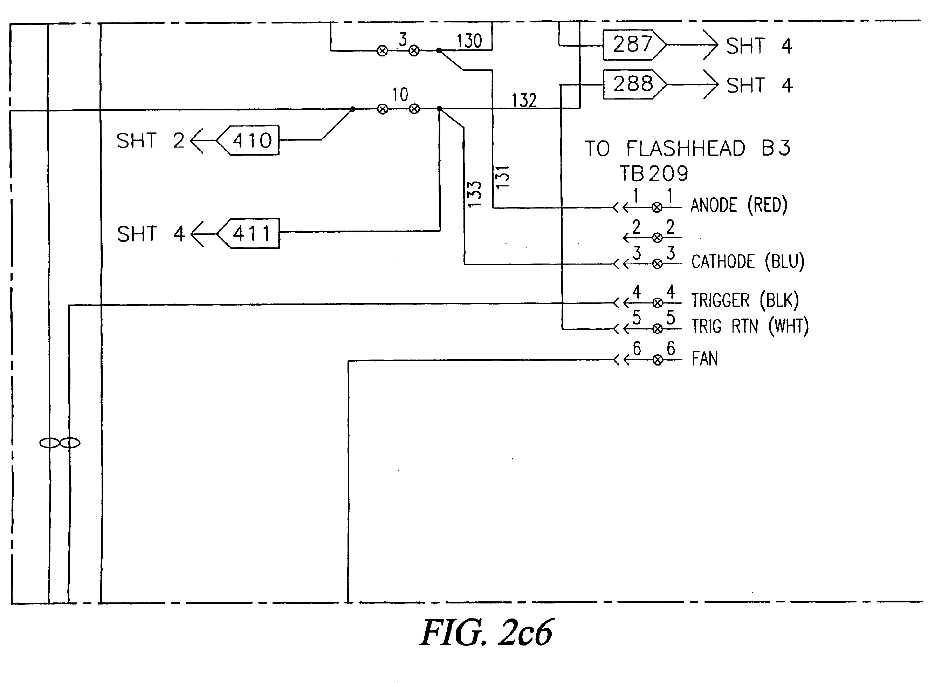

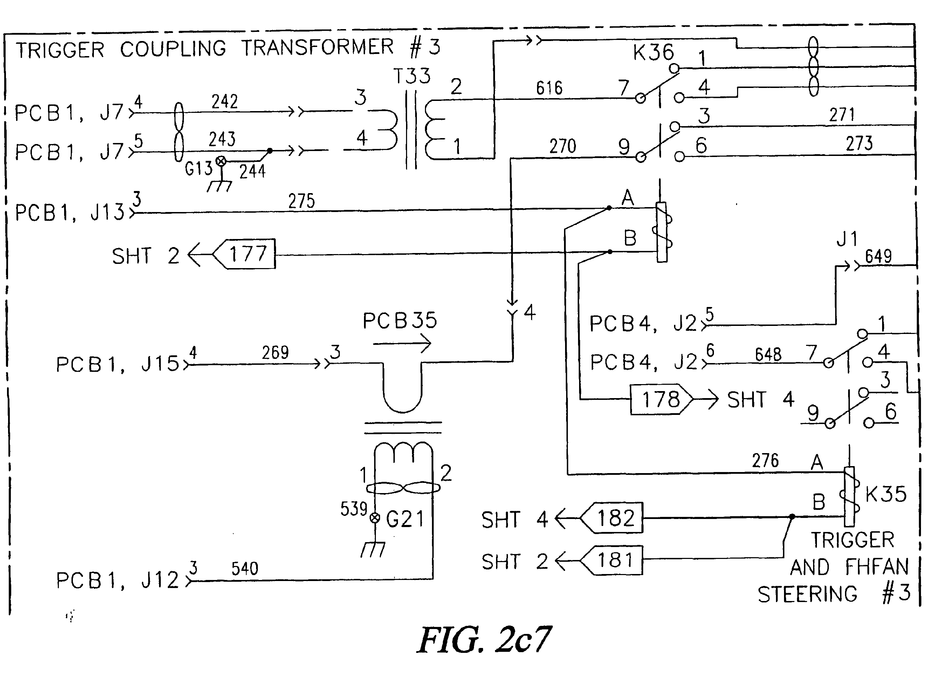

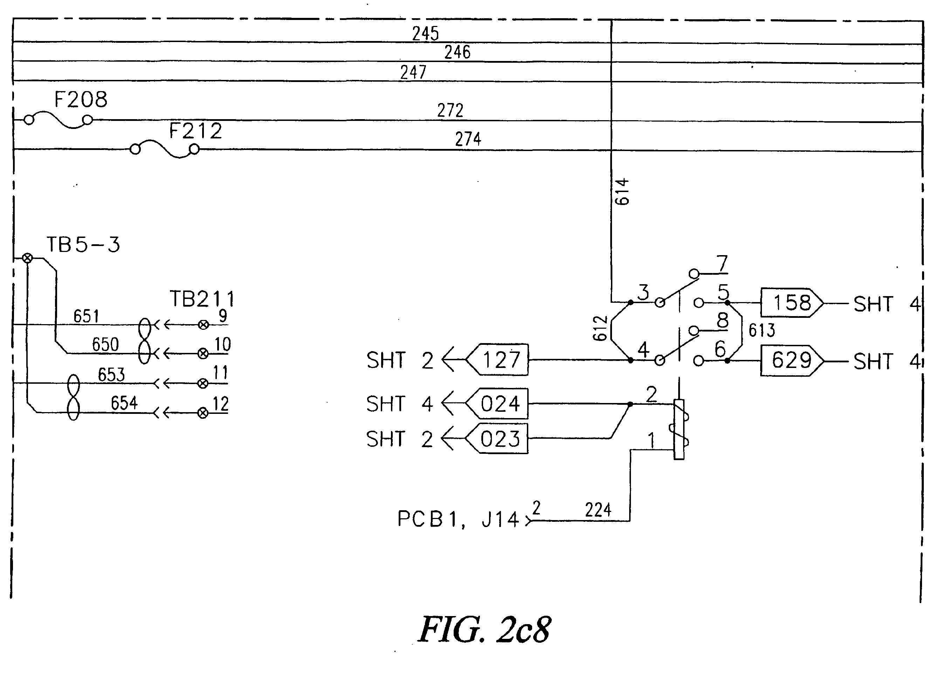

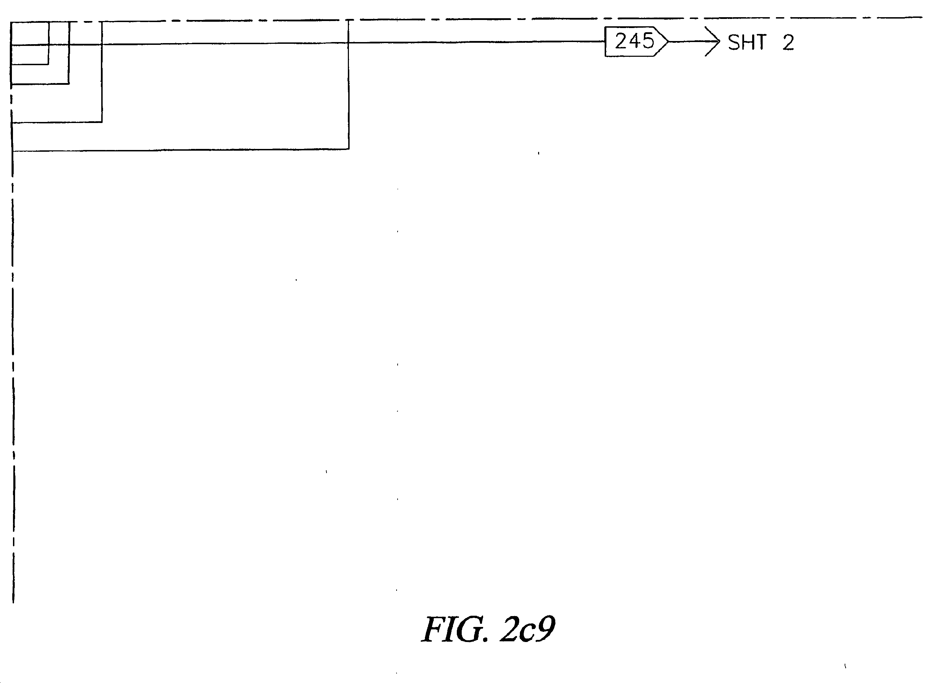

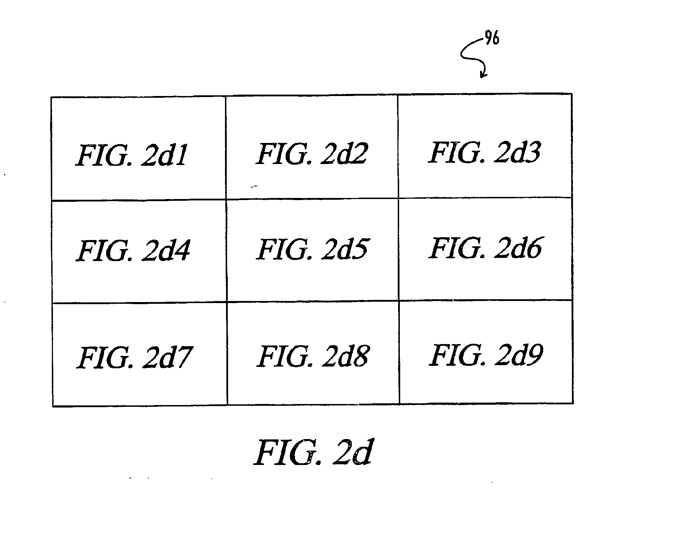

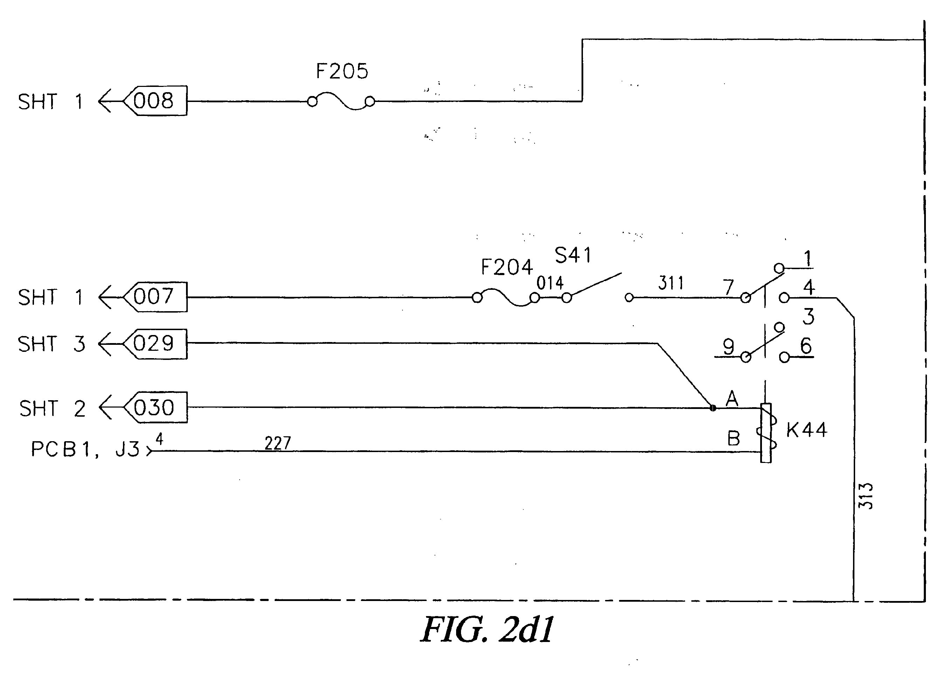

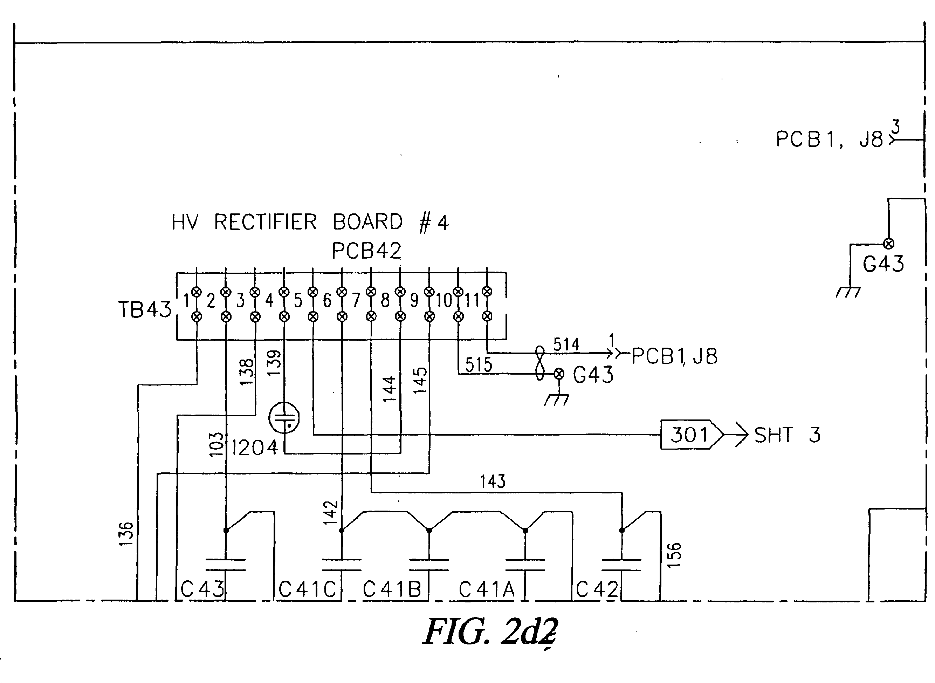

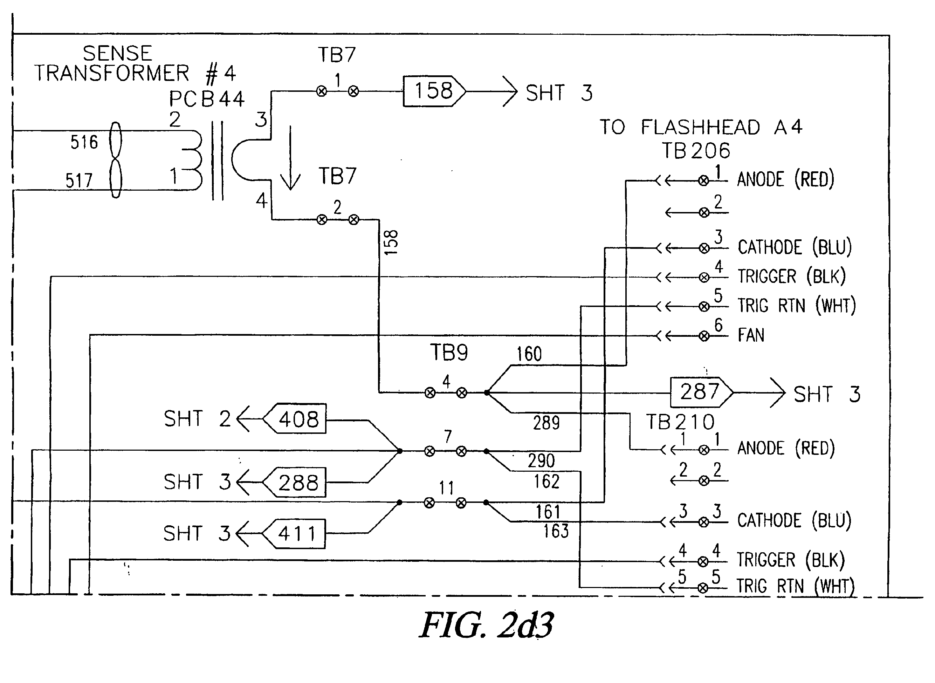

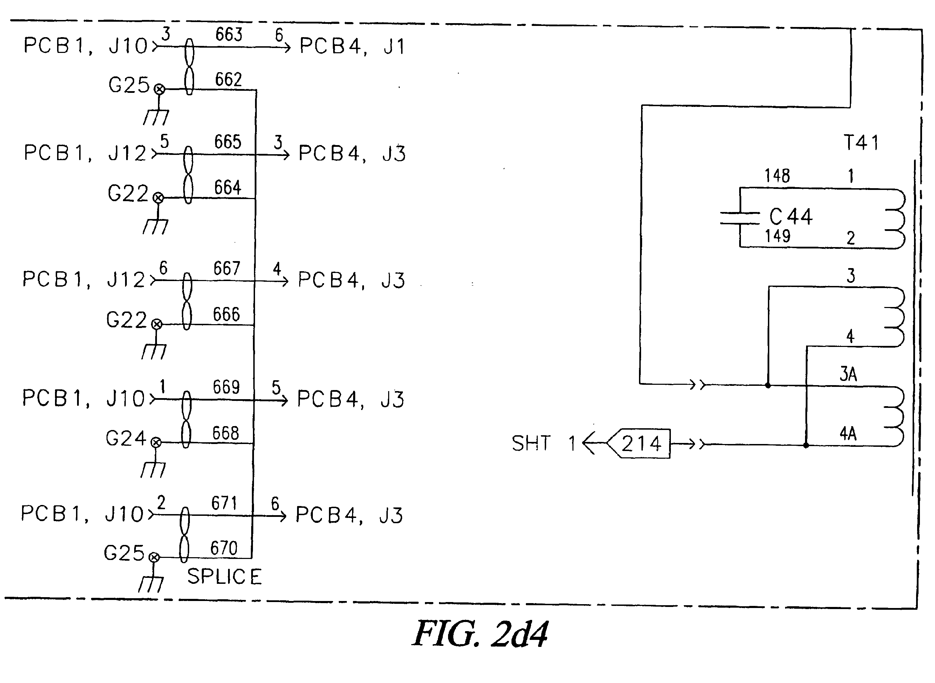

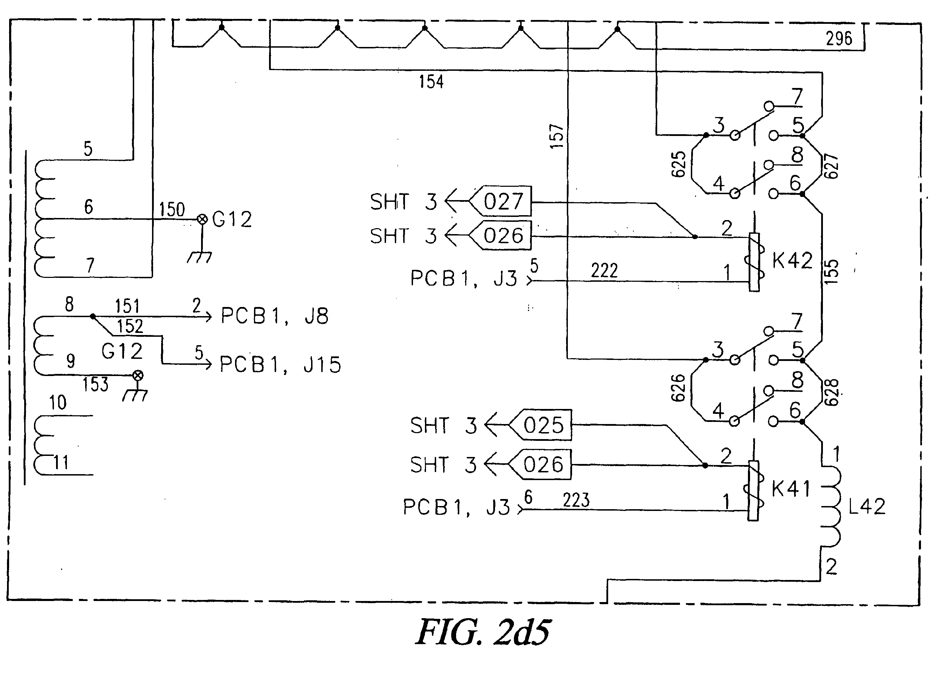

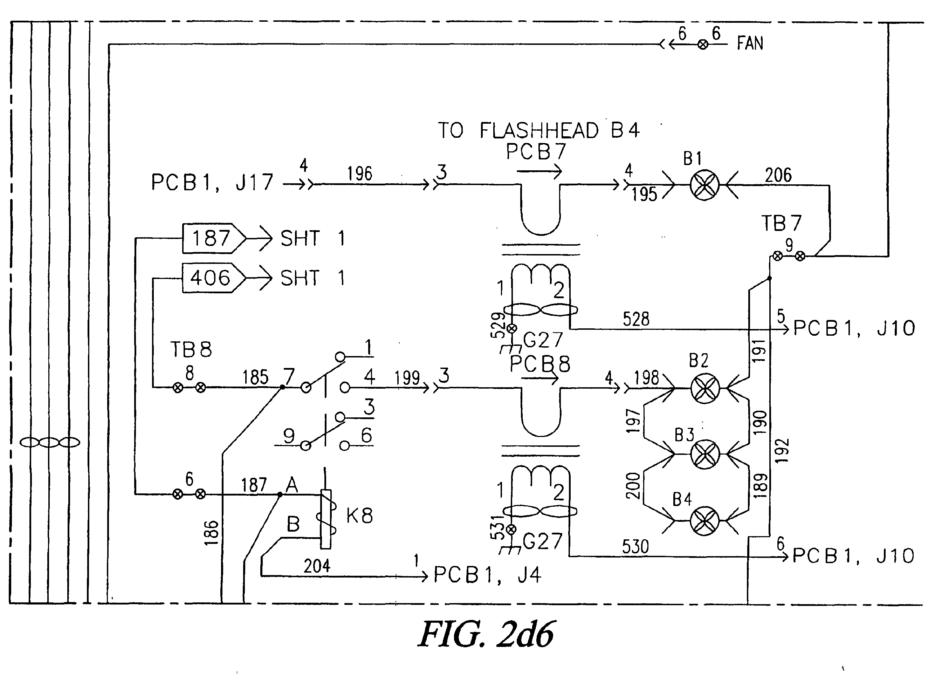

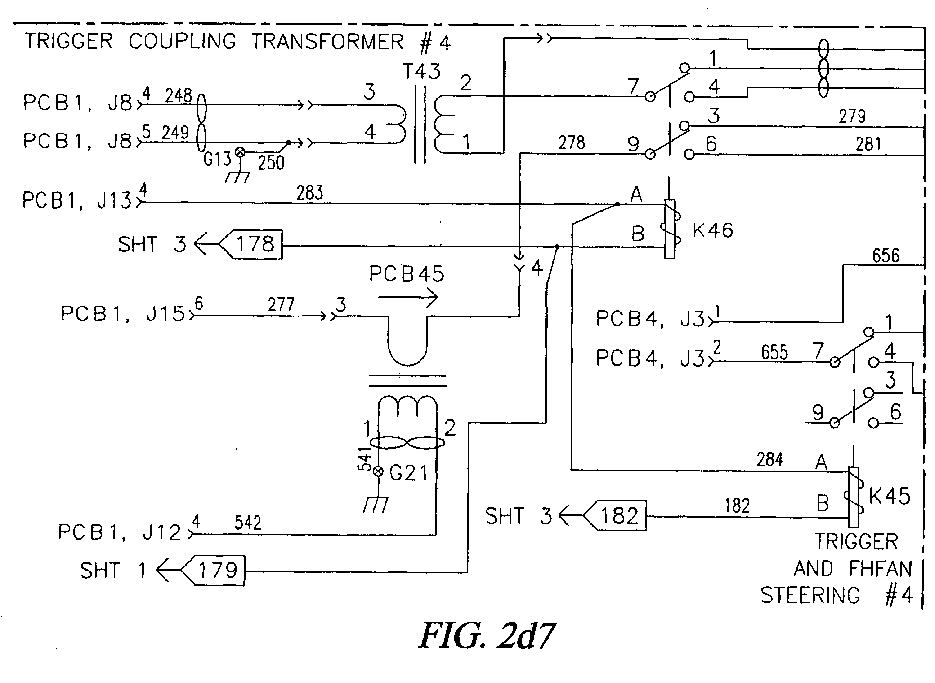

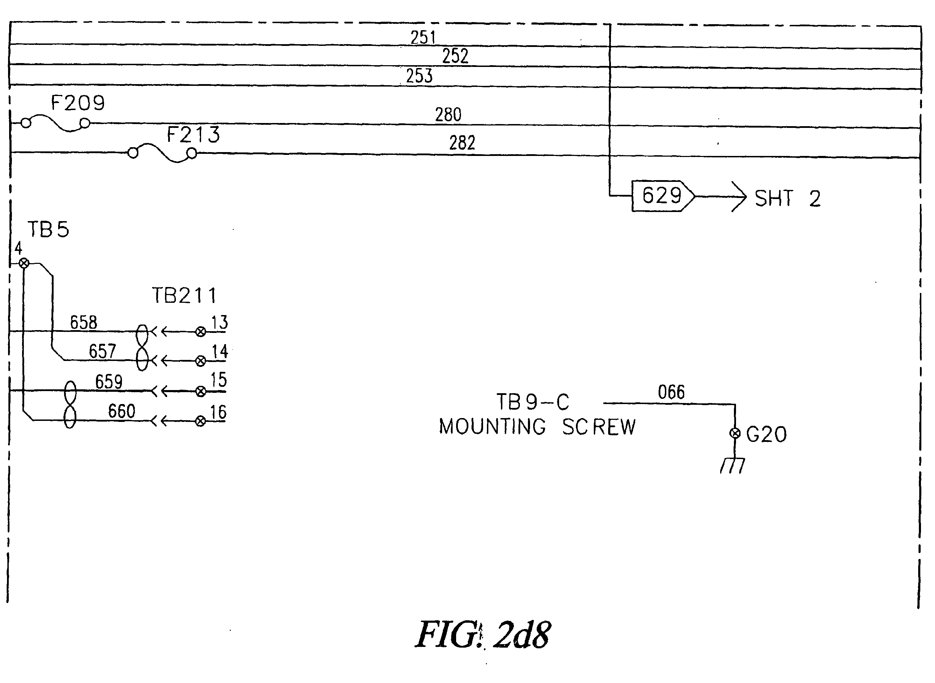

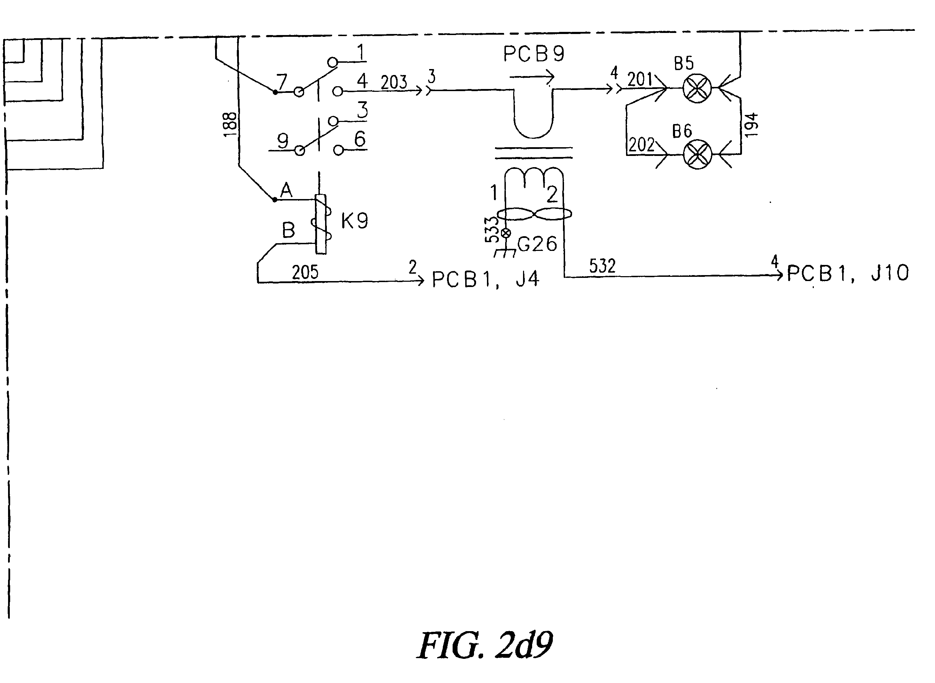

Figs. 2a, 2b, 2c, and 2d collectively are an electrical schematic of the analog circuitry in single flash head control unit **99** of the first embodiment. Fig. 32 is a block diagram of the digital section of the flash head control unit **99,** also referred to as the timing and trigger board **PCB1.** The connections to the timing and trigger board **PCB1** are labeled on Figs. 2a, 2b, 2c, 2d as "PCB1, Jx", where x corresponds to a connector pin. In the preferred embodiment of system **10** shown in Fig. 1 and Figs. 2a-2d, a single flash head control unit **99** is configured to provide power to and communications with up to eight attached flash heads **13,** represented in Figs. 2a-2d as flash heads A1, B1, A2, B2, A3, B3, A4, and B4. In this embodiment, a single flash head housing **56** will enclose one flash tube **60** with related triggering circuitry. Thus, looking at Fig. 2a, a flash head **13** will include one flash tube **60** having its own flash head interface circuit **96** within flash head control unit **99.** Therefore, there will be a total of eight flash head interface circuits **96,** selectable between four flash heads A or four flash heads B, in a single flash head control unit **99** of Figs. 2a, 2b, 2c, and 2d. Applicant herein will describe the interconnection and functioning of a single flash head interface circuit **96,** as illustrated on Fig. 2a, with the understanding that the same description will apply as well to the flash head interface circuits **96** illustrated also on Figs. 2b, 2c, and 2d. Optionally, multiple flash tubes **60** with associated trigger circuitry can be installed in a single housing **56** and controlled in a similar manner.

Looking now at Fig. 2a1-9, conventional 120 VAC electrical power is supplied to each flash head control unit **99,** from power interface panel 14, through a power cable **18,** connected at terminal block **TB201.** Input power sense board **PCB6** (Fig. 32) senses the presence of input power being supplied to flash head control unit **99** and sends a signal accordingly to system control unit **11.** Input power is then distributed to various points as shown throughout flash head control unit **99,** beginning with interconnections at terminal block **TB8.** Thus, for those circuits and components requiring a DC supply voltage, AC power is sent to first high voltage rectifier board **PCB12** which is connected at terminal block **TB13.** Lamp 1201 provides visual indication of power being energized. For devices and components needing AC supply voltage, timing board **PCB1** and temperature sense board **PCB4,** for example, the 120 VAC supply is stepped down as needed at power transformer **T11.** Fuse **F201** provides current overload protection and switch **S11** is a safety interlock device that removes power when the front panel of the flash head control unit **99** is opened.

A bank of capacitors **C11A, C11B, C11C, C12,** and **C13** is provided, in conjunction with capacitor select relays **K11** and **K12,** as a means for selectably adjusting the flash intensity of the corresponding flash head **13.** Table I shows the range of selectable flash rates, corresponding to different capacitor selections and power settings.

**TABLE I - SELECTABLE FLASH RATES, CAPACITOR SETTINGS AND POWER SETTINGS SHOWING POWER OPERATING RANGES**

| Flashes per Minute | Max Number of Capacitors Selectable | Range of Operational Power (Watts) |
|---|---|---|
| 60 | 4, 3, 2, or 1 | 640 to 20 |
| 72 | | |
| 75 | | |
| 80 | 3, 2, or 1 | 833 to 24 |
| 90 | | |
| 100 | | |
| 120 | | |
| 144 | | |
| 150 | 2 or 1 | 733 to 40 |
| 180 | | |
| 200 | | |
| 225 | | |
| 240 | | |
| 300 | | |
| 360 | 1 | 300 to 800 |
| 400 | only | |
| 450 | | |
| 600 | | |

CAP 4 AT 800 W = 1280 mF
CAP 4 AT 200 W = 320 mF
CAP 3 AT 800 W = 1000 mF
CAP 3 AT 200 W = 250 mF
CAP 2 AT 800 W = 440 mF
CAP 2 AT 200 W = 110 mF
CAP 1 AT 800 W = 160 mF
CAP 1 AT 200 W = 40 mF

Thus, the system operator can enter a system command at system control unit **5** which selects a particular flash intensity as part of the flash head configuration routine. The flash intensity selection is implemented by a corresponding flash intensity select signal being sent to relays **K11** and/or **K12.**

The software in system control unit **5** is pre-programmed with the parameters set forth in Table I which determine the safe operational limits of the particular flash head **13** to avoid overheating of the flash tube. Accordingly, the system control unit **5** internally monitors the configuration of each flash head 13 to prevent selection of flash head operational parameters which would expose the flash tube to an overheating condition. Subject to these limits, in a preferred embodiment of system **10,** each flash head can be operated from between 20 to 800 watts with the flash rate adjusted on real time basis from between 60 to 600 flashes per minute. Depending on local ambient and operating conditions, on-site adjustment of the system may be needed to deal with heat management issues. If overheating of the flash heads becomes a problem, a preferred method of solving the problem is to reduce flash head duty cycle by increasing the number of flash heads **13.**

A trigger coupling transformer **T13** receives flash trigger signals from timing and trigger board **PCB11** (Fig. 32). The flash trigger signals are transmitted to either flash head A1 (flash head **13A)** connected at terminal block **TB203** or to flash head B1 (flash head **13B)** connected to terminal block **TB207.** Selection of either flash head **A1** or flash head **B1** on Fig. 2a is made by trigger and fan steering relays **K15** and **K16** which are responsive to flash head select signals received from timing and trigger board **PCB11.**

A flash tube current sense transformer **PCB14** has its primary winding connected to the anode of each flash tube within flash head A1 and flash head B1. The secondary winding of flash tube current sense transformer **PCB14** is connected to timing and trigger board **PCB11** so that an appropriate signal can be sent to system control unit 5, verifying functioning of the flash tube.

Steering relays **K15/K16** also control the switching of data from corresponding temperature sensors **TS101** associated with flash head A1 or B1, which is electrically connected at terminal block **TB211.** This data, preferably generated from a conventional thermistor type sensor, is then sent to temperature sensing board **PCB4.** Also, flash head fan sense module **PCB15** confirms operation of a corresponding flash head fan (fan **51** on Fig. 18b), sending a confirming signal to timing and trigger board **PCB11.**

Power selection relay **K1,** in response to a signal from timing and trigger board **PCB11,** varies the operating power in response to flash rate and intensity selections.

A tuning capacitor **C14** is connected across a primary winding of power transformer **T11** to assist in regulation of the secondary output voltage.

Discharge relay **K4,** unless closed by a signal from timing and trigger board **PCB11,** enables flashing of each flash head **13** connected to flash head control unit **99,** by allowing discharge of current from a corresponding flash tube **60** through discharge resistor **R1.**

Fig. 2c also schematically illustrates the serial data communications connections to the flash head control unit **99.** In this embodiment, the data is transmitted and received using an industry standard RS485 serial communications link and protocol, connected at terminal blocks **TB213** and **TB214,** with the data being sent to and received from timing and trigger board **PCB11.**

Fig. 2d schematically shows a series of six blowers **B1, B2, B3, B4, B5,** and **B6** which work together to internally circulate and exhaust air from flash head control unit **99.** Operation of blowers **B1 - B6** is controlled by blower control relays **K8** and **K9** in response to signals received from timing and trigger board **PCB11**. Blower sense modules **PCB7, PCB8**, **PCB9,** sense operation of blowers **B1,** blowers **B2, B3, B4,** and blowers **B5** and **B6,** respectively, and send corresponding signals indicating proper operation of the blowers to timing and trigger board **PCB11.**

Fig. 32 illustrates the various functional blocks of timing and trigger board **PCB1** and their interconnection. Basic flash head control is provided by a conventional microprocessor **80** which receives analog data input from the various analog sensors in the system **10,** shown as block **81,** and performs a multiplexed analog-to-digital conversion of that data (flash head temperature, capacitor bank voltage, line voltage, trigger voltage, and flash sensing) of the system **10** to configure and adapt processor **80** to perform the functions required by the system. A random access memory chip **83** provides static memory for use of processor **80** while a read only memory chip **84** (EPROM) contains the software which provides the basic operating system functions for the processor **80.**

The outputs from processor **80** to system **10** are provided through decoder block **85** and latch block **86.** These in turn provided trigger signals through trigger circuit **90** to trigger operation of flash tubes **60** in the various flash heads **13,** through the circuitry shown on Figs. 2a-2d. Visual indication of operation of the system is also provided through a light emitting diode block **91.** Finally, control of the various system signals for operation of system accessory devices, specifically the air compressor and water pump, are provided through accessory control block **92.** Serial communications between the timing and trigger board **PCB11** and the system control unit **5** are provided through a serial communications interface **87,** which includes both a standard RS232 system diagnostics port **89** and a conventional RS485 serial port **88.** Interface output connector **95** mechanically and electrically connects the outputs from timing and trigger board **PCB1** to the other corresponding sections of system **10.** Power for timing and trigger board **PCB11** is provided through a power supply and reset circuit **93** which sends power reset and interrupt signals to the processor **80** at start up and reset of system **10.** Analog input signals are provided to timing and trigger board **PCB1** through input interface connector **94.**

In the second embodiment of the system **10,** each flash head **13** is mounted together with two other flash heads **13** to form a tri-pack of flash heads **13,** as described below. Each flash head **13,** in conjunction with its corresponding flash head control unit **99** (shown in Fig. 3), contains an illumination device and related hardware used to attract and deter fish.

Each tri-pack of flash heads **13** is electrically connected via a single power and control cable **17** to a flash head termination rack **9,** which is further connected to a flash head control unit **99** mounted in part on a motherboard. The flash head termination rack **9** provides a connection between flash head control unit **99** and the flash heads **13.**

Each flash head **13** preferably includes the following external inputs: communications with its corresponding flash head control unit **99** (via cable **17** and termination rack **9),** and including cooling fan control signals, and flash tube trigger signals; water temperature; and internal flash head temperature. Each flash head **13** has provisions for the following external outputs: communications with flash head control unit **99** (via cable **17),** including flash head temperature and water temperature.

Figs. 7a, 7b, 7c, and 7d are collectively an electrical schematic of the analog circuitry of a flash head interface circuit **96** of the second embodiment of the system **10.** The flash head interface circuit **96** is used by the flash head control unit **99** to control the illumination of one tri-pack of flash heads **13** connected to the termination racks **9.** Since each flash head control unit **99** is configured to control fifteen flash heads **13,** each flash head control unit **99** has five flash head interface circuits **96** identical to the one in Fig. 7a. Each flash head interface circuit **96** is therefore connected to the motherboard of the flash head control unit **99.**

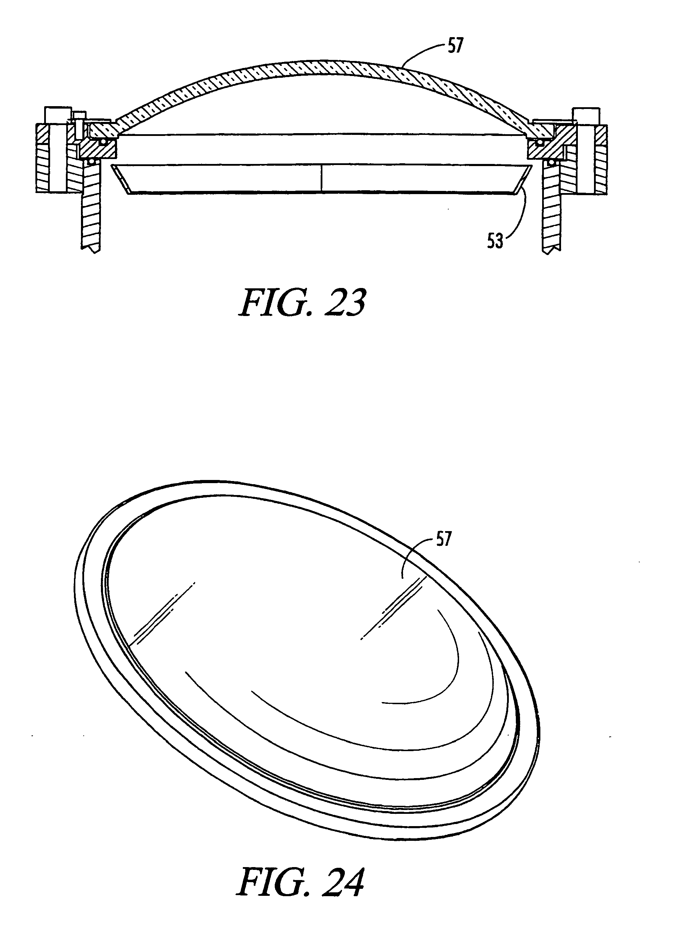

Fig. 23 is a block diagram illustrative of the digital section of the flash head control unit **99,** also referred to as the timing and trigger board **PCB11.** The connections to the timing and trigger board **PCB11** are labeled on Fig. 7a as "PCB11, Jx(Jy - z)", where x corresponds to a connector pin on the motherboard, y corresponds to a phoenix connector for the daughter card with the motherboard, and z corresponds to the pin number on the phoenix connector. In this embodiment, a single flash head housing 56 will enclose one flash tube **60** with related triggering circuitry. Preferably, there are six flash head control units **99** located in the control center **12.** Therefore, the system **10** will be able to control up to 90 flash heads 13 in 30 total tri-packs. Applicant herein will describe the interconnection and functioning of a flash head interface circuits **96** of the second embodiment, as illustrated on Figs. 7a-7d, with the understanding that the same description applies as well to the remaining flash head interface circuits **96** of the other flash head control units **99.** Optionally, multiple flash tubes **60** with associated trigger circuitry can be installed in a single housing **56** and controlled in a similar manner.

Looking at Figs. 7a and 7d, conventional 120 VAC electrical power is supplied to each flash head interface circuit **96** through a power cable **17** connected at the breaker panel. Input power is distributed to the flash heads **13** as determined by relays **K11** and **K12.** For those circuits and components requiring a DC supply voltage, AC power is sent via power transformer bank **21** (transformers **T11-T14)** to terminal block **TB12,** which is connected to high voltage rectifier board **PCB14.** For devices and components needing AC supply voltage, the 120 VAC supply is also stepped down as needed at power transformer bank **21** (transformers **T11-T14).** Further, tuning capacitor bank **22,** including tuning capacitors **C11, C12, C13,** and **C14,** is connected across the primary windings of power transformers **T11, T12, T13.** and **T14** of power transformer bank **21** to assist in regulation of the secondary output voltage to each flash head **13.**

Trigger capacitor bank **23** contains capacitors **C15-C19** that are used in conjunction with capacitor select relays **K13** and **K14** as a means for selectably adjusting the flash intensity of the corresponding flash head **13.** Table I (shown above) shows the range of selectable flash rates, corresponding to different capacitor selections and power settings.

Thus, the system operator can enter a system command at the system control unit **5** to select a particular flash intensity as part of the flash head configuration routine. The flash intensity selection is implemented by a corresponding flash intensity select signal being sent to relays **K13** and/or **K14.**

The software in the system control unit 5 is pre-programmed with the parameters set forth in Table I which determine the safe operational limits of the particular flash head **13** to avoid overheating of the flash tube **60.** Accordingly, the system control unit **5** internally monitors the configuration of each flash head **13** to prevent selection of flash head operational parameters which would expose the flash tube **60** to an overheating condition. Subject to these limits, the second embodiment of system **10** works similar to the first embodiment of the system **10** in that each flash head **13** can be operated from between 20 to 800 watts with the flash rate adjusted on real time basis from between 60 to 600 flashes per minute. Depending on local ambient and operating conditions, on-site adjustment of the system may be needed to deal with heat management issues. If overheating of the flash heads **13** becomes a problem, a preferred method of solving the problem is to reduce flash head duty cycle by increasing the number of flash heads **13.**

A flash tube current sense transformer **PCB13** has its primary winding connected to the anode of terminal block **TB11.** The secondary winding of flash tube current sense transformer **PCB13** is connected to timing and trigger board **PCB11** so that an appropriate signal can be sent to the flash head interface circuit **96,** verifying functioning of each flash tube **60** of the tri-pack configuration. The cathode of terminal block **TB11** is further connected to terminal block **TB12.** The flash heads **13** are connected in parallel to the cathode and anode of terminal block **TB11** which triggers each of the three flash heads **13** of the tri-pack configuration according to the current supplied. Transformers **T15-T17** of triggering transformer bank **24** are connected to trigger ports 1-3 of terminal block **TB11** to provide power to each flash head **13** according to the duration and intensity desired. Furthermore, because the current supplied to each flash head **13** is provided through the parallel connection to terminal block **TB11,** each flash head **13** operates on one-third of the duty cycle that would be applied for a single connection to one flash head **13.**

Furthermore, from Fig. 7a, flash intensity signals originate from timing and trigger board **PCB11** and are sent to relays **K13** and **K14,** which determine the intensity and duration of each flash by the current supplied to the ports of terminal block **TB11.**

The temperature sensors **TS101** (shown schematically in Fig. 7b) associated with the flash heads **13** are connected at the flash head termination rack **9** with the flash head interface circuit **96.** The temperature sensors (preferably conventional thermistor type sensors) provide temperature data from each individual flash head **13.** This data is sent to temperature sensing board **PCB12** for analysis by the system control unit **5.**

Fig. 32 illustrates the various functional blocks of timing and trigger board **PCB11** and their interconnection. Basic flash head control is provided by a conventional microprocessor **80** which receives analog data input from the system **10,** shown as block **81,** and performs a multiplexed analog-to-digital conversion of that data (flash head temperature, capacitor bank voltage, line voltage, trigger voltage, and flash sensing) of the system **10** to configure and adapt processor **80** to perform the functions required by the system. A random access memory chip **83** provides static memory for use of processor **80** while a read only memory chip **84** (EPROM) contains the software which provides the basic operating system functions for the processor **80.** An electrically erasable read-only memory chip (EEPROM) stores the system's configuration in the event of a power loss.

From Fig. 32, the outputs from processor **80** to system **10** are provided through decoder block **85** and latch block **86.** These in turn provide trigger signals through trigger circuit **90** to trigger operation of flash tubes **60** in the various flash heads **13.** through the flash head interface circuit **96** shown on Fig. 7a. Finally, control of the various system signals for operation of system accessory devices, specifically the air compressor **112** and water pump **105,** are provided through accessory control block **92.** Serial communications between the timing and trigger board **PCB11** and the system control unit **5** are provided through a serial communications interface **87,** which includes both a conventional RS232 system diagnostics port **89** and a conventional RS485 serial port **88.** Interface output connector **95** mechanically and electrically connects the outputs from timing and trigger board **PCB11** to the other corresponding sections of system **10.** Analog input signals are provided to timing and trigger board **PCB11** through input interface connector **94.**

### FLASH HEADS

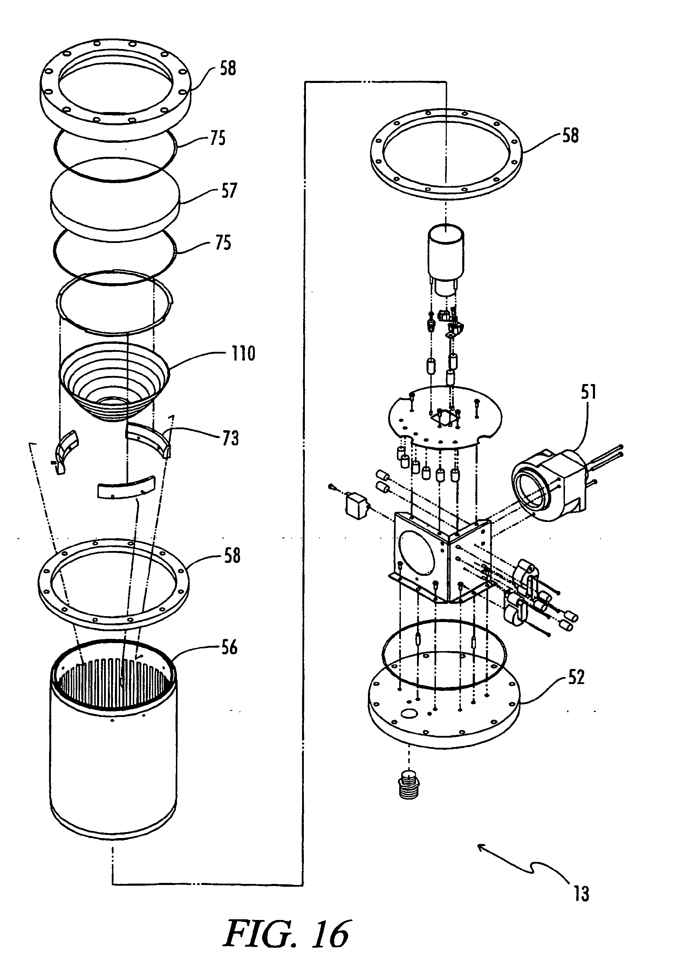

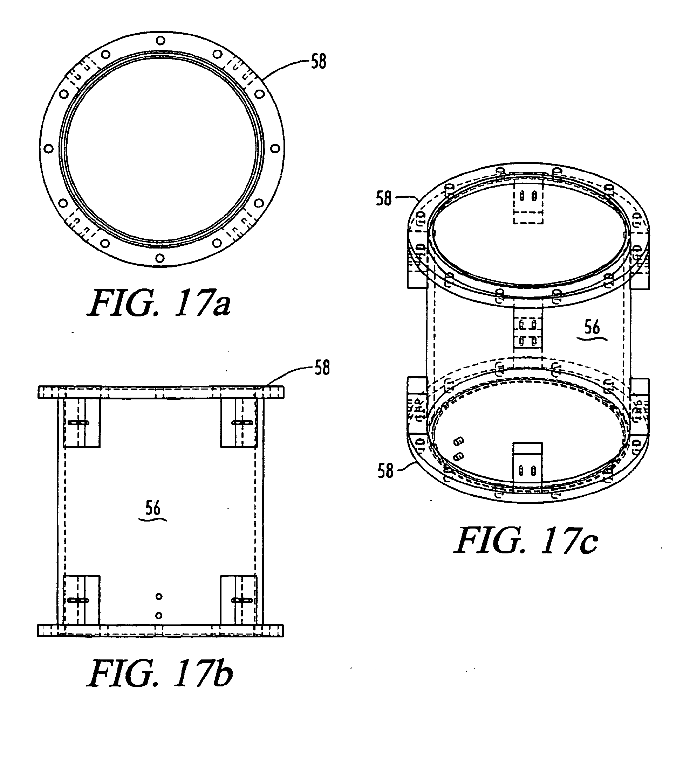

Figs. 16-27 illustrate the structure and internal arrangement of components used with flash head **13** used in both embodiments of the system **10.** Because in a typical installation of system **10,** each flash head **13** will be submerged in a body of water associated with a fixed structure to be protected by the system **10,** each flash head **13** includes a water proof protective outer housing **56** (shown in Fig. 16) having an opening at one end covered by a light transmissive lens **57** sealed with a circumferential retaining ring **58,** a lens shim **73,** and o-ring seal **75.** In a preferred embodiment of the flash head **13,** the housing **56** (see Fig. 17a, 17b, and 17c) will be fabricated from type 6061 Aluminum.

The lens **57** is made of tempered borosilicate glass, and is curved so as to provide the most effective distribution of light (see Fig. 23). The lens **57** can be made with a diffraction pattern (see Fig. 24) to effectively disperse light in a short, broad pattern or with a clear, refractive mechanism to penetrate a greater distance with the light.

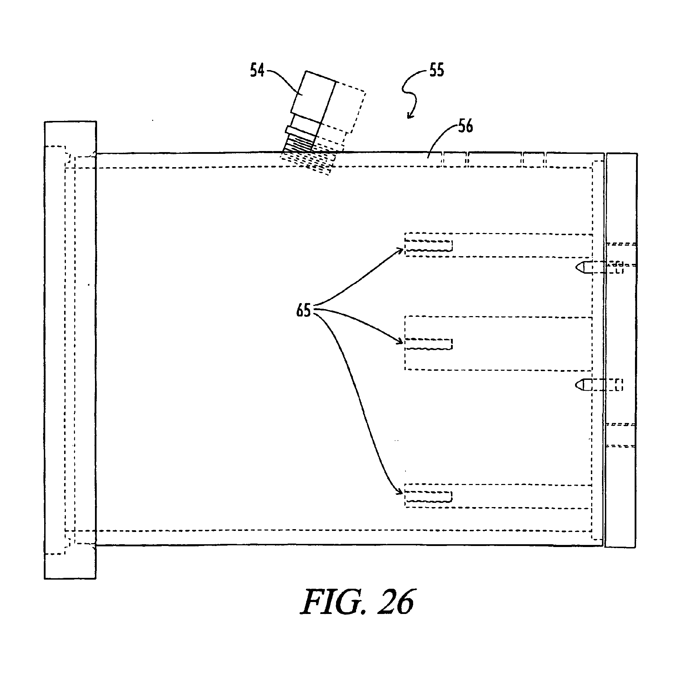

A water tight cable fitting **54** (Figs. 26 and 27) extends from and through housing **56** to allow for entry of the power and control cable **17.** Two parallel plates **55** are welded to housing **56** as trash shields and to protect cable fitting **54.** A gas fitting **76** is also provided to allow for air/gas (including nitrogen gas) injection and evacuation if desired.

The selection and arrangement of components internal to flash head **13** illustrates some of the novel features of system **10,** as implemented in flash head **13,** which optimally adapts the flash heads **13** for extended use in a submerged environment. The flashed illumination from flash head **13** is provided by a flash tube **60,** preferably a xenon flash tube, supported by a flash tube mount **46** (Fig. 25a-25d) and enclosed within a protective Pyrex glass cylinder **49.** Each flash tube **60** will include three rigid electrical connections attached to flash tube mounting lugs **7** supported by flash tube mount **6** (Fig. 18b). The electrical connections are anode **61,** cathode **62,** and trigger input **63.**

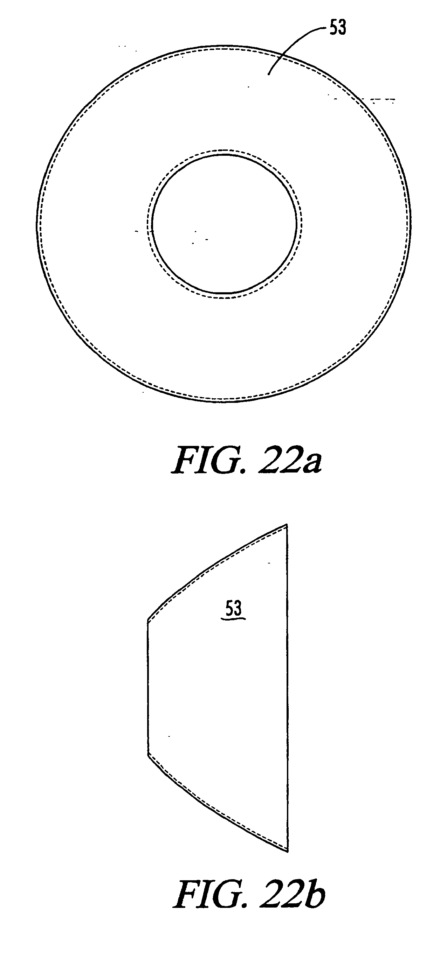

Because of the tremendous energy and heat generated by flash tube **60** when triggered, special novel heat management precautions have been taken in the design of flash head **13.** First, an electrically powered fan **51** (typically a squirrel cage fan) is mounted below flash tube **60** to force air around flash tube **60** through a Pyrex glass air duct **59.** The fan **51** is mounted to the inner portion of the bottom wall of enclosure **56** by blower base plate **52.** An annular parabolic reflector **53** (shown in Figs. 22a and 22b) circumferentially surrounds flash tube cylinder **49** to maximize the amount of light directed outward of flash head **13** through lens **57.** Because of the desire to maximize flash intensity in a submerged location, parabolic reflector **53** includes a centrally disposed annular opening to allow passage of air duct **59,** thus minimizing the loss of light due to impairment of the reflective surface. Also, the parabolic reflector **53** is preferably coated with Everbrite 95® to give a reflectivity of 95%.

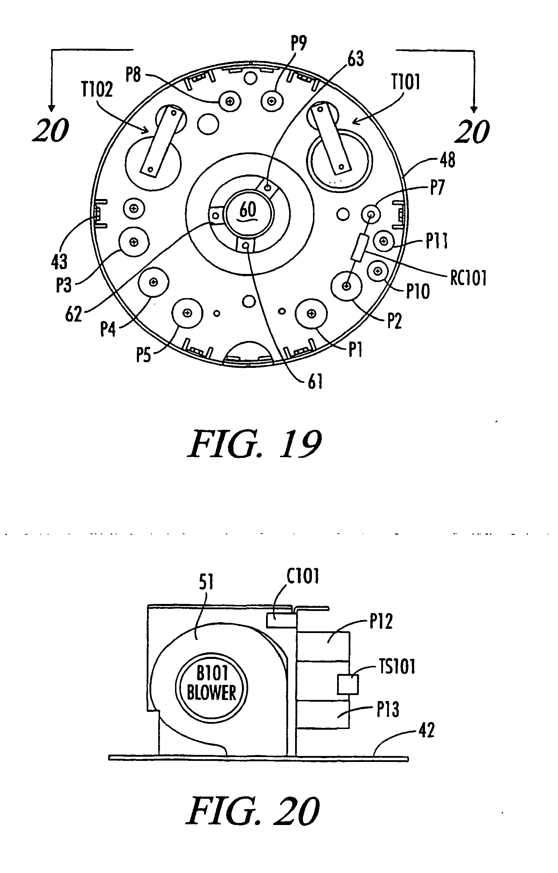

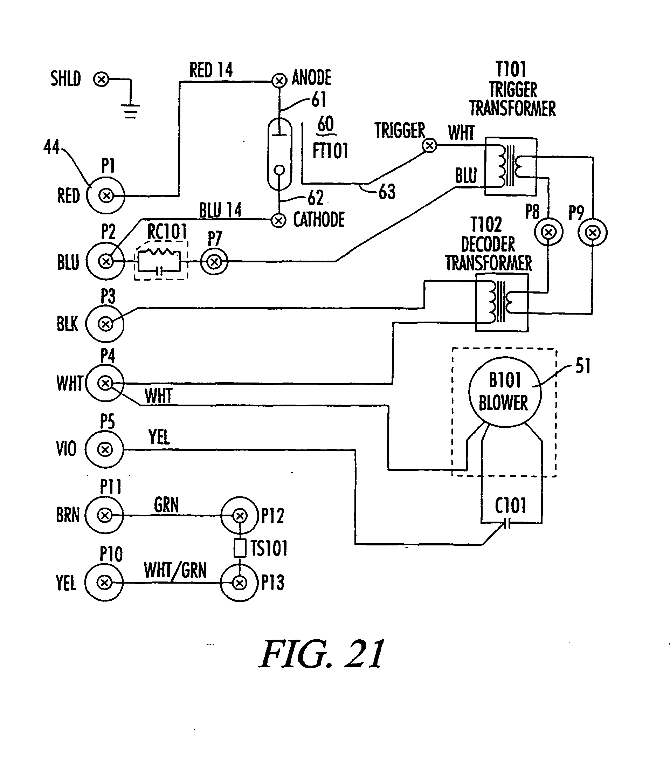

Also, as compared to conventional flash tubes, anode and cathode leads **61** and **62** (see Figs. 19 and 21) have an enlarged diameter, preferably approximately 0.100 inches. As seen on Figs. 18b and 26, a pair of heat sink fins **65** extend radially outward from leads **61** and **62.** These structural features promote heat transfer away from flash tube **60.**

Of course, the air being circulated internal to flash head **13** must be cooled and, because the air cannot be exhausted, a novel air recirculation and cooling system is provided within flash head **13.** From Fig. 19, a shroud **48** and reflector **53** forms an air plenum around flash tube **60.** However, the diameter of plenum shroud **48** is selected so that when installed, an air passageway **64** is defined between the outer surface of plenum shroud 48 and the inner surface of flash head enclosure **56.** Accordingly, air or nitrogen circulated within flash head **13** by fan **51** (Fig. 20) is forced through air passageway **64** where it is cooled by coming into contact with housing **56.** Enclosure **56** is itself cooled by the effects of ambient water temperature when flash head **13** is submerged. Mounting brackets **43** mechanically attach parabolic reflector **53** to plenum shroud **48.** The blower **51** will preferably have a rating of at least 55 CFM at a static pressure of 0.4 inches of water. Furthermore, in a preferred embodiment, the air contained inside the flash head housing **56** is replaced by nitrogen gas, which negates the corrosive effect of ozone in the flash head housing **56.**

Flash tube mount **46,** shroud **48** and blower **51** are secured to a sheet metal weldment **42.** The weldment **42** is attached to three support posts **65** (Fig. 19) welded to housing **56.**

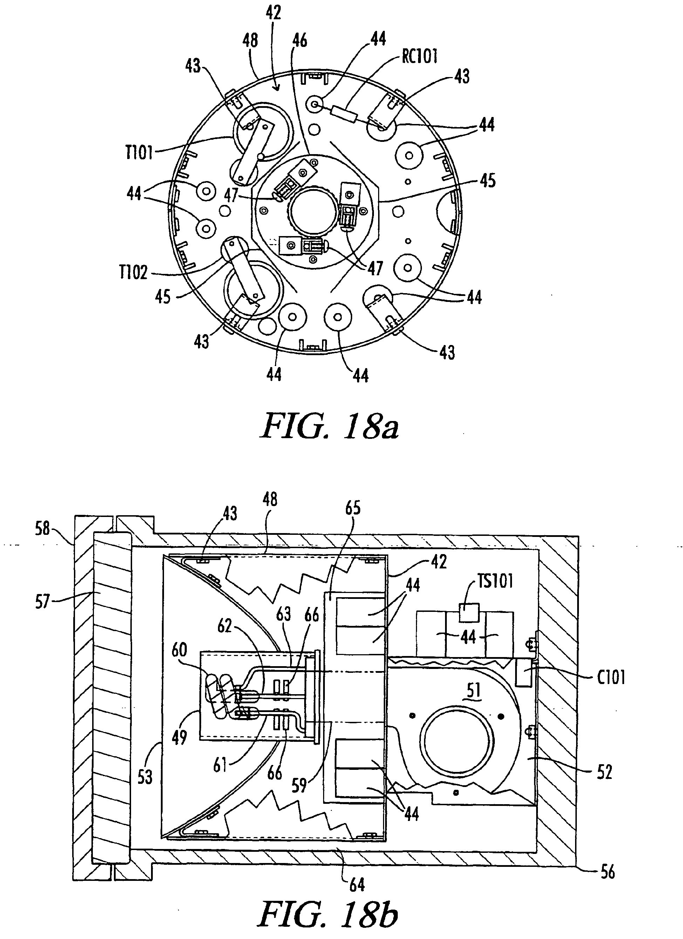

Flash head electrical components, shown in part on Figs. 18a and 18b, and schematically described on Fig. 21, are electrically connected to one or more ceramic posts **44** arranged around and attached to the bottom wall of plenum shroud **48.**

One of the components mounted interior to flash head **13** but outside the space enclosed by plenum shroud **48** is a temperature sensor **TS101.** Temperature sensor **TS101** provides electrical signals responsive to the internal flash head temperature for use by system control unit **5** in monitoring and regulating the operation of each flash head **13.** In a preferred embodiment of flash head **13** as described, the safe internal temperature operating range is 14 - 122 degrees F.

To provide some level of thermal isolation of the electronic components of flash head **13** from the heat generating effects of flash tube **60,** a pair of opposed heat shields **45** extend vertically from the lower wall of plenum shroud **48** and up along the outer wall of duct **59** to a distance above the upper margin of the installed electrical components.

Fig. 21 is a schematic diagram of the electrical components and interconnections in flash head **13.** A series of wire terminals **P1** through **P11** (each of which corresponds to a ceramic post **44** on Fig. 18a) provide a connection point for the individual flash head power and communication wires contained within flash head power and control cable **17** (Figs. 1 and 3). Thus, flash tube power is brought to the anode and cathode of flash tube **60** through terminals **P1** and **P2,** respectively. The cathode power from flash head control unit **99** is also connected to the secondary winding on trigger transformer **T101,** through an R-C filter network **RC101.** The flash tube trigger signal is received from flash head control unit **12** at terminals **P3** and **P4** and, through de-coupling transformer **T102,** drives the primary winding of trigger transformer **T101** connected at terminals **P8** and **P9.**

Terminals **P4** and **P5** of flash head **13** provide power to fan **51,** at blower motor start-up capacitor **C101.** Finally, temperature data is transmitted back to flash head control unit 5 from temperature sensor **TS101** through wires terminating in terminals **P10** and **P11.**

Fig. 19 shows the physical location within flash head 13 of the wire terminals **P1** through **P11** and the other electrical components of Fig. 21.

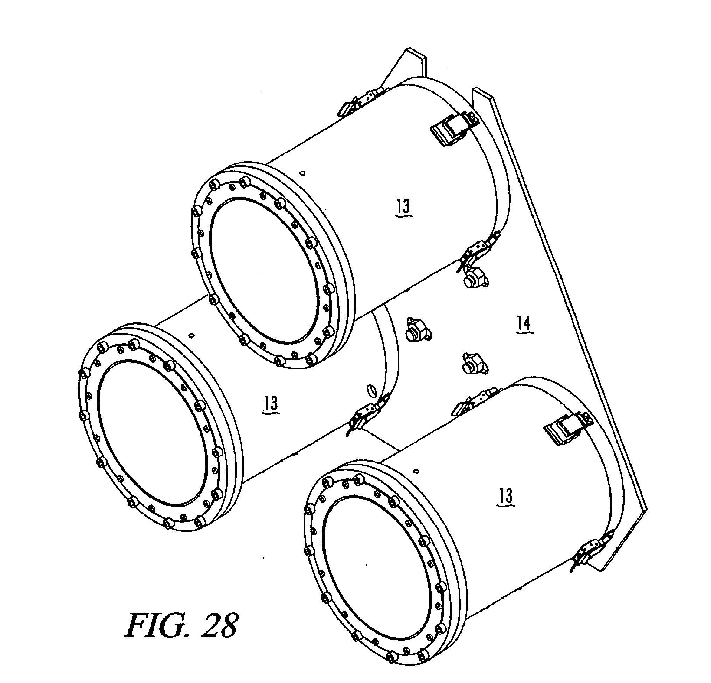

Fig. 28 illustrates the flash head **13** configuration for the second embodiment. The flash heads **13** are mounted together in groups of three as a tri-pack on a flash head mounting plate **14,** with the electrical connection between each flash head control unit and each flash head tri-pack being a single cable **17.** The mounting plate **14** has three circular indentations **16** at each of the three corners that allows for secure locking of the circular flash head housing **56** to the mounting plate **14.** The arrangement of the flash heads **13** in a triangular shape allows for the most effective dispersion of light while under water. Further, by using the tri-pack arrangement of flash heads **13,** each flash head **13** of the tri-pack will be illuminated during one-third of a standard illumination duty cycle. Because each flash head **13** operates during one-third of the duty cycle, the system **10** can produce faster flash rates than when each flash head **13** operated using the entire duty cycle. This furthermore reduces the operation time of the individual flash heads **13** by two-thirds, which allows for increased reliability of the flash tubes **60** and longer life for the flash tubes **60.**

### SYSTEM OPERATION

The communications in the first embodiment between the system control unit **5** and the flash head control units **99,** one for each group of 1 to 32 flash heads **13,** will consist of a standard RS-485 2-wire communications link. There will be a separate link for each flash head control unit **99.**

In the second embodiment, the control center **12** has two serial communication interfaces for interconnecting to a host computer and running diagnostics. The first port is based on the RS485 standard and allows any number of computers to be daisy-chained to the system control unit **5** for configuration and data collection. A second communication port is based on the RS232 standard and is used for interfacing to the serial port of the personal computer of the system control unit **5** in order to run diagnostics by utilizing any type of terminal emulator. The communications between the system control unit **5** and the flash head control unit **99** will consist of a standard RS-485 2-wire communications link.

The format of all messages passed between a system control unit 5 and the flash head control units **99** will be consistent in both embodiments. Address 0 is reserved for use in broadcast messages. Flash head control units **99** will use their addresses in both sending and receiving messages. The system control unit 5 will listen to all messages and therefore requires no specific address. It will use the address to determine which flash head control unit **99** is sending a message.

Each message will have the following Message Format:
- Byte 0:: Unit Address Message is for/from
- Byte 1:: Message Type
- Byte 2-3:: Message Length
- Byte 4-(n-1):: Message Data
- Byte n:: Checksum

The communication scheme requires most messages to be acknowledged upon receipt. Messages requesting a response will accept the response as the acknowledgment. Other than broadcast or poll messages, messages not requesting a response require a separate ACK (message acknowledged) or NAK (message not acknowledged) to be sent. Broadcast messages are addressed to all devices so there is no use in one particular device responding. Poll Messages are sent by the system control unit 5 to a flash head control unit **99** to determine whether the flash head control unit **99** has new or changed information pending (i.e. an alarm or warning condition that has occurred). If a flash head control unit **99** has no information pending, it can ignore (not respond to) a Poll Message. If it has information pending, it should send the message when it receives a Poll.

ACK or NAK responses are based on several items: 1) correct checksum received; 2) correct #-of-bytes received (matches message length); 3) no communications errors detected (parity error, SW or HW overrun errors, etc.). ACKnowledging (or NAKing) the receipt of a message is performed regardless of whether the message type is processed by the receiving unit. This allows new messages to be created for other devices on the same communications link without modifying the software in all units. The capability to send variable length messages also allows new information required for one type of system control unit 5 to be added to an existing message without changing the software in all units. System control units 5 without upgraded software will only process the information they know about and will ignore new information added to the end of the message.

Communications messages from the system control unit 5 to the flash head control units 12 will include:
1. Set General Parameters (i.e. Date, Time, etc.);
2. Synchronize Now (begin flashing according to preset configuration parameter set up by flash sequence commands;
3. Set Current Flash Head Configuration for each flash head 13 including: a) Flashing or not; b) flash rate; c) flash intensity; d) Flash head A or B, for flash wavelength/color selection; e) time delay from Sync signal used for sequencing flashes;
4. Set Accessory Relays On/Off for: a) air bubble curtain: b) water jets; c) flash head/flash head control unit cooling fan 51:
5. Reset alarm and/or warning condition;
6. Request General Parameters (i.e. Date, Time, etc.);
7. Request Software Version;
8. Request Current Flash Head Configuration per flash head 13;
9. Request the status of Accessory Relays On/Off; and
10. Request status of other inputs including water temperature (all depths).

The communications from each flash head control unit 99 to the system control unit 5 include:
1. General Parameters (i.e. date, time, etc.).
2. Software Version.
3. Alarm and Warning conditions.
4. Current Flash Head Configuration per flash head 13.
5. Status of Accessory Relays On/Off.
6. Status of other inputs including water temperature.

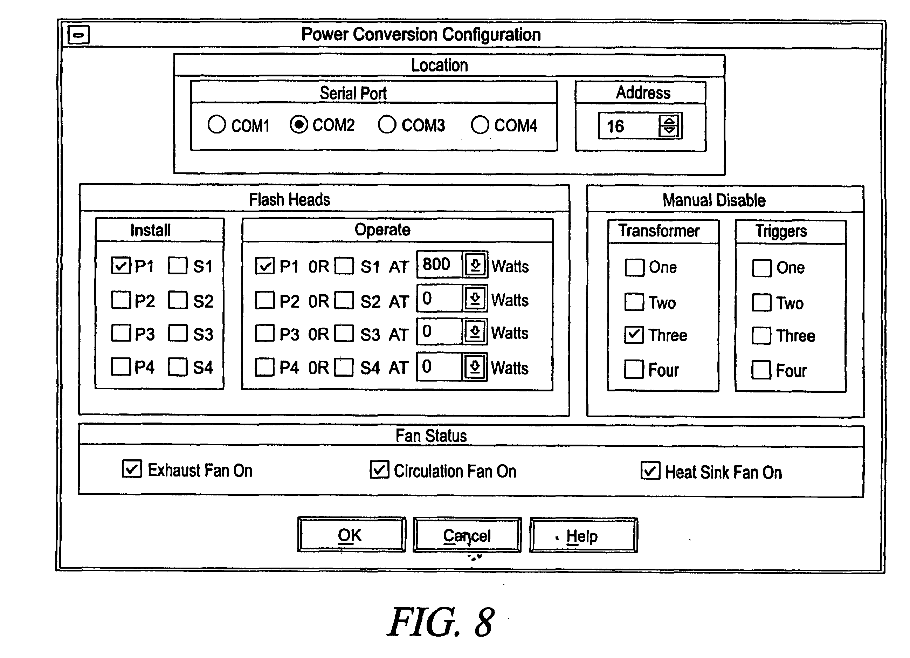

For operator convenience and flexibility at system control unit **5,** the system application software loaded in personal computer **30** provides a user friendly graphical user interface (GUI) at video display **32,** such as provided by the Windows operating system. Figs. 8, 9, 10, and 11 illustrate typical GUI screens presented in the first embodiment of the system **10** to the system operator at video display 32. Thus, Fig. 8 is the screen that would be used by the operator when configuring communications with an operation of a specific flash head control unit **99.** The mouse selectable options available to the user on this screen include the enabling or disabling of a particular flash head **13** attached to that flash head control unit **99,** establishing the communications port location for that flash head control unit **99,** establishing the system address, enabling or disabling trigger and transformer monitoring functions, and enabling or disabling operation of the exhaust, circulation, and heat sense fans (blowers **B1 - B6).**

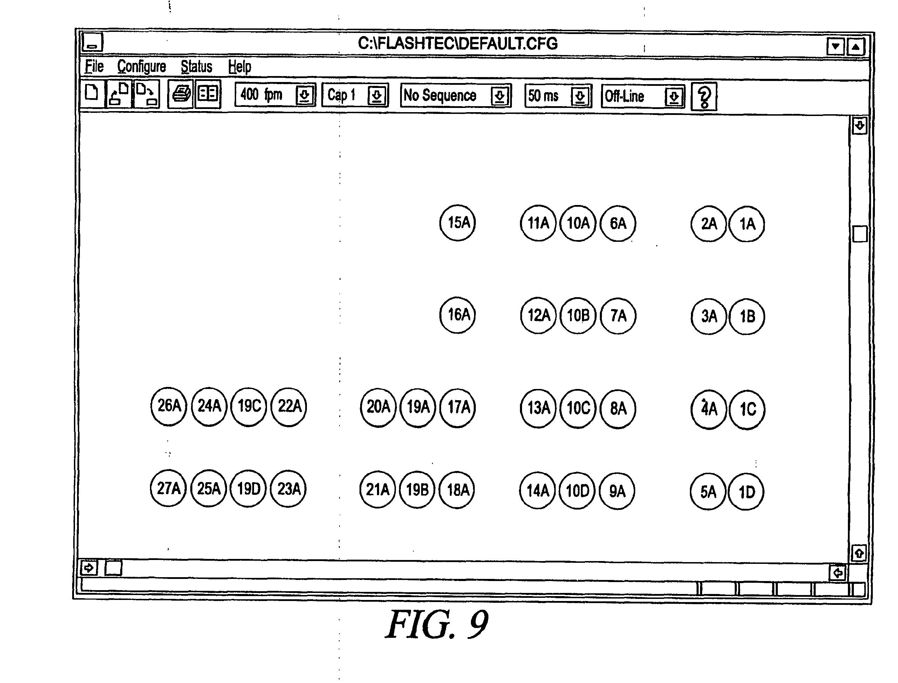

Fig. 9 is the GUI screen presented to the operator for configuration of the flash sequence involving all of the flash heads **13** attached to system **10.** During this operation, the operator can set the flash order, flash timing, flash spacing, and similar sequence parameters.

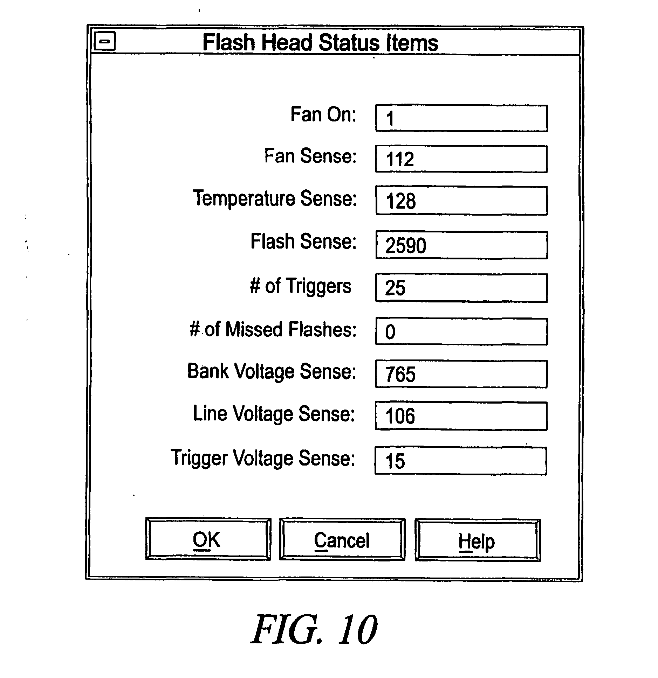

Fig. 10 is the GUI screen presented to the operator at the time of configuration of a specific flash head **13,** connected to a particular flash head control unit **99.** Using the screen of Fig. 10, the operator can either use overall system settings for the flash head or override the system settings, including selection of flash color (flash head A or B), flash rate, flash sequence delay, flash intensity, and (optionally) flash head position, which is adjusted using water jets (not shown) associated with that flash head **13.** Also, flash head triggering can be enabled or disabled as well as flash head cooling fan **51** operation.

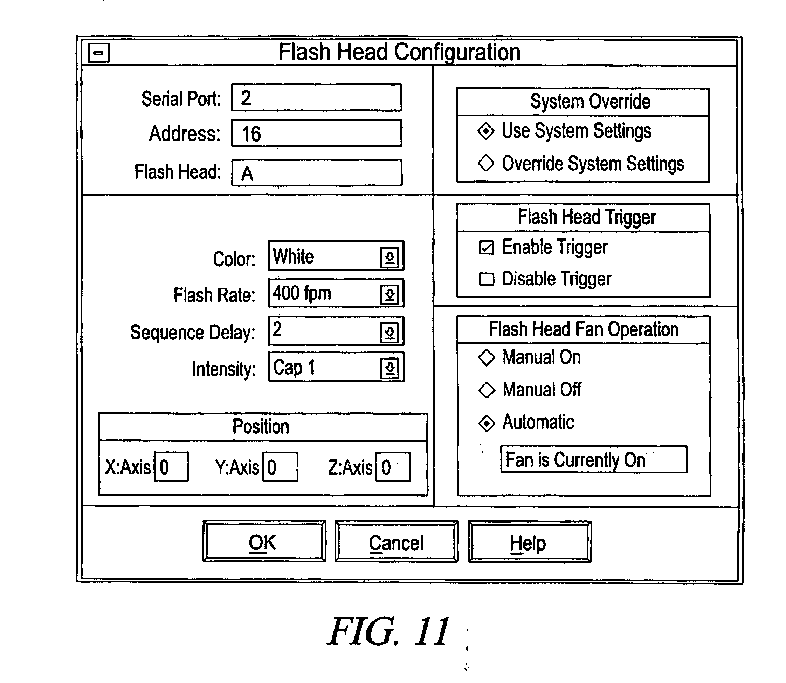

Finally, Fig. 11 is the GUI screen presented to the operator at system control unit **5** (or at a remote control location) reporting the status and function history of a particular flash head **13** over a particular operational interval.

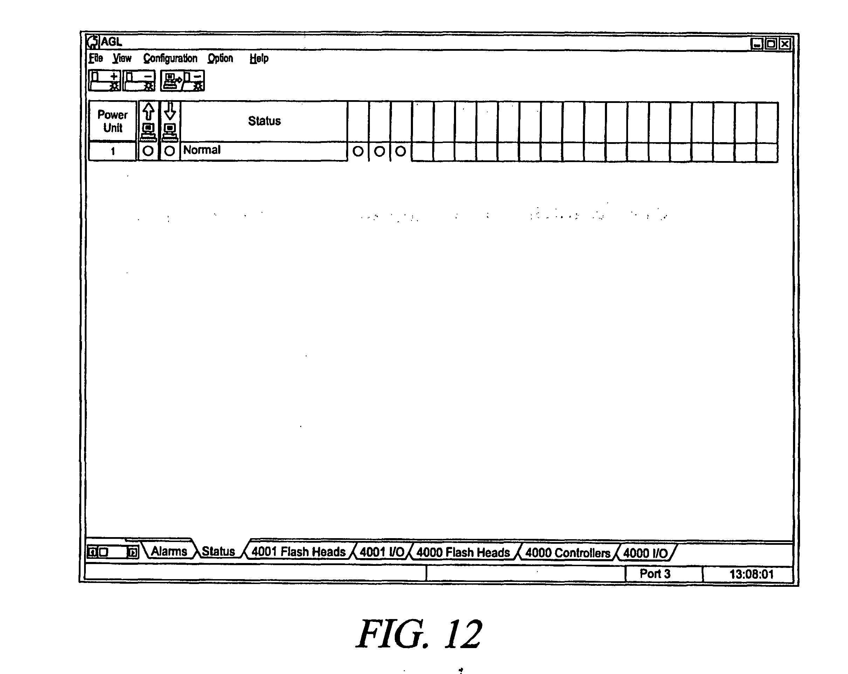

In the second embodiment of the system, a user friendly graphical user interface (GUI) with a tabular format is displayed at video display **32,** such as provided by the Windows operating system. The tabular format (shown in Figs. 12, 13, 14. and 15) allows the user to see the various controls at the bottom of the screen and allows for quick access of information, and further allows easy access to each section of control information for comparison to other values by using the mouse to choose the desired tab.

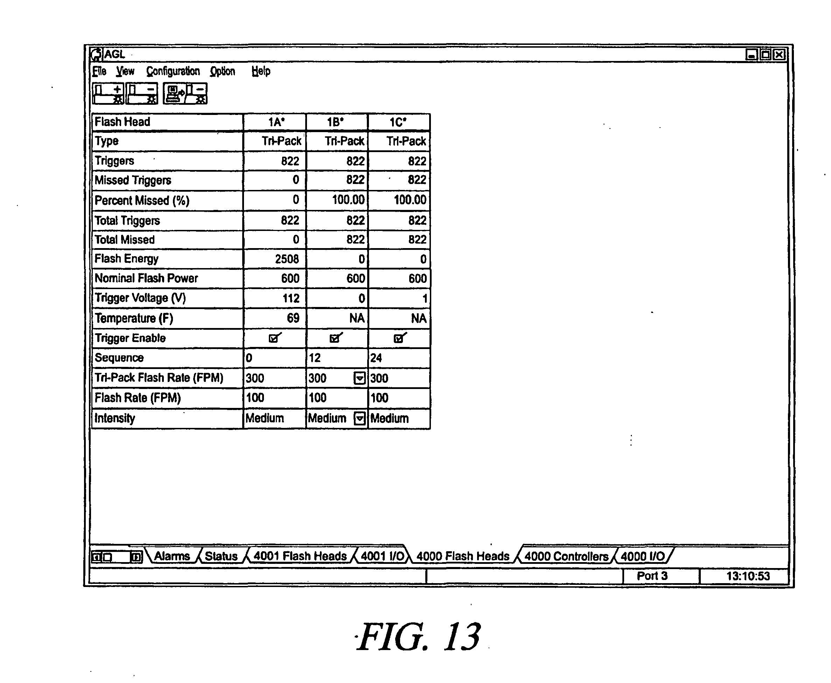

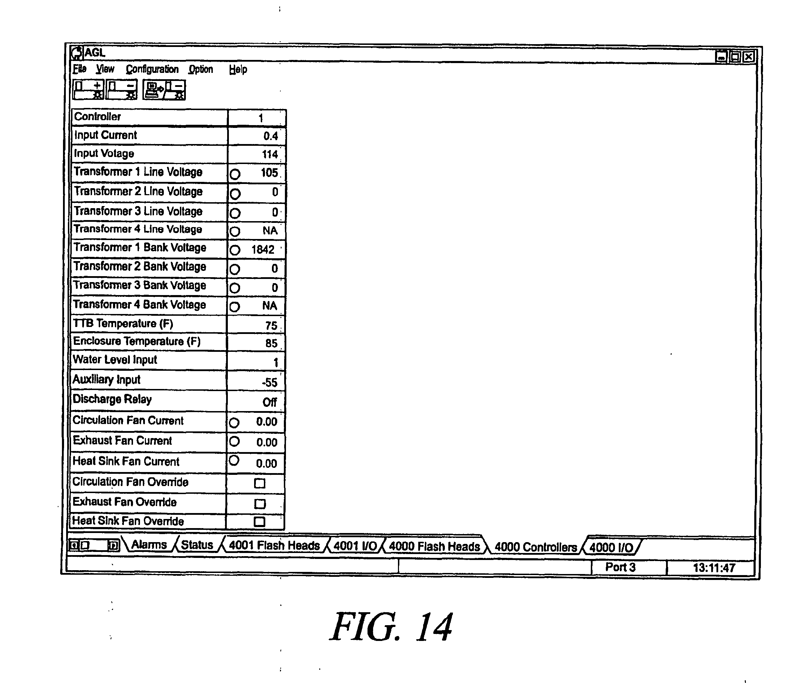

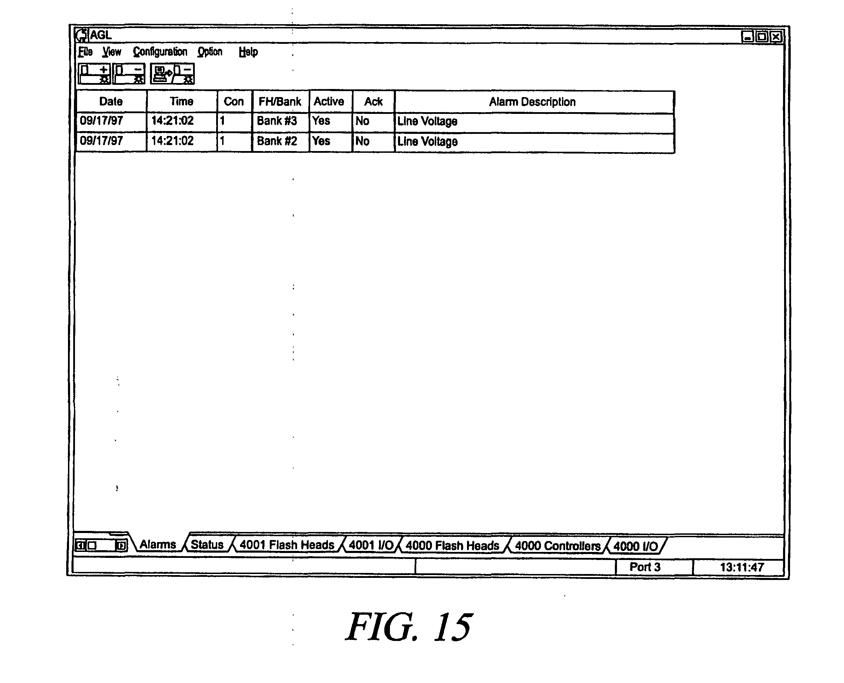

Figs. 12-15 illustrate typical GUI screens presented to the system operator at video display **32.** Fig. 12 is the GUI screen that would be used by the operator when checking the status of a flash head **13.** Fig. 13 is the GUI screen presented to the operator for monitoring real time data for one flash head **13** of the tri-pack. Fig. 14 is the GUI screen presented to the operator that displays a typical status screen monitoring real-time data for a single transformer bank. Finally, Fig. 15 is the GUI screen presented when there is a system alarm. The alarms displayed are removed from the list automatically once the alarm has been acknowledged by the operator or once the malfunctioned element is repaired.

### REMOTE CONTROL OPERATION

Preferably, the system **10** and system control unit 5 of both embodiments will be configured for optional remote operation by use of remote control and monitoring software installed on a personal computer that allows a user to dial into (via modem and telephone line), control and monitor system **10** from a remote location. This program can be used in place of or in addition to on-site personnel located at a system control unit **5** located at the system site.

The remote control and monitoring software handles the same communications and provides the same level of control and monitoring as the software used at system control unit **5.**

### TYPICAL SYSTEM INSTALLATION

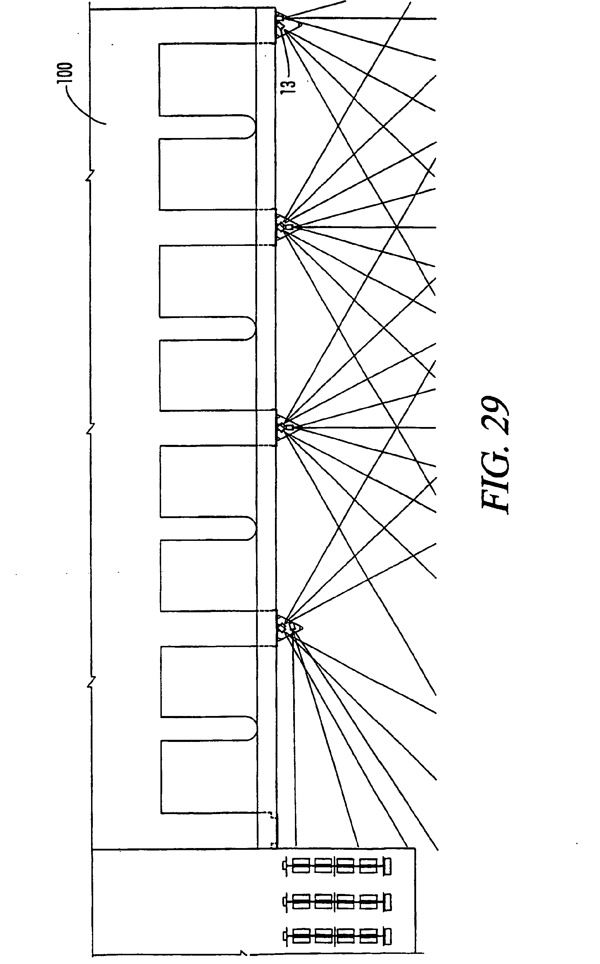

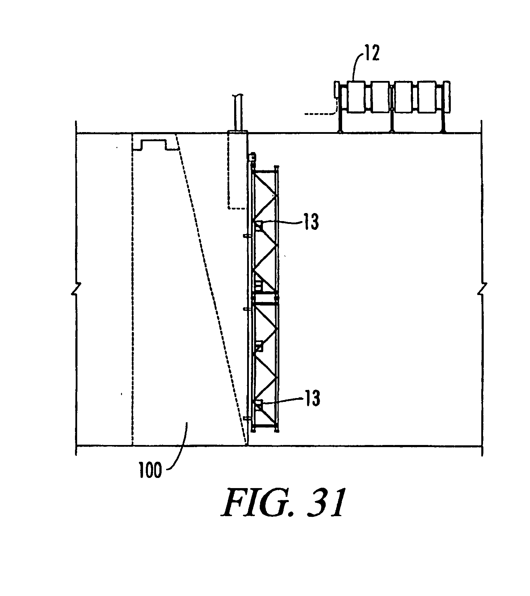

Figs. 29, 30, and 31 illustrate a typical installation of both embodiments of the system **10** near the underwater portion of a hydroelectric facility **100,** including four turbine intakes. Four flash head mounting racks **70a, 70b, 70c,** and **70d** extend vertically down the side wall of the structure **100.** Each flash head mounting rack **70** supports multiple flash heads **13** to provide a preferred pattern of flash illumination for fish who may approach the structure.

In the first embodiment, a plurality of flash head control units **99** are attached on top of the structure **100** proximate the flash head racks **70** and connected by cables **15** and **17** (Fig. 1). Preferably, the end portions of racks **70** are not submerged are attached to structure **100** in a hinged arrangement flash heads **13** can be accessed above water for any maintenance needed.

In the second embodiment, the trailer **150** containing the control center **12** is located near the top of the structure **100** and connected to the tri-packs of flash heads **13** by cables **17.** The tri-packs of flash heads **13** are bed-railed to flash head mounting racks **70a, 70b, 70c,** and **70d** that extend vertically down the side wall of the structure **100.** Each flash head mounting rack **70** supports multiple tri-packs of flash heads **13** to provide a preferred pattern of flash illumination for fish who may approach the structure.

Preferably, the end portions of the racks **70** for both embodiments are not submerged and are attached to the structure **100** in a hinged arrangement so that the flash heads **13** can be accessed above water for any maintenance needed.

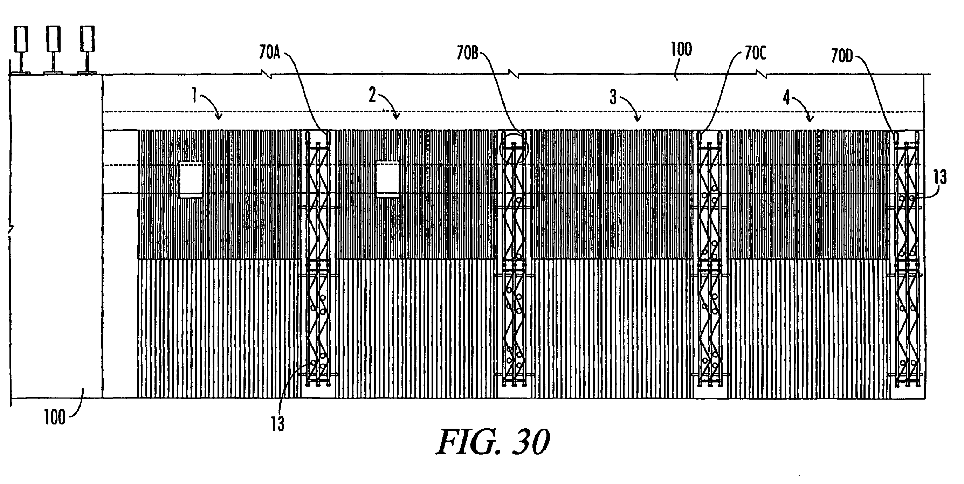

In a typical installation such as that shown in Figs. 29, 30, and 31, the flash heads **13** are operated at three hundred forty (340) flashes per minute with a typical flash intensity of 400 watts. There are a total of thirty-six (36) flash heads 13. This creates a "wall of light" in front of the turbine intakes. Assuming that turbine intakes **3** and **4** on Fig. 30 have fish bypass areas that allow for safe passage, fish can be guided to those areas by flashing the flash heads **13** on the flash head racks **70** adjacent to turbine intakes **1** and **2** together. In addition, the flash intensities of the flash heads **13** on the flash head racks **70** adjacent to turbine intakes **3** and **4** can be gradually decreased as the depth is decreased, directing the fish upward towards the safe passage area.

Thus, although there have been described particular embodiments of the present invention of a new and useful controllable stroke light system for control of fish, it is not intended that such references be construed as limitations upon the scope of this invention except as set forth in the following claims. Further, although there have been described certain operational parameters used in the preferred embodiment, it is not intended that such dimensions be construed as limitations upon the scope of this invention except as set forth in the following claims.

## Claims

1. A system for directing the movement of fish in water near a man made structure, the system comprising:
a. a plurality of flash heads (13), each flash head including a flash tube means for generating one or more light pulse visible to fish proximate to the flash head, and a waterproof housing (56) enclosing the flash tube means;
b. a system control unit (5) operatively connected to each flash head and including processor means for causing the flash tube means to generate the light pulses in a predetermined flash sequence; and
c. the system control unit further comprising a command interface means for accepting system commands from an operator of the system, the system commands including flash sequence commands, the processor means including sequence command processing means for varying and executing the flash sequence in response to the flash sequence commands.

2. The system of Claim I, the system control unit further comprising system monitor means for providing system status signals to the operator, the system status signals including flash sequence status signals corresponding to the flash sequence being executed by the processor means.

3. The system of Claim 2, wherein the processor means comprises a personal computer, the command interface means comprises a keyboard operatively connected to the personal computer, and the system monitor means comprises a video display operatively connected to the personal computer.

4. The system of Claim 3, the system control unit further comprising flash head signal receiver means for receiving flash head status signals from each flash head, the flash head status signals including a signal indicating whether a flash head is flashing or not flashing, and wherein the video system monitor means includes means for displaying the flash head status signals.

5. The system of Claim 4, the system commands entered by the operator including flash intensity commands, the system control unit further comprising flash intensity control means to adjust the intensity of the light pulse generated by each flash tube means in response to the flash intensity commands, and wherein the system status signals displayed on the video display include signals indicative of the flash intensity of each flash tube means.

6. The system of Claim 5, the flash head signal receiver means comprising a current sense transformer.

7. The system of Claim 5, the system commands entered by the operator including flash color commands, the system control unit further comprising flash color control means to adjust the color of the light pulses generated by each flash tube means in response to the flash color commands, and wherein the system status signals displayed on the video display include signals indicative of the flash color of each flash tube means.

8. The system of Claim 5 further comprising flash head temperature control means to monitor and control the internal temperature of each flash head.

9. The system of Claim 8 wherein the flash intensity control means is responsive to the flash head temperature control means.

10. The system of Claim 9 wherein the flash sequence includes a flash rate for each flash tube means and wherein the personal computer includes means to adjust the flash rate for one or more flash heads in response to the flash head temperature control means.

11. The system of Claim 9 wherein the flash head temperature control means comprises a blower internal to each flash head.

12. The system of Claim 9, the system control unit further comprising at least one flash head control unit operatively connected to each flash head and to the processor means.

13. The system of Claim 1, the waterproof housing further comprising cooling means mounted internal to the housing for cooling the flash head.

14. The system of Claim 13, the flash head cooling means comprising a blower and each flash head further comprising an air plenum means for directing air around the flash tube.

15. The system of Claim 14, each flash head further comprising an air passageway between the side wall of the air plenum means and the housing.

16. The system of Claim 15, each flash head further comprising a light reflector, the light reflector forming part of the air plenum.

17. The system of Claim 16, each flash tube having electrode leads, and the electrode leads including cooling fins extending therefrom.

18. The system of Claim 16, the light reflector having a parabolic shape formed around and extending upward from the flash tube.

19. The system of Claim 1, further comprising air curtain means to generate air bubbles proximate one or more of the flash heads.

20. The system of Claim 19 further comprising submerged water jet means to remove scum from one or more flash head lenses by directing a stream of water at the lens.

21. The system of Claim 20 further comprising temperature probe means positioned proximate one or more flash heads to provide a signal to the control means which is response to water temperature.

22. The system of claim 1, wherein the system control unit is installed in a trailer to allow mobile transportation of the system.

23. The system of Claim 1, the system control unit further comprising at least one flash head interface circuit operatively connected to each flash head and to the processor means.

24. The system of Claim 23, wherein the flash heads are mounted in a tri-pack configuration to a flash head mounting plate.

25. The system of Claim 1, wherein the flash heads being filled with nitrogen gas.

26. The system of Claim 25, the flash head cooling means comprising a fan and each flash head further comprising a gas plenum means for directing the nitrogen gas around the flash tube.

27. The system of Claim 26, each flash head further comprising a gas passageway between the side wall of the gas plenum means and the flash head housing.

28. The system of Claim 27, each flash head further comprising a light reflector, the light reflector forming part of the gas plenum.

29. The system of Claim 28, each flash tube having electrode leads, and the electrode leads including cooling fans extending therefrom.

30. The system of Claim 22 wherein each of the components of the system are adapted to be stored and transported in the trailer for mobile access to the structure by the system.

31. The system of Claim 1 wherein the flash head control unit comprises multiple flash head interface circuits and multiple timing and trigger boards, each timing and trigger board being located on a motherboard and one or more daughter cards, the motherboard is attached to a mobile housing, adapted for storing and transporting the system, in a first area of the housing, each daughter card electrically and mechanically connected to the motherboard.

32. The system of Claim 31 wherein the flash head interface circuit comprises a bank of capacitors which are mounted on a capacitor rack attached to the mobile housing in a third area of the mobile housing.

33. The system of Claim 32 wherein the flash head interface circuit further comprises a bank of transformers which are mounted on a transformer rack attached to the mobile housing in a fourth area of the mobile housing.

34. The system of Claim 33 wherein the electrical connection between the flash heads and the flash head control unit is provided by a flash head termination rack that is attached to the mobile housing in a fifth area of the mobile housing.

35. The system of Claim 31 wherein each flash head control unit is operatively connected to three flash heads mounted on a flash head mounting plate in a tri-pack configuration, and the electrical connection between each flash head control unit and each flash head tri-pack comprises a single cable.

36. A method of directing the movement of fish in a body of water near a structure, comprising the steps of:
a. placing a plurality of flash heads in a pattern beneath the surface of the body of water near the structure;
b. electrically connecting the flash heads to a system control unit, and
c. causing the system control unit to generate a series of flash head control signals to the flash heads whereby the flash heads will produce a series of flashes visible to the fish in a predetermine sequence.

37. The method of claim 36, further comprising the step of transporting the flash heads and the system control unit to the structure in a mobile trailer.

38. The method of claim 36, further comprising the step of providing each flash head with an internal atmosphere comprising substantially nitrogen.

39. The method claim 36, further comprising the step of arranging and operating the flash heads in a tri-pack configuration of three flash heads.

## Patentansprüche

1. System zum Leiten der Bewegung von Fischen in Wasser in der Nähe eines vom Menschen geschaffenen Bauwerks, wobei das System umfasst:
a) eine Vielzahl von Blitzköpfen (13), wobei jeder Blitzkopf eine Blitzröhreneinrichtung zum Erzeugen eines oder mehrerer Lichtimpulse, die für Fische in der Nähe des Blitzkopfes sichtbar sind, und ein wasserdichtes Gehäuse (57) enthält, das die Blitzröhreneinrichtung umschließt;
b) eine Systemsteuereinheit (5), die funktionell mit jedem Blitzkopf verbunden ist und eine Prozessoreinrichtung enthält, die bewirkt, dass die Blitzröhreneinrichtung die Lichtimpulse in einer vorgegebenen Blitzfolge erzeugt; und
c) wobei die Systemsteuereinheit des Weiteren eine Befehlsschnittstelleneinrichtung umfasst, die Systembefehle von einem Bedienenden des Systems annimmt, und die Systembefehle Blitzfolgenbefehle einschließen und die Prozessoreinrichtung eine Folgenbefehl-Verarbeitungseinrichtung enthält, die die Blitzfolge in Reaktion auf die Blitzfolgebefehle variiert und ausführt.

2. System nach Anspruch 1, wobei die Systemsteuereinheit des Weiteren eine Systemüberwachungseinrichtung umfasst, die dem Bedienenden Systemstatussignale bereitstellt, wobei die Systemstatussignale Blitzfolge-Statussignale einschließen, die der Blitzfolge entsprechen, die durch die Prozessoreinrichtung ausgeführt wird.

3. System nach Anspruch 2, wobei die Prozessoreinrichtung einen Personalcomputer umfasst, die Befehlsschnittstelleneinrichtung eine Tastatur umfasst, die funktionell mit dem Personalcomputer verbunden ist, und die Systemüberwachungseinrichtung eine Videoanzeige umfasst, die funktionell mit dem Personalcomputer verbunden ist.

4. System nach Anspruch 3, wobei die Systemsteuereinheit des Weiteren eine Blitzkopfsignal-Empfängereinrichtung umfasst, die Blitzkopf-Statussignale von jedem Blitzkopf empfängt, und die Blitzkopf-Statussignale ein Signal enthalten, das anzeigt, ob ein Blitzkopf blitzt oder nicht blitzt, und
wobei die Video-Systemüberwachungseinrichtung eine Einrichtung zum Anzeigen der Blitzkopf-Statussignale enthält.

5. System nach Anspruch 4, wobei die durch den Bedienenden eingegebenen Systembefehle Blitzstärke-Befehle enthalten und die Systemsteuereinheit des Weiteren eine Blitzstärke-Steuereinrichtung umfasst, die die Stärke des durch jede Blitzröhreneinrichtung erzeugten Lichtimpulses in Reaktion auf die Blitzstärke-Befehle reguliert, und wobei die auf der Videoanzeige angezeigten Systemstatussignale die Blitzstärke jeder Blitzröhreneinrichtung anzeigen.

6. System nach Anspruch 5, wobei die Blitzkopfsignal-Empfängereinrichtung einen Stromrichtungsumwandler umfasst.

7. System nach Anspruch 5, wobei die durch den Bedienenden eingegebenen Systembefehle Blitzfarben-Befehle enthalten und die Systemsteuereinheit des Weiteren eine Blitzfarben-Steuereinrichtung umfasst, die die Farbe der von jeder Blitzröhreneinrichtung erzeugten Lichtimpulse in Reaktion auf die Blitzfarben-Befehle regulieren, und wobei die auf der Videoanzeige angezeigten Systemstatussignale Signale enthalten, die die Blitzfarbe jeder Blitzröhreneinrichtung anzeigen.

8. System nach Anspruch 5, das des Weiteren eine Blitzkopftemperatur-Steuereinrichtung umfasst, die die Innentemperatur jedes Blitzkopfes überwacht und steuert.

9. System nach Anspruch 8, wobei die Blitzstärke-Steuereinrichtung auf die Blitzkopftemperatur-Steuereinrichtung anspricht.

10. System nach Anspruch 9, wobei die Blitzfolge eine Blitzrate für jede Blitzröhreneinrichtung enthält und der Personalcomputer eine Einrichtung enthält, die die Blitzrate für einen oder mehrere Blitzköpfe in Reaktion auf die Blitzkopftemperatur-Steuereinrichtung reguliert.

11. System nach Anspruch 9, wobei die Blitzkopftemperatur-Steuereinrichtung ein Gebläse im Inneren jedes Blitzkopfes umfasst.

12. System nach Anspruch 9, wobei die Systemsteuereinheit des Weiteren wenigstens eine Blitzkopf-Steuereinheit umfasst, die funktionell mit jedem Blitzkopf und mit der Prozessoreinrichtung verbunden ist.

13. System nach Anspruch 1, wobei das wasserdichte Gehäuse des Weiteren eine Kühleinrichtung umfasst, die in dem Inneren des Gehäuses angebracht ist, um den Blitzkopf zu kühlen.

14. System nach Anspruch 13, wobei die Blitzkopf-Kühleinrichtung ein Gebläse umfasst und jeder Blitzkopf des Weiteren eine Luftkammereinrichtung zum Leiten von Luft um die Blitzröhre herum umfasst.

15. System nach Anspruch 14, wobei jeder Blitzkopf des Weiteren einen Luftkanal zwischen der Seitenwand der Luftkammereinrichtung und dem Gehäuse umfasst.

16. System nach Anspruch 15, wobei jeder Blitzkopf des Weiteren einen Lichtreflektor umfasst und der Lichtreflektor Teil der Luftkammer ist.

17. System nach Anspruch 16, wobei jede Blitzröhre Elektroden-Zuleitungen aufweist und die Elektroden-Zuleitungen Kühlrippen enthalten, die sich von ihnen aus erstrecken.

18. System nach Anspruch 16, wobei der Lichtreflektor eine parabolische Form hat, die um die Blitzröhre herum ausgebildet ist und sich von ihr nach oben erstreckt.

19. System nach Anspruch 1, das des Weiteren eine Luftschleiereinrichtung umfasst, die Luftblasen nahe an einem oder mehreren der Blitzköpfe erzeugt.

20. System nach Anspruch 19. das des Weiteren eine versenkte Wasserstrahleinrichtung umfasst, die Schlamm von einer oder mehreren Blitzkopf-Linsen entfernt, indem sie einen Wasserstrom auf die Linse richtet.

21. System nach Anspruch 20, das des Weiteren eine Temperatursondeneinrichtung umfasst, die nahe an einem oder mehreren Blitzköpfen angeordnet ist, um der Steuereinrichtung ein Signal bereitzustellen, das auf Wassertemperatur reagiert.

22. System nach Anspruch 1, wobei die Systemsteuereinheit in einem Anhänger installiert ist, um mobilen Transport des Systems zu ermöglichen.

23. System nach Anspruch 1, wobei die Systemsteuereinheit des Weiteren wenigstens eine Blitzkopf-Schnittstellenschaltung umfasst, die funktionell mit jedem Blitzkopf und mit der Prozessoreinrichtung verbunden ist.

24. System nach Anspruch 23, wobei die Blitzköpfe in einer Dreiergruppen-Konstruktion an einer Blitzkopf-Anbringungsplatte montiert sind.

25. System nach Anspruch 1, wobei die Blitzköpfe mit Stickstoffgas gefüllt sind.

26. System nach Anspruch 25, wobei die Blitzkopf-Kühleinrichtung ein Gebläse umfasst und jeder Blitzkopf des Weiteren eine Gaskammereinrichtung umfasst, die das Stickstoffgas um die Blitzröhre herumleitet.

27. System nach Anspruch 26, wobei jeder Blitzkopf des Weiteren einen Gaskanal zwischen der Seitenwand der Gaskammereinrichtung und dem Blitzkopf-Gehäuse umfasst.

28. System nach Anspruch 27, wobei jeder Blitzkopf des Weiteren einen Lichtreflektor umfasst und der Lichtreflektor Teil der Gaskammer ist.

29. System nach Anspruch 28,wobei jede Blitzröhre Elektroden-Zuleitungen aufweist und die Elektroden-Zuleitungen Kühlrippen enthalten, die sich von ihnen aus erstrecken.

30. System nach Anspruch 22, wobei jede der Komponenten des Systems so eingerichtet ist, dass sie zum mobilen Zugang zu dem Bauwerk durch das System verstaut und transportiert werden kann.

31. System nach Anspruch 1, wobei die Blitzkopf-Steuereinheit mehrere Blitzkopf-Schnittstellenschaltungen und mehrere Zeitsteuer-und-Auslöse-Platten umfasst jede Zeitsteuer-und-Auslöse-Platte auf einer Hauptplatine und einer oder mehreren Tochterkarte/n angeordnet ist die Hauptplatte an einem mobilen Gehäuse, das zum Verstauen und Transportieren des Systems eingerichtet ist, in einem ersten Bereich des Gehäuses angebracht ist, und jede Tochterkarte elektrisch und mechanisch mit der Hauptplatine verbunden ist.

32. System nach Anspruch 31, wobei die Blitzkopf-Schnittstellenschaltung eine Batterie von Kondensatoren umfasst, die an einem Kondensatorgestell montiert sind, das an dem mobilen Gehäuse in einem dritten Bereich des mobilen Gehäuses angebracht ist.

33. System nach Anspruch 32, wobei die Blitzkopf-Schnittstellenschaltung des Weiteren eine Batterie von Transformatoren umfasst, die an einem Transformatorgestell montiert sind, das an dem mobilen Gehäuse in einem vierten Bereich des mobilen Gehäuses angebracht ist.

34. System nach Anspruch 33, wobei die elektrische Verbindung zwischen den Blitzköpfen und der Blitzkopf-Steuereinheit durch ein Blitzkopf-Abschlussgestell gebildet wird, das an dem mobilen Gehäuse in einem fünften Bereich des mobilen Gehäuses angebracht ist.

35. System nach Anspruch 31, wobei jede Blitzkopf-Steuereinheit funktionell mit drei Blitzköpfen verbunden ist, die an einer Blitzkopf-Montageplatte in einer Dreiergruppen-Konstruktion montiert sind, und die elektrische Verbindung zwischen jeder Blitzkopf-Steuereinheit und jeder Blitzkopf-Dreiergruppe ein einzelnes Kabel umfasst.

36. Verfahren zum Leiten der Bewegung von Fischen in einem Gewässer in der Nähe eines Bauwerks, wobei es die folgenden Schritte umfasst:
a. Anordnen einer Vielzahl von Blitzköpfen in einer Struktur unterhalb der Oberfläche des Gewässers in der Nähe des Bauwerks;
b. elektrisches Verbinden der Blitzköpfe mit einer Systemsteuereinheit, und
c. Veranlassen, dass die Systemsteuereinheit eine Reihe von Blitzkopf-Steuersignalen für die Blitzköpfe erzeugt, so dass die Blitzköpfe eine Reihe von Blitzen, die für die Fische sichtbar sind, in einer vorgegebenen Folge produzieren.

37. Verfahren nach Anspruch 36, das des Weiteren den Schritt des Transportierens der Blitzköpfe und der Systemsteuereinheit zu dem Bauwerk in einem mobilen Anhänger umfasst.

38. Verfahren nach Anspruch 36, das des Weiteren den Schritt des Versehens jedes Blitzkopfes mit einer Innenatmosphäre umfasst, die im Wesentlichen Stickstoff umfasst.

39. Verfahren nach Anspruch 36, das des Weiteren den Schritt des Anordnens und Betreibens der Blitzköpfe in einer Dreiergruppen-Konstruktion von drei Blitzköpfen umfasst.

## Revendications

1. Système destiné à diriger le déplacement des poissons dans l'eau au voisinage d'une structure fabriquée par les hommes, le système comprenant :
a. une pluralité de têtes (13) de production d'éclairs, chaque tête de production d'éclairs comportant un moyen tube à éclairs servant à produire une ou plusieurs impulsions lumineuses visibles des poissons se trouvant à proximité de la tête de production d'éclairs, et un logement étanche à l'eau (50) enfermant le moyen tube à éclairs ;
b. une unité (5) de commande du système, fonctionnellement connectée à chaque tête de production d'éclairs et comportant un moyen de traitement destiné à faire en sorte que le moyen tube à éclairs produise des impulsions lumineuses suivant une succession prédéterminée d'éclairs ; et
c. l'unité de commande du système comprenant en outre un moyen interface d'instructions destiné à accepter des instructions du système de la part d'un utilisateur du système, les instructions du système comportant des instructions relatives à la succession des éclairs, le moyen de traitement comportant un moyen de traitement d'instructions de succession permettant de faire varier la succession d'éclairs et de l'exécuter en réponse à des instructions de succession d'éclairs.

2. Système selon la revendication 1, où l'unité de commande du système comprend en outre un moyen de contrôle du système servant à fournir, à l'utilisateur, des signaux relatifs à l'état du système, les signaux d'état du système comportant des signaux d'état de succession d'éclairs correspondant à la succession d'éclairs qui est exécutée par le moyen de traitement.

3. Système selon la revendication 2, où le moyen de traitement comprend un ordinateur personnel, le moyen interface d'instructions comprend un clavier fonctionnellement connecté à l'ordinateur personnel, et le moyen de contrôle du système comprend un dispositif d'affichage vidéo fonctionnellement connecté à l'ordinateur personnel.

4. Système selon la revendication 3, où l'unité de commande du système comprend en outre un moyen récepteur de signaux de têtes de production d'éclairs, servant à recevoir des signaux d'état de tête de production d'éclairs de la part de chaque tête de production d'éclairs, les signaux d'état de tête de production d'éclairs comportant un signal qui indique si une tête de production d'éclairs est ou non en train de produire des éclairs, et où le moyen de contrôle du système vidéo comporte un moyen servant à afficher les signaux d'état de tête de production d'éclairs.

5. Système selon la revendication 4, où les instructions du système introduites par l'utilisateur comportent des instructions d'intensité d'éclairs, l'unité de commande du système comprend en outre un moyen de commande d'intensité d'éclairs servant à ajuster l'intensité de l'impulsion lumineuse produite par chaque moyen tube à éclairs en réponse aux instructions d'intensité d'éclair, et où les signaux d'état du système affichés sur le dispositif d'affichage vidéo comportent des signaux indicatifs de l'intensité d'éclair de chaque moyen tube à éclairs.

6. Système selon la revendication 5, où le moyen récepteur de signaux de tête de production d'éclairs comprend un transformateur de détection de courant.

7. Système selon la revendication 5, où les instructions du système introduites par l'utilisateur comprennent des instructions de couleur d'éclair, l'unité de commande du système comprend en outre un moyen de commande de couleur d'éclair afin d'ajuster la couleur des impulsions lumineuses produites par chaque moyen tube à éclairs en réponse aux instructions de couleur d'éclair, et où les signaux d'état du système affichés sur le dispositif d'affichage vidéo comportent des signaux indicatifs de la couleur d'éclair de chaque moyen tube à éclairs.

8. Système selon la revendication 5, comprenant en outre un moyen de commande de la température des têtes de production d'éclairs servant à contrôler et commander la température interne de chaque tête de production d'éclair.

9. Système selon la revendication 8, où le moyen de commande d'intensité d'éclairs répond au moyen de commande de la température des têtes de production d'éclair.

10. Système selon la revendication 9, où la succession d'éclairs comporte un débit d'éclairs pour chaque moyen tube à éclairs et où l'ordinateur personnel comporte un moyen permettant d'ajuster le rythme des éclairs pour une ou plusieurs têtes de production d'éclairs en réponse au moyen de commande de la température des têtes de production d'éclairs.

11. Système selon la revendication 9, où le moyen de commande de la température des têtes de production d'éclairs comprend un ventilateur placé à l'intérieur de chaque tête de production d'éclairs.

12. Système selon la revendication 9, où l'unité de commande du système comprend en outre au moins une unité de commande de tête de production d'éclairs fonctionnellement connectée à chaque tête de production d'éclairs et au moyen de traitement.

13. Système selon la revendication 1, où le logement étanche à l'eau comprend en outre un moyen de refroidissement monté à l'intérieur du logement et servant à refroidir la tête de production d'éclairs.

14. Système selon la revendication 13, où le moyen de refroidissement de tête de production d'éclairs comprend un ventilateur et chaque tête de production d'éclairs comprend en outre un moyen d'insufflation d'air servant à diriger l'air autour du tube à éclairs.

15. Système selon la revendication 14, où chaque tête de production d'éclairs comprend en outre un passage d'air se trouvant entre la paroi latérale du moyen d'insufflation d'air et le logement.

16. Système selon la revendication 15, où chaque tête de production d'éclairs comprend en outre un réflecteur de lumière, le réflecteur de lumière faisant partie du moyen d'insufflation d'air.

17. Système selon la revendication 16, où chaque tube à éclairs possède des conducteurs d'électrodes, et les conducteurs d'électrodes comportent des ailettes de refroidissement qui s'en prolongent.

18. Système selon la revendication 16, où le réflecteur de lumière présente une forme parabolique qui est formée autour du tube à éclairs et se prolonge vers le haut depuis ce dernier.

19. Système selon la revendication 1, comprenant en outre un moyen store d'air servant à produire des bulles d'air à proximité d'une ou plusieurs des têtes de production d'éclairs.

20. Système selon la revendication 19, comprenant en outre un moyen jet d'eau immergé servant à retirer l'écume d'une ou plusieurs lentilles de têtes de production d'éclairs en dirigeant un courant d'eau sur la lentille.

21. Système selon la revendication 20, comprenant en outre un moyen sonde de température placé à proximité d'une ou plusieurs têtes de production d'éclairs afin de fournir au moyen de commande un signal qui est une réponse à la température de l'eau.

22. Système selon la revendication 1, où l'unité de commande du système est installé dans une remorque afin de permettre le transport mobile du système.

23. Système selon la revendication 1, où l'unité de commande du système comprend en outre au moins un circuit d'interface de tête de production d'éclairs fonctionnellement connecté à chaque tête de production d'éclairs et au moyen de traitement.

24. Système selon la revendication 23, où les têtes de production d'éclairs sont montés suivant une configuration tri-pack sur une plaque de montage de têtes de production d'éclairs.

25. Système selon la revendication 1, où les têtes de production d'éclairs sont remplis d'azote gazeux.

26. Système selon la revendication 25, où le moyen de refroidissement de tête de production d'éclairs comprend un ventilateur et chaque tête de production d'éclairs comprend en outre un moyen d'insufflation d'air servant à diriger l'azote gazeux autour du tube de production d'éclairs.

27. Système selon la revendication 26, où chaque tête de production d'éclairs comprend en outre un passage de gaz ménagé entre la paroi latérale du moyen d'insufflation de gaz et le logement de tête de production d'éclairs.

28. Système selon la revendication 27, où chaque tête de production d'éclairs comprend en outre un réflecteur de lumière, le réflecteur de lumière faisant partie du moyen d'insufflation de gaz.

29. Système selon la revendication 28, où chaque tube de production d'éclairs possède des conducteurs d'électrodes, et les conducteurs d'électrodes comportent des ailettes de refroidissement qui s'en prolongent.

30. Système selon la revendication 22, où chacun des composants du système est conçu pour être stocké et transporté dans la remorque afin de permettre l'accès mobile du système à la structure.

31. Système selon la revendication 1, où l'unité de commande de têtes de production d'éclairs comprend de multiples circuits d'interface de têtes de production d'éclairs et de multiples cartes de synchronisation et de déclenchement, chaque carte de synchronisation et de déclenchement étant placée sur une carte mère et une ou plusieurs cartes filles, la carte mère est fixée à un logement mobile, conçu pour stocker et transporter le système, dans une première aire du logement, chaque carte fille étant connectée électriquement et mécanique par la carte mère.

32. Système selon la revendication 31, où le circuit d'interface de tête de production d'éclairs comprend une batterie de condensateurs qui sont montés sur un râtelier de condensateurs fixé au logement mobile dans une troisième aire du logement mobile.

33. Système selon la revendication 32, où le circuit d'interface de tête de production d'éclairs comprend en outre une batterie de transformateurs qui sont montés sur un râtelier de transformateurs fixé au logement mobile dans une quatrième aire du logement mobile.

34. Système selon la revendication 33, où la connexion électrique entre les têtes de production d'éclairs et l'unité de commande de tête de production d'éclairs est produite par un râtelier de terminaisons de têtes de production d'éclairs qui est fixé au logement mobile dans une cinquième aire du logement mobile.

35. Système selon la revendication 31, où chaque unité de commande de têtes de production d'éclairs est fonctionnellement connectée à trois têtes de production d'éclairs montées sur une plaque de montage de têtes de production d'éclairs suivant une configuration tri-pack, et la connexion électrique entre chaque unité de commande de tête de production d'éclairs et chaque tri-pack de têtes de production d'éclairs comprend un unique câble.

36. Procédé visant à diriger le déplacement de poissons dans une étendue d'eau au voisinage d'une structure, comprenant les opérations suivantes :
a. placer une pluralité de têtes de production d'éclairs suivant un certain motif au-dessous de la surface de l'étendue d'eau au voisinage de la structure ;
b. connecter électriquement les têtes de production d'éclairs à une unité de commande du système ; et
c. amener l'unité de commande du système à produire une série de signaux de commande de têtes de production d'éclairs à destination des têtes de production d'éclairs, de sorte que les têtes de production d'éclairs produisent une série d'éclairs visibles pour les poissons suivant une succession prédéterminée.

37. Production selon la revendication 36, comprenant en outre l'opération qui consiste à transporter les têtes de production d'éclairs et l'unité de commande du système jusqu'à la structure dans une remorque mobile.

38. Procédé selon la revendication 36, comprenant en outre l'opération qui consiste à doter chaque tête de production d'éclairs d'une atmosphère interne comprenant de l'azote pour l'essentiel.

39. Procédé selon la revendication 36, comprenant en outre l'opération qui consiste à disposer et faire fonctionner les têtes de production d'éclairs suivant une configuration tri-pack de trois têtes de production d'éclairs.
